(19) Europäisches Patentamt
European Patent Office
Office européen des brevets

(11) EP 3 502 012 A1

(12) EUROPEAN PATENT APPLICATION

(43) Date of publication:
26.06.2019 Bulletin 2019/26

(51) Int Cl.:
B65G 5/00 (2006.01)     E21B 41/00 (2006.01)

(21) Application number: 17460078.3

(22) Date of filing: 21.12.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(71) Applicant: Transition Technologies S.A.
01-030 Warszawa (PL)

(72) Inventors:
• Warchol, Michal
96-300 Zyrardów (PL)
• Swirski, Konrad
05-520 Bielawa (PL)
• Dyrda, Miroslaw
02-654 Warszawa (PL)

(54) METHOD FOR OPTIMISING THE PROCESS OF GAS INJECTION TO AND WITHDRAWAL FROM AN UNDERGROUND GAS STORAGE FACILITY

(57) The invention concerns a method for optimising the process of gas injection to and withdrawal from an underground gas storage facility connected to at least one gas pipeline, controlled by means of a control system, consisting of above-ground equipment for gas processing prior to being transferred to the storage facility, underground equipment and above-ground equipment for gas processing after being withdrawn from the storage facility, where input parameters of the gas storage facility equipment are being changed, and by means of the control system signals that control the change of gas storage facility equipment parameters are transmitted, characterised in that:
- at the start of the process of gas injection to and withdrawal from the gas storage facility, in the gas storage facility operation optimisation system (16) located on the optimisation system server (15), the expected/forecast input data of the gas storage facility operation are being set in an assumed prediction horizon, such as external temperature, gas pressure in at least one gas pipeline (12, 12a, 12b) separately for each connection to the gas pipeline (12, 12a, 12b), for gas injection to the storage facility gas temperature and gas composition in at least one gas pipeline (12, 12a, 12b), separately for each connection to the gas pipeline (12, 12a, 12b), prices of electrical energy and fuel gas, the direction of gas flow and the gas flow volume at each connection to at least one gas pipeline (12, 12a, 12b), availability of at least one cavern (7a, 7b, 7c, 7d, 7e) and at least one compressor (4a, 4b, 4c), measurement data on gas storage facility state are acquired from the control system, such as current gas flows, gas composition, and the temperature of gas stored in the storage facility, based on which the gas storage facility underground part model state is being updated for the period from the last update up to present time, data updates are saved in the database (20) of the gas storage facility operation optimisation system (16), and by means of a calculation module (18) and the underground part simulation module (19):
- at least one used cavern is selected (7a,7b,7c,7d,7e) and gas flow $V_h^{sum}$ is split between the caverns in use (7a,7b,7c,7d,7e);
- the connections of each cavern in use (7a,7b,7c,7d,7e) are allocated to one of the transfer manifolds (6, 6a,6b);
- the connections of each compressor (4a,4b,4c) are allocated to gas pipelines (12,12a,12b) and manifolds (6,6a,6b);
- optimal operating parameters for each compressor (4a, 4b, 4c), are determined so that for a single battery of compressors (4a, 4b, 4c) the operation cost of each of the compressors (4a, 4b, 4c) is determined according to gas flow for each operating mode the compressor (4a, 4b, 4c) can operate under specific conditions, and for a cascade of two batteries of compressors (4a, 4b, 4c) an optimal pressure between batteries of compressors (4a, 4b, 4c) is selected so that for any evaluated pressure the operation cost of each of the compressors (4a, 4b, 4c) is determined according to gas flow for each of the operating modes the compressor (4a, 4b, 4c) can operate under specific conditions, then gas flow is optimally split between compressors (4a, 4b, 4c) from the first battery of compressors (4a, 4b, 4c) for each possible set of operating modes of compressors (4a, 4b, 4c) from the first battery, gas flow is optimally split between the compres-

EP 3 502 012 A1

sors (4a, 4b, 4c) from the second battery of compressors (4a, 4b, 4c) for each possible set of operating modes of compressors (4a, 4b, 4c) from the second battery, optimal operating modes of the compressors (4a, 4b, 4c) are selected for a specific time horizon;

- as a result of calculations from the previous steps value vectors of all output variables are determined in the calculation module (18) of the gas storage facility operation optimisation system (16), which describe the optimal parameters of the gas storage facility equipment in terms of optimisation and the module transmits data to the control system (13) via an interface for communication with the control system (21);

- based on these optimal results received from the gas storage facility operation optimisation system (16) and no longer than the calculation horizon.

saved in the control system (13), optimal signals that control the change of equipment operating parameters, selected according to the structure of the storage facility system from the following: states of cut-off valves (5a, 5b, 5c, 5d, 5e, 5f, 5g, 5h, 5i, 5j, 5k, 51, 5m, 5n, 5o, 5p, 5q, 5r, 5s, 5t, 5u, 5v, 5w , 5x, 5y, 5z), which select the used caverns (7a, 7b, 7c, 7d, 7e) and compressors (4a, 4b, 4c), flow setpoints for FCV valves (8a, 8b, 8c, 8d, 8e, 8f , 8g), setpoints of flow through compressors in use (4a, 4b, 4c), operating modes of compressors in use (4a, 4b, 4c), pressures between the levels of compressors (4a, 4b, 4c) for compressors (4a, 4b, 4c) connected in cascade, are transmitted via the control system (13);

- the above operations shall be repeated with a period

Fig. 2

2

## Description

The present invention concerns a method for optimising the process of natural gas injection to or withdrawal from an underground gas storage facility, which is applied in the process of natural gas injection to and withdrawal from an underground gas storage facility built in salt caverns, connected to at least one gas pipeline, consisting of above-ground equipment for gas processing prior to being transferred to the storage facility, underground part and above-ground equipment for gas processing after withdrawal from the storage facility, controlled by means of the control system.

Factors such as seasonality of natural gas consumption by the recipients, time required to explore gas deposits and gas transport process, current geopolitical situation can be the cause of significant gas deficits during periods of high consumption, as well as affect high variability of gas prices throughout the year. These issues affect both individual recipients, as well as whole economic sectors that use fuel gas. Gas storage process shall address these issues. Underground gas storage facilities are underground cavities with high storage capacity, where natural gas can be injected for future usage. The usage of underground storage facilities the effect of demand fluctuations is mitigated and energetic safety is ensured by maintaining strategic reserves in case of fuel gas supply interruptions. Gas storage also allows for gas extraction process optimisation as well as optimisation of the size and capacity of the transmission network.

In recent years, many solutions have been developed, dedicated to the operators of underground gas storage facilities, supporting both commercial processes, such as contract management, processing of current nominations for natural gas injection to and withdrawal from the storage facility, settlement of completed services, reporting, etc., as well as technical processes. Application description no. WO2012156179 indicates an automated method of management of many devices producing flow for generating a total flow of medium or fuel to and/or from the storage facility, natural gas tank in particular, which involves the following steps: entering setpoints for devices producing flow in the input device, transferring these setpoints to the management unit, and transmitting the desired values from the management unit to devices producing flow. Entering the desired values applies to at least one of the following parameters: flow through flow devices, priority of devices producing flow.

Three basic types of underground gas storage facilities can be distinguished:

- cavern storage facilities - in a specially prepared salt caverns, formed by leaching part of salt from salina,
- storage facilities in depleted gas fields or oil fields,
- storage facilities in flooded structures.

Each type of storage facility differs significantly in terms of implementation costs, storage capacity, injecting and withdrawing capacity or operation method.

Cavern storage facilities have the ability to achieve high flows in relation to their active capacities. Cavern storage facility active capacity is, however, significantly lower in comparison to for example storage facilities located in depleted gas or oil fields. Vital feature of cavern storage facilities is the ability to run many injection and withdrawal cycles per year. For storage facilities in depleted fields, usually one injection cycle and one withdrawal cycle is run per year. Due to these features, cavern storage facilities are particularly useful in rapid growth in demand for natural gas and allow for short-term demand fluctuations control. Thus, cavern storage facilities operation optimisation may contribute to significant economic benefits due to efficient use of flexibility offered by this type of storage facilities.

The applicant has developed so far, two solutions in the area of optimisation of an underground gas storage facility operation - one to optimise the compressor stations operation and the other to support the implementation of a specific strategy to use the caverns and above-ground infrastructure of the storage facility. The solutions have been described in: Wojdan, K., Ruszczycki, B., Swirski, K., Warchol M. (2017), The Method for Optimisation of Gas Compressors Performance in Gas Storage Systems, International Journal of Oil, Gas and Coal Technology. 1. 1. 10.1504/IJOGCT.2017.10006328, and in: Wojdan, K., Ruszczycki, B., Michalk, D. and Swirski, K. (2014), Method for simulation and optimization of underground gas storage performance', Oil Gas Sci. Technol. - Rev. IFP Energies nouvelles, December, Vol. 69, No. 7. Existing solutions do not provide, however, performance optimisation of the entire underground gas storage facility, taking into account above-ground equipment and the state of underground structures of the storage facility. The invention's objective is to provide a solution that will allow for an efficient management of an underground cavern storage facility including familiarity with the processes occurring in the storage facility, which will at the same time ensure the process is safe and provides the best economic result.

The above inconveniences may be removed by applying the solutions according to the invention.

The method for optimising the process of gas injection to and withdrawal from an underground gas storage facility connected to at least one gas pipeline, controlled by means of a control system, consisting of above-ground equipment for gas processing prior to being transferred to the storage facility, underground equipment and above-ground equipment for gas processing after withdrawal from the storage facility, where input parameters of the gas storage facility equipment are being changed, and by means of the control system signals that control the change of gas storage facility equipment parameters are transmitted, according to the invention involves:

- at the start of the process of gas injection to and withdrawal from the gas storage facility, in the gas storage facility operation optimisation system located on the optimisation system server, the expected/forecast input data of the gas storage facility operation are being set in an assumed prediction horizon, such as external temperature, gas pressure in at least one gas pipeline separately for each connection to the gas pipeline, for gas injection to the storage facility gas temperature and gas composition in at least one gas pipeline separately for each connection to the gas pipeline, prices of electrical energy and fuel gas, the direction of gas flow and the gas flow volume at each connection to at least one gas pipeline, availability of at least one cavern and at least one compressor, measurement data on gas storage facility state are acquired from the control system, such as current gas flows, gas composition, and the temperature of gas stored in the storage facility, based on which the gas storage facility underground part model state is being updated for the period from the last update up to present time, data updates are saved in the database of the gas storage facility operation optimisation system, and by means of a calculation module and the underground part simulation module:

- at least one used cavern is selected and gas flow is split between caverns in use, where at this stage for gas injection to the storage facility, in the next hours maximum flow is allocated to a cavern or caverns sorted in order of increasing pressure, until the flow is exhausted, i.e. until total flow allocated to the cavern or caverns at any given time reaches the approved customers' nominations or until the caverns reaches maximum pressure, and, for gas withdrawal from the storage facility, sorting order shall be reverse, and minimum pressure in the cavern shall be observed instead of the maximum;

- the connections of each cavern in use shall be allocated to one of the transfer manifolds, and where gas storage facility has only one manifold, all caverns used for gas flow in the subsequent hours are connected to this manifold, and where gas storage facility has two manifolds, this stage involves verification of different connections, starting from one cavern with the lowest pressure connected to the first manifold, and other caverns connected to second manifold, in subsequent options, cavern with the lowest pressure is each time reconnected from the second manifold to the first manifold, until only one cavern is left in the second manifold, for each option flows to individual manifolds, pressure in the manifold and pressure drops on other above-ground devices connected between the compressors and manifolds are calculated, which serves for the determination of pressure on each compressor and estimation of total work to be performed by compressors for isentropic compression, connection options which will provide the lowest expected work value shall be selected;

- the connections of each compressor shall be allocated to gas pipelines and manifolds, where at this stage the use of a list of acceptable connections to gas pipelines and manifolds shall be assumed, which are grouped in the database of the gas storage facility operation optimisation system according to the priorities of a specific value, an item of group with higher priority shall be deemed more beneficial, and within one group an item providing better economic result shall be selected; when gas storage facility is connected to only one gas pipeline and is equipped with only one transfer manifold, each compressor shall be connected to this gas pipeline and this manifold;

- optimal operating parameters shall be determined for each compressor so that for a single battery of compressors the cost of operation of each compressor shall be determined according to gas flow for each operating mode the compressor may operate under given conditions, i.e. suction pressure, injection pressure, suction temperature, gas composition, where determination of the compressor operation cost includes two steps: determination of the minimum and maximum gas flow and dividing the range into a series of points, and for each point, i.e. flow, determination of the cost of fuel, then, gas flow shall be optimally split between the compressors for each possible set of operating modes of all compressors in the battery, operating modes of each compressor shall be selected for the time horizon, whereas for a cascade of two batteries of compressors, an optimal pressure between the batteries of compressors shall be selected so that for each of the assessed pressures the cost of operation of each compressor shall be determined according to gas flow for each operating mode the particular compressor may operate under given conditions, i.e. suction pressure, injection pressure, suction temperature, gas composition, where determination of the compressor operation cost includes two steps: determination of the minimum and maximum gas flow and dividing the range into a series of points, and for each point, i.e. flow, determination of the cost of fuel, then, gas flow shall be optimally split between the compressors in the first battery of compressors for each possible set of operating modes of compressors from the first battery, and gas flow shall be optimally split between the compressors in the second battery of compressors for each possible set of operating modes of compressors from the second battery, optimal operating modes of compressors in the time horizon shall be selected,

- as a result of calculations performed in the previous steps, value vectors of all output variables that describe optimal parameters of gas storage facility equipment in the optimisation horizon shall be determined in the calculation module of the operation optimisation system, i.e. states of the shut-off valves, flow setpoints for individual FCV valves, compressors flow and rotation speed setpoints, optimal compressors operating modes, and shall be transmitted to the control system via the interface for the communication with the control system,

- based on optimal results received from the gas storage facility operation optimisation system and saved in the control system, optimal signals that control the change of equipment operating parameters, which were selected depending on the structure of the storage facility installations from the following: the state of shut-off valves, selecting used caverns and compressors, flow setpoints for FCV valves, flow setpoints for the compressors used, operating modes of the compressors used, pressure values between compressor levels for compressors connected in cascade, shall be sent via the control system,
- the above operations shall be repeated with a period no longer than the calculation horizon.

The method described in the invention allows for the monitoring, simulation and optimisation of key technological processes associated with gas storage. The solution according to the invention allows for including optimisation of performance of the entire infrastructure of the storage facility in one multi-step task - caverns and above-ground installation, including compressors. The essence of the solution is to determine an optimal set of equipment and send optimal signals that control the operation of this equipment, connections between them and determine optimal gas flow through this equipment, which minimise the operating cost of the storage facility. The invention can be applied for the operation optimisation of storage facilities with various structures. It applies to, among others, the structure of the storage facility with two compressor batteries connected in series, which currently causes difficulties with the control of the gas storage facility operation. The method described in the invention allows for achieving very high accuracy and speed of calculations. Therefore, the developed solution may be used in an effective operational planning of the storage facility operation in a short time horizon, supporting the storage facility technical operators in daily tasks and allowing for achieving cost reduction in energy consumption.

The invention is presented in detail in exemplary implementations on a figure, where:

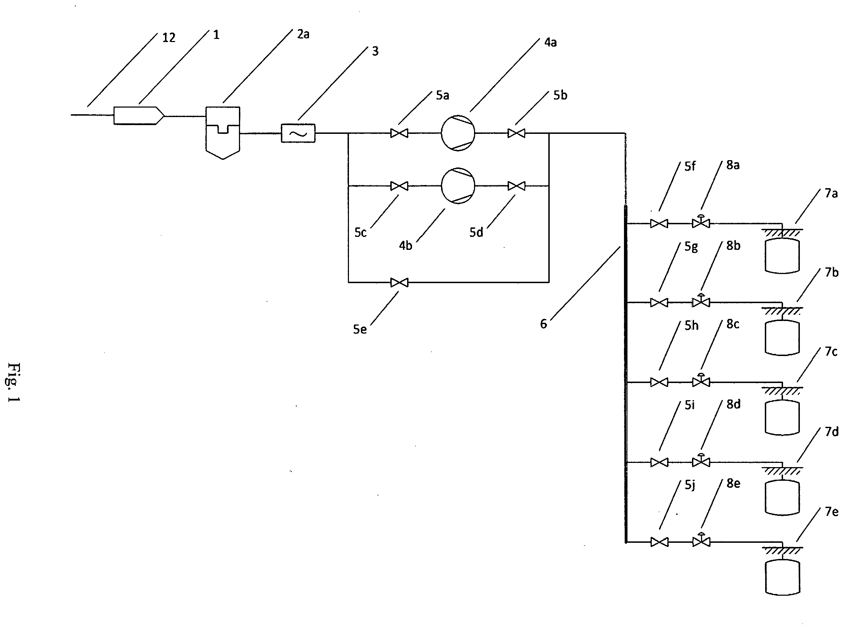

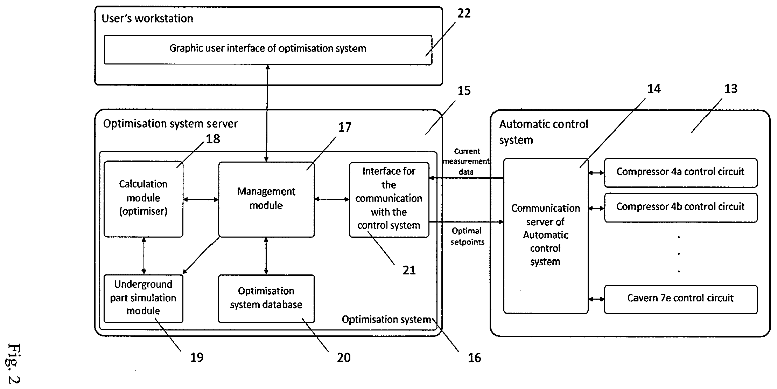

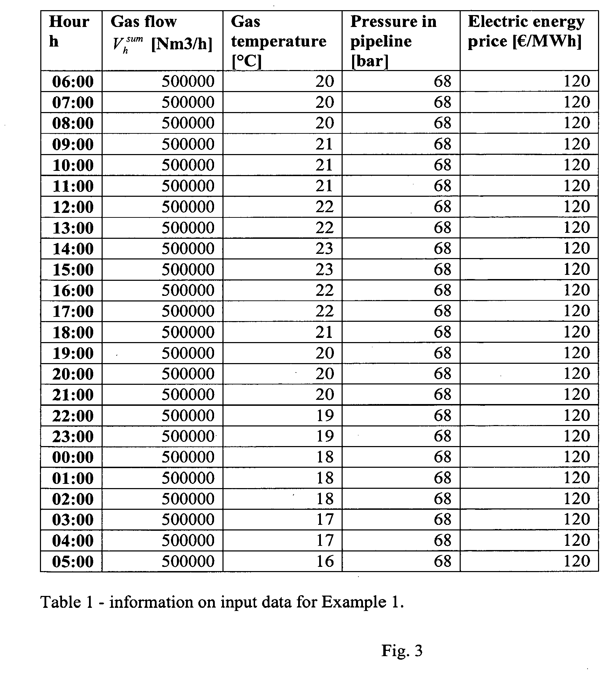

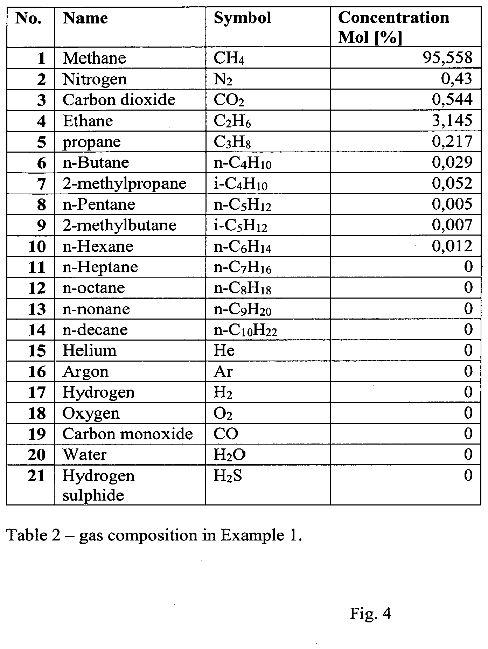

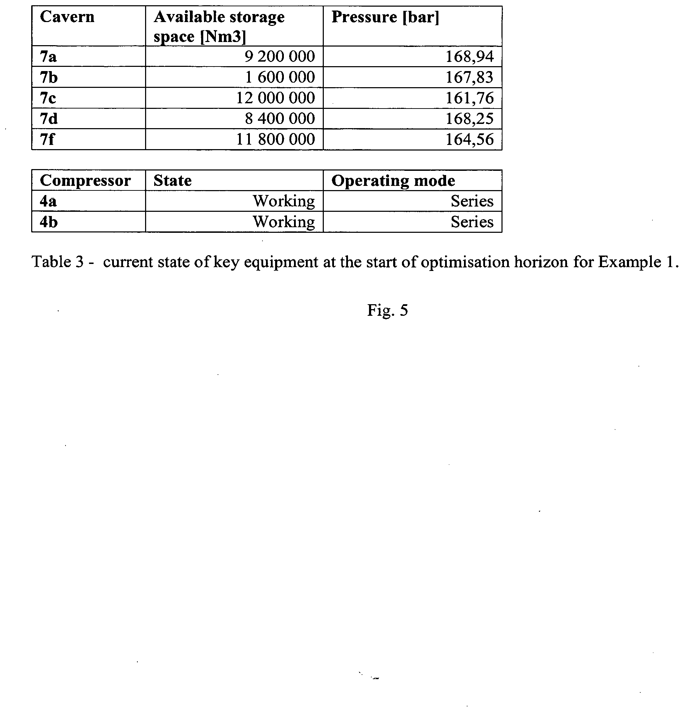

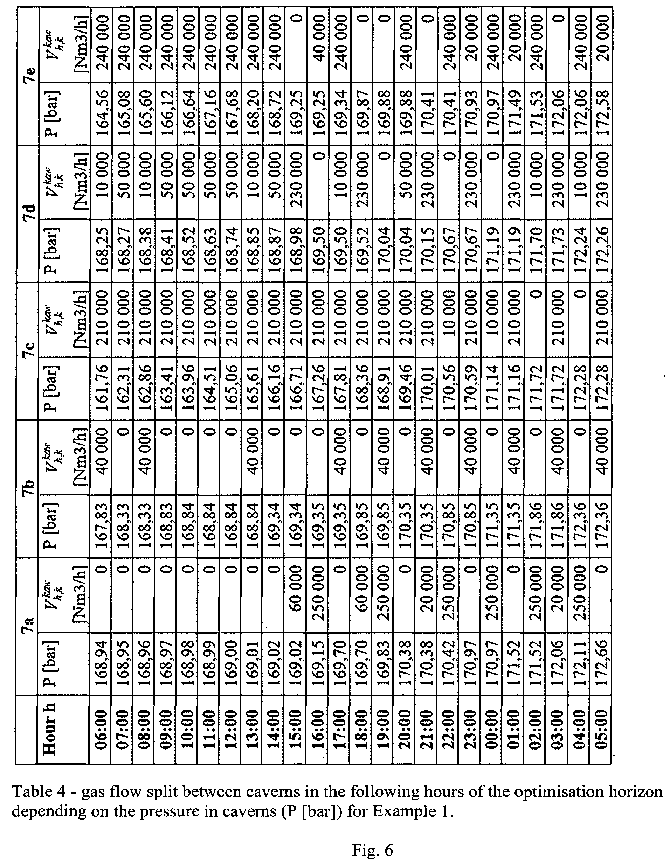

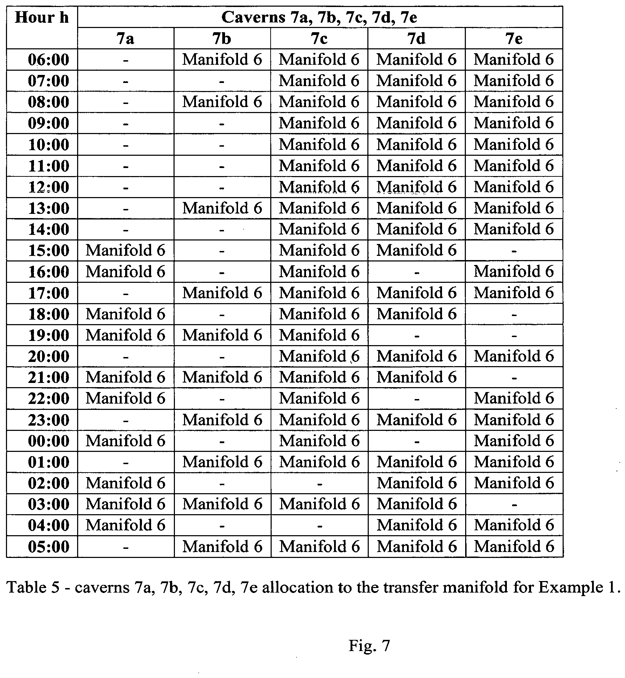

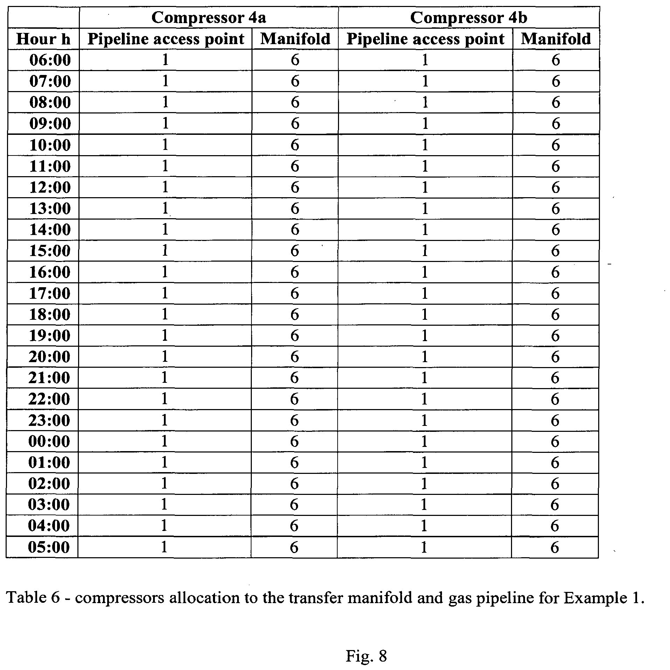

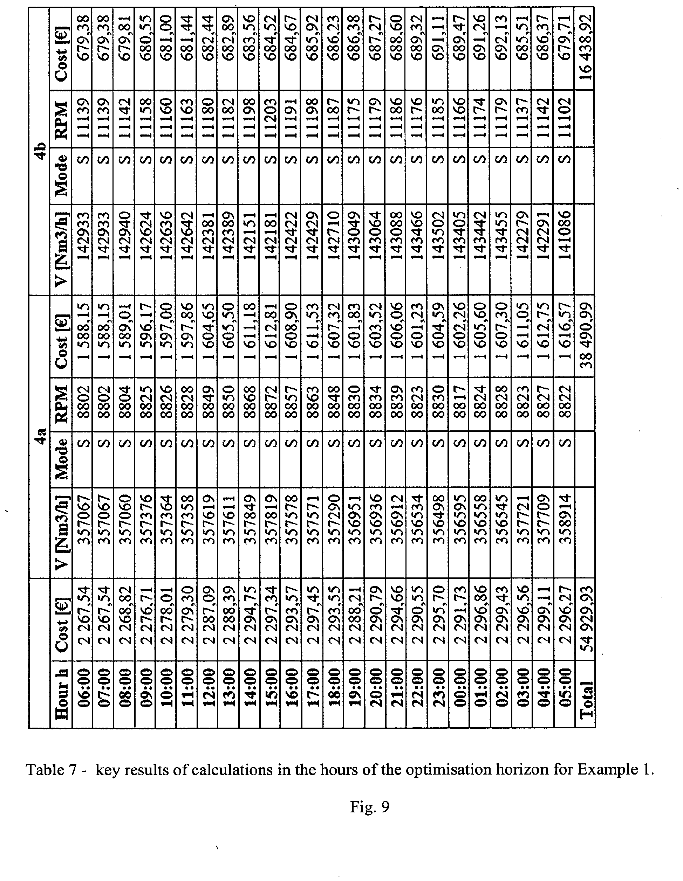

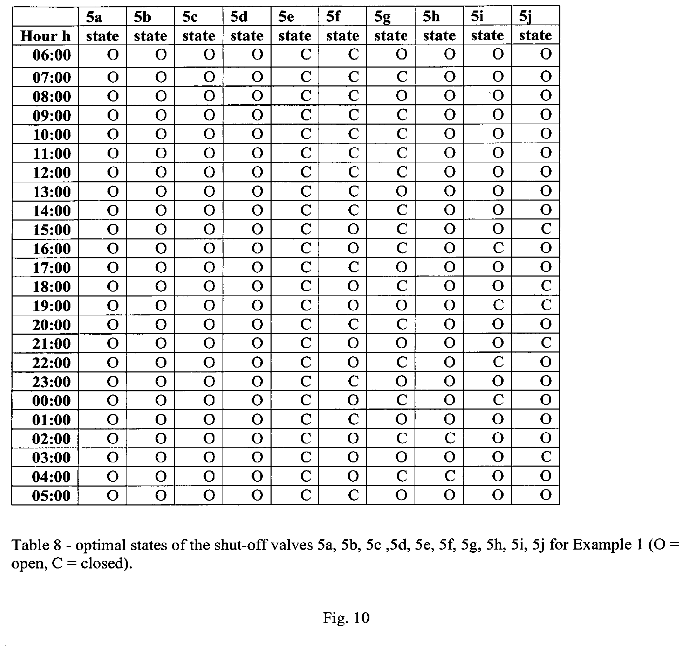

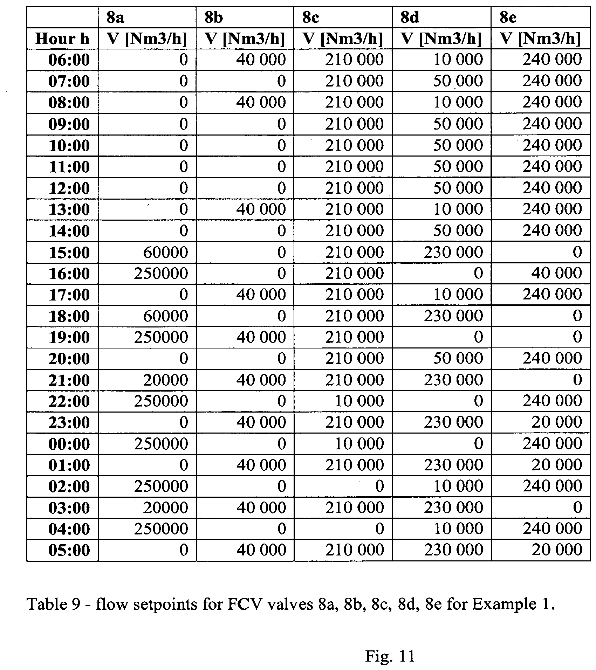

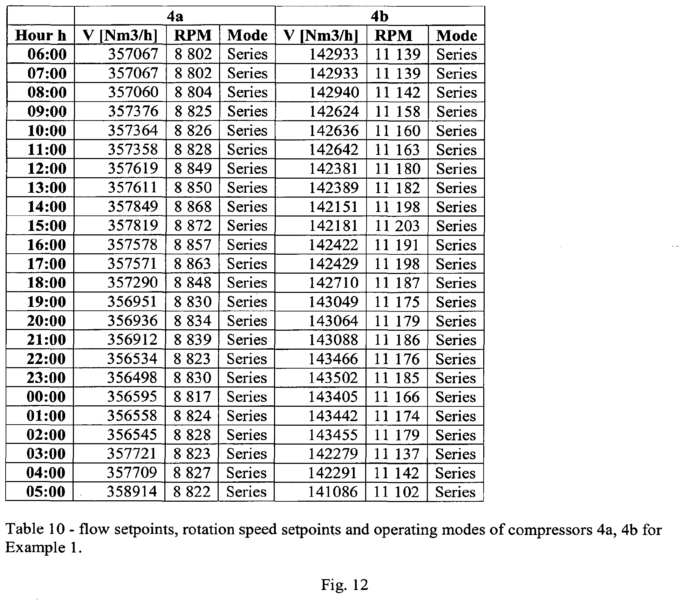

fig. 1 shows the connections diagram and the structure of the gas storage facility with five caverns, one transfer manifold, and one battery of two compressors, connected to one gas pipeline, during gas injection, fig. 2 shows the structure of the operation optimisation system and the gas storage facility control system, fig. 3 - fig. 12 show Tables 1-10 with data for the gas storage facility shown in fig. 1 for Example 1: fig. 3 shows Table 1 - information on input data, fig. 4 shows Table 2 - gas composition, fig. 5 shows Table 3 - current state of key equipment at the start of optimisation horizon, fig. 6 shows Table 4 - gas flow split between caverns in the following hours of the optimisation horizon depending on the pressure in caverns (P [bar]), fig. 7 shows Table 5 - caverns allocation to the transfer manifold, fig. 8 shows Table 6 - compressors allocation to the transfer manifold and gas pipeline, fig. 9 shows Table 7 - key results of calculations in the hours of the optimisation horizon, fig. 10 shows Table 8 - optimal states of the shut-off valves, fig. 11 shows Table 9 - flow setpoints for FCV valves, fig. 12 shows Table 10 - flow setpoints, rotation speed setpoints and operating modes of compressors,

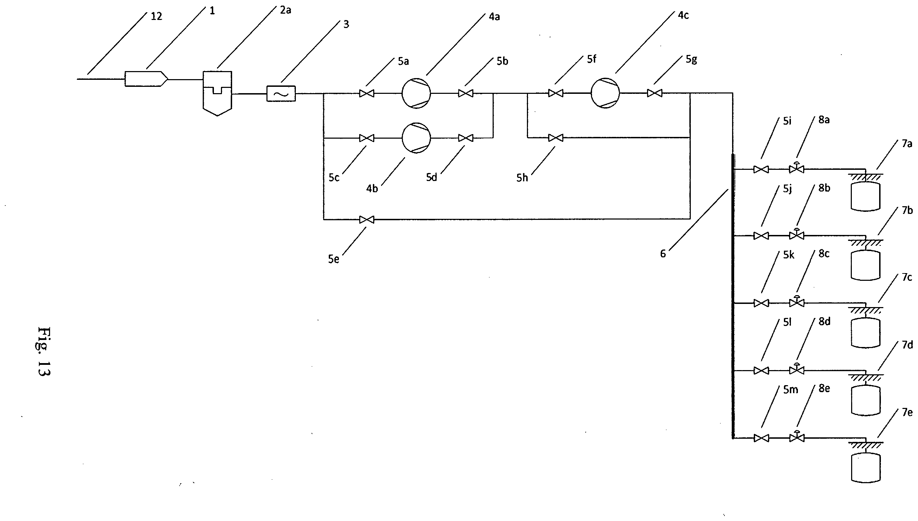

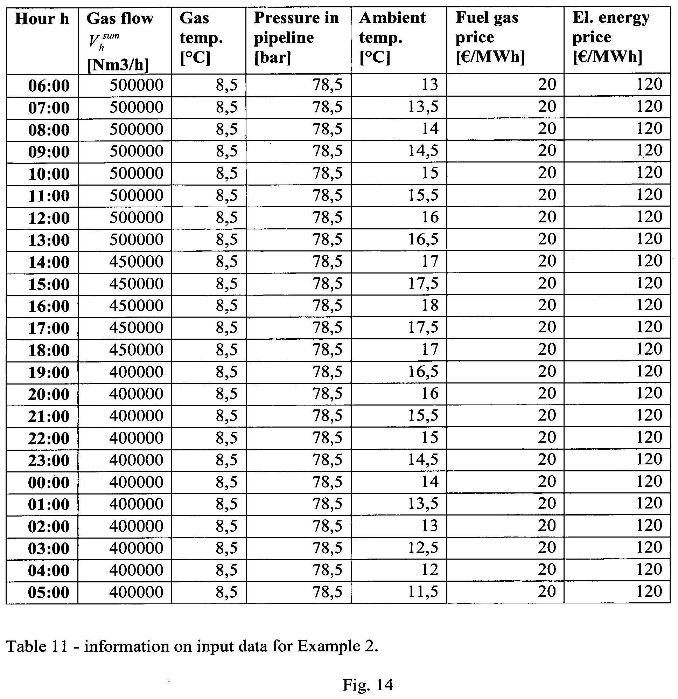

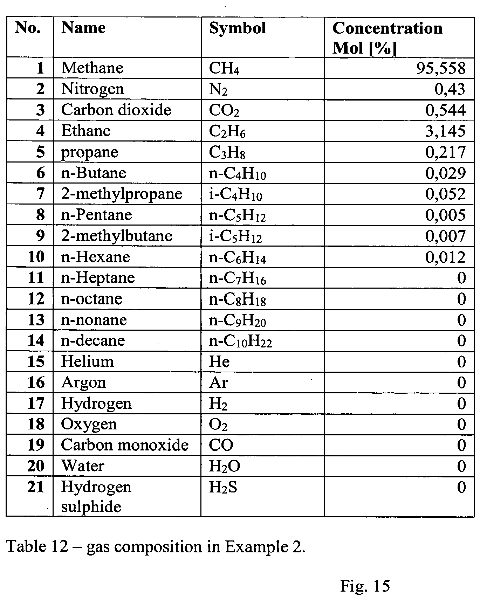

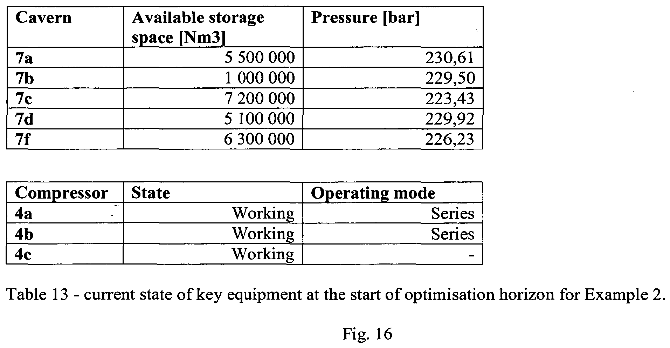

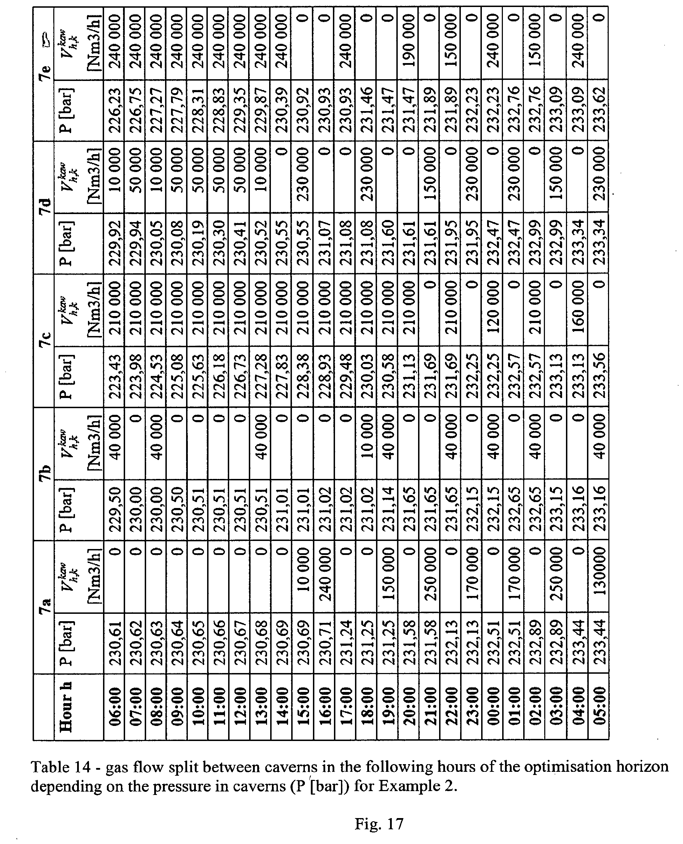

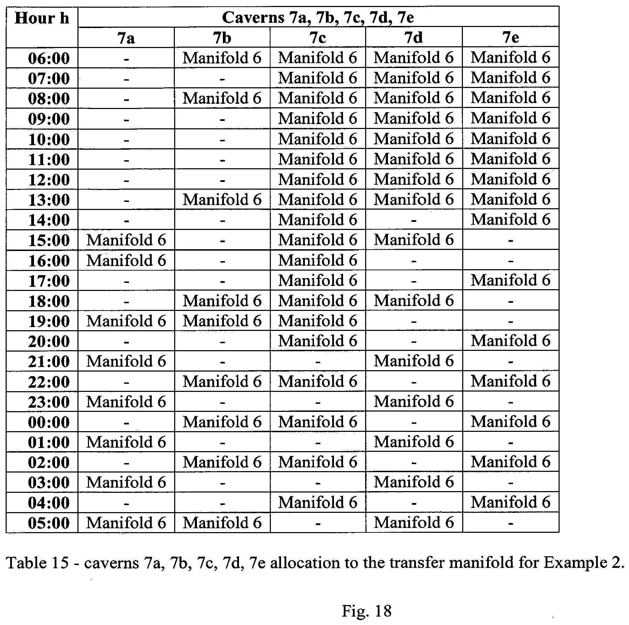

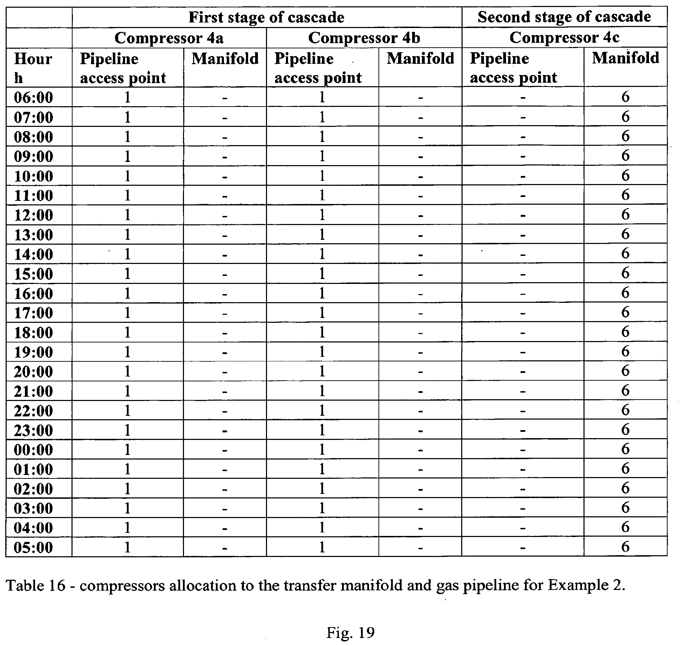

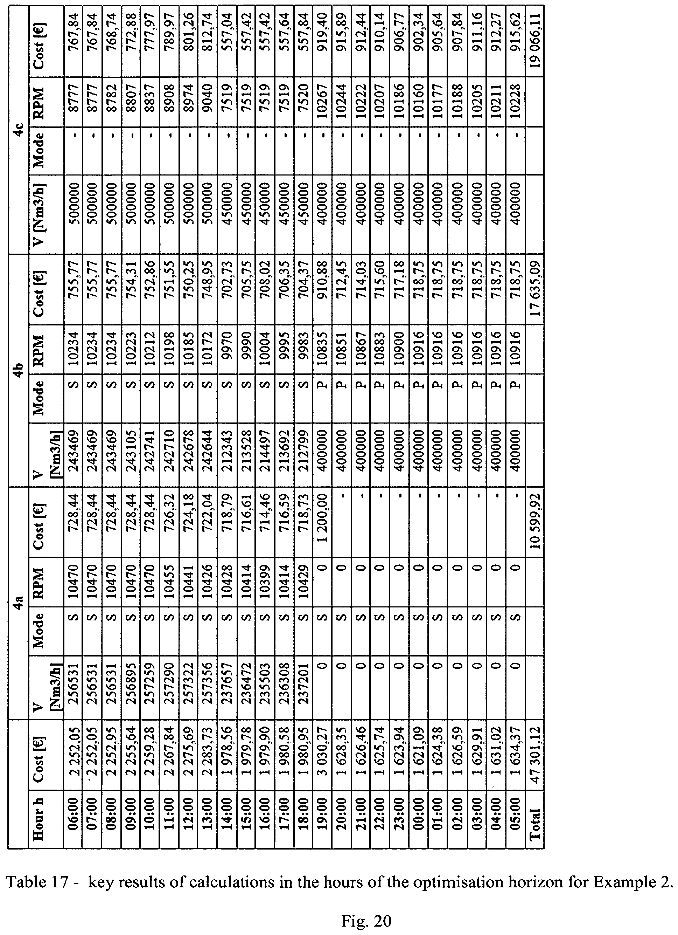

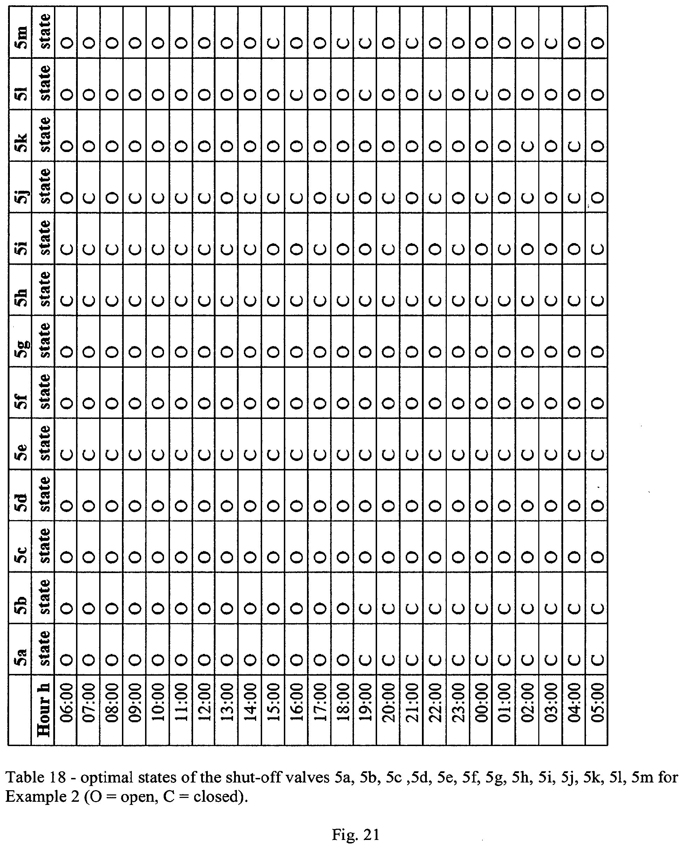

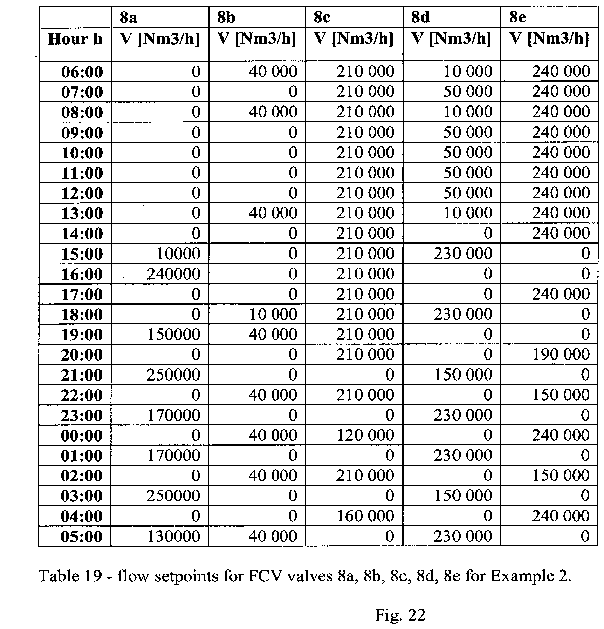

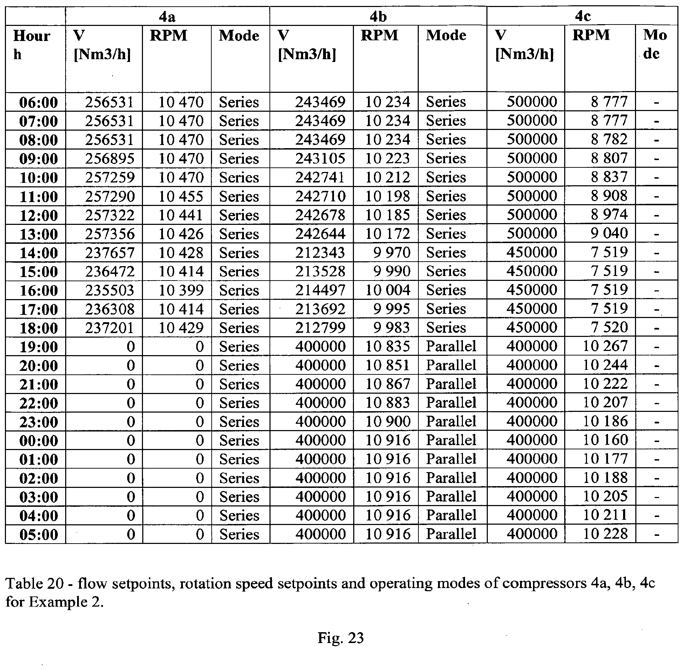

fig. 13 shows the connections diagram and the structure of the gas storage facility with five caverns, one transfer manifold, and a cascade of two batteries of compressors connected in series, connected to one gas pipeline, during gas injection, fig. 14 - fig. 23 show Tables 11-21 with data for the gas storage facility shown in fig. 13 for Example 2: fig. 14 shows Table 11 - information on input data, fig. 15 shows Table 12 - gas composition, fig. 16 shows Table 13 - current state of key equipment at the start of optimisation horizon, fig. 17 shows Table 14 - gas flow split between caverns in the following hours of the optimisation horizon depending on the pressure in caverns (P [bar]), fig. 18 shows Table 15 - caverns allocation to the transfer manifold, fig. 19 shows Table 16 - compressors allocation to the transfer manifold and gas pipeline, fig. 20 shows Table 17 - key results of calculations in the hours of the optimisation horizon, fig. 21 shows Table 18 - optimal states of the shut-off valves, fig. 22 shows Table 19 - flow setpoints for FCV valves, fig. 23 shows Table 20 - flow setpoints, rotation speed setpoints and operating modes of compressors,

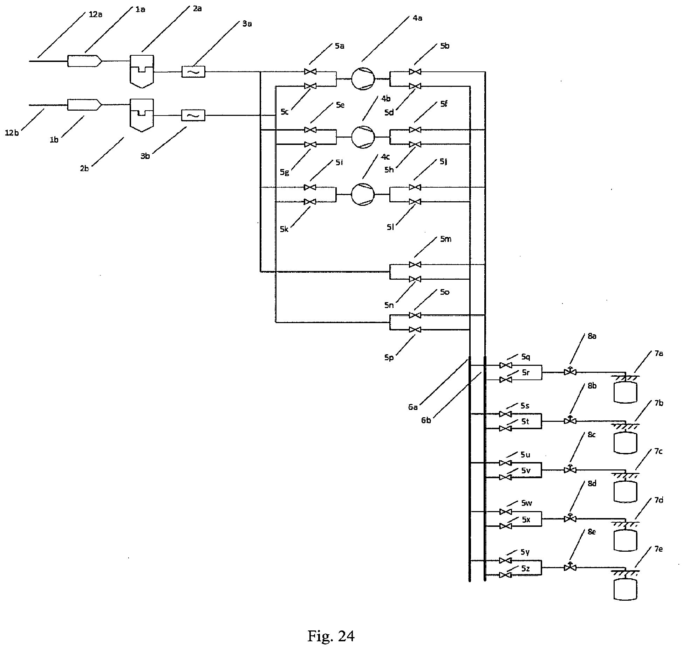

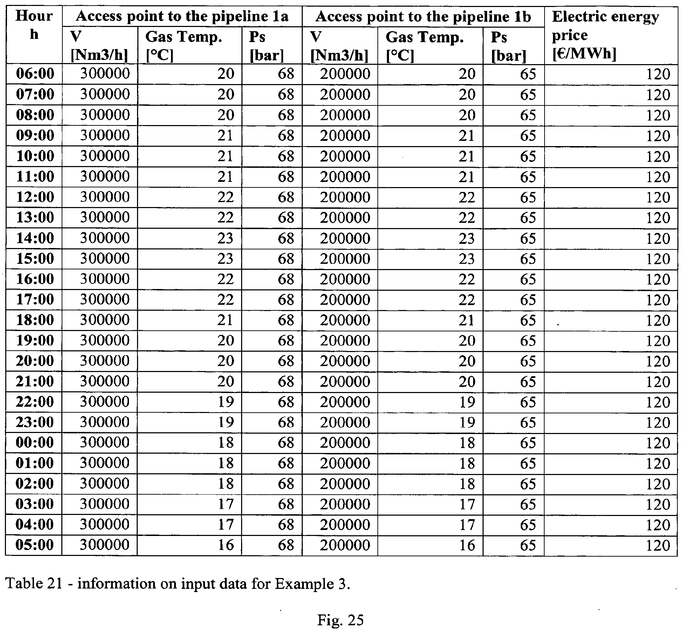

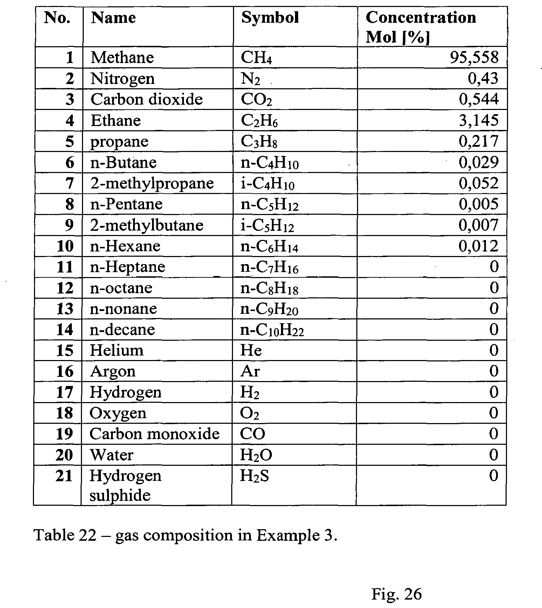

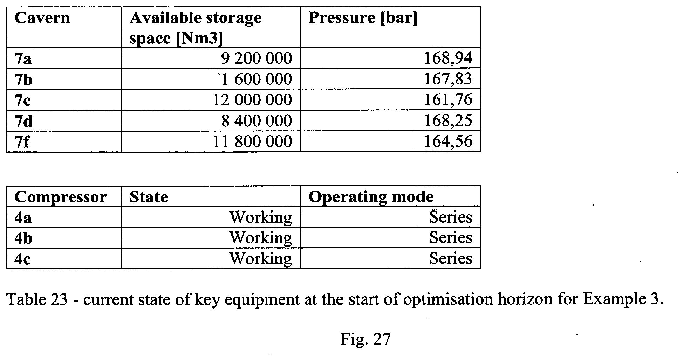

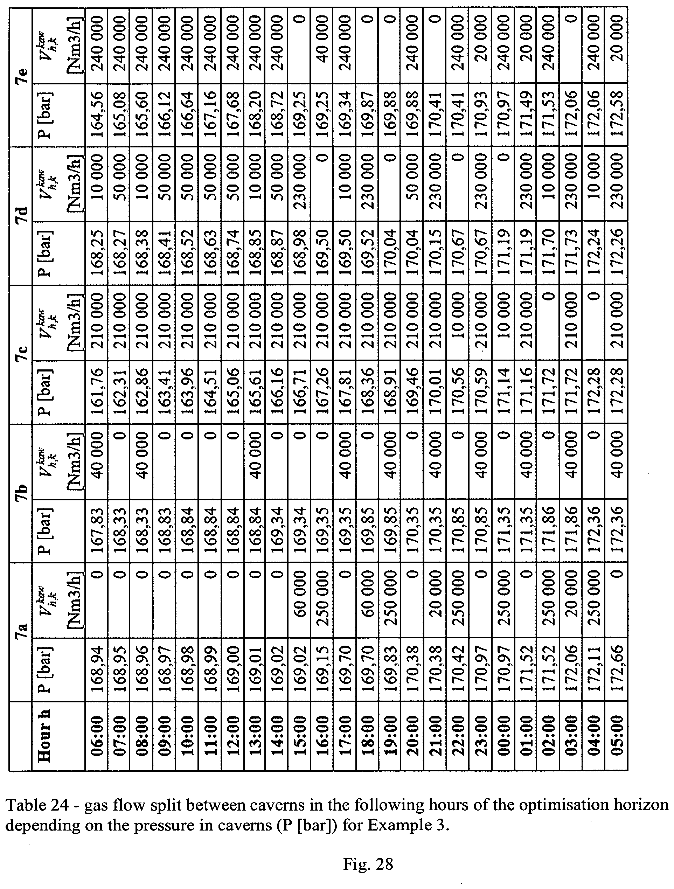

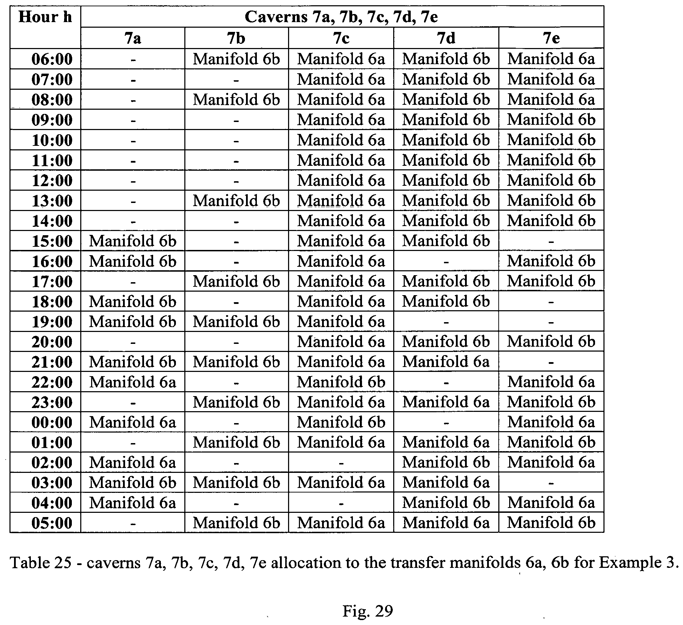

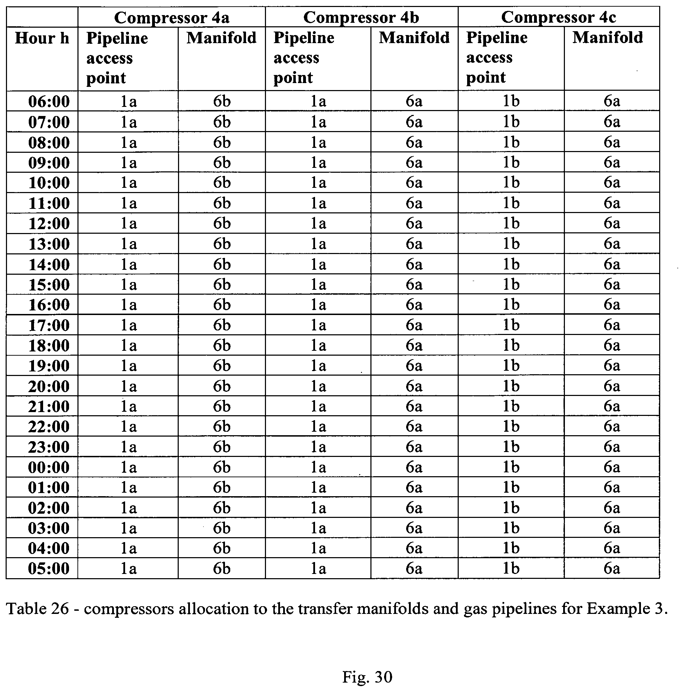

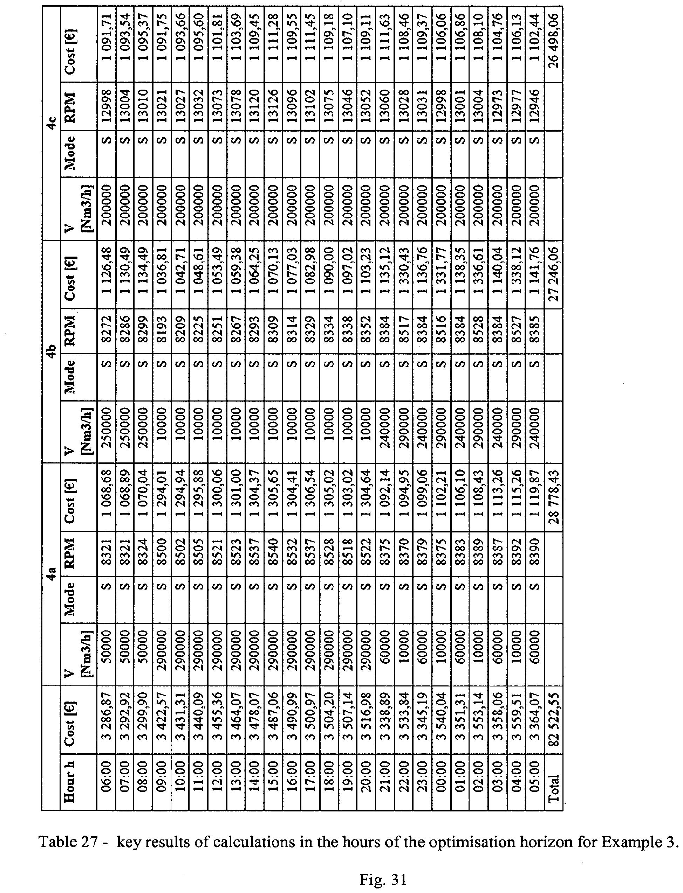

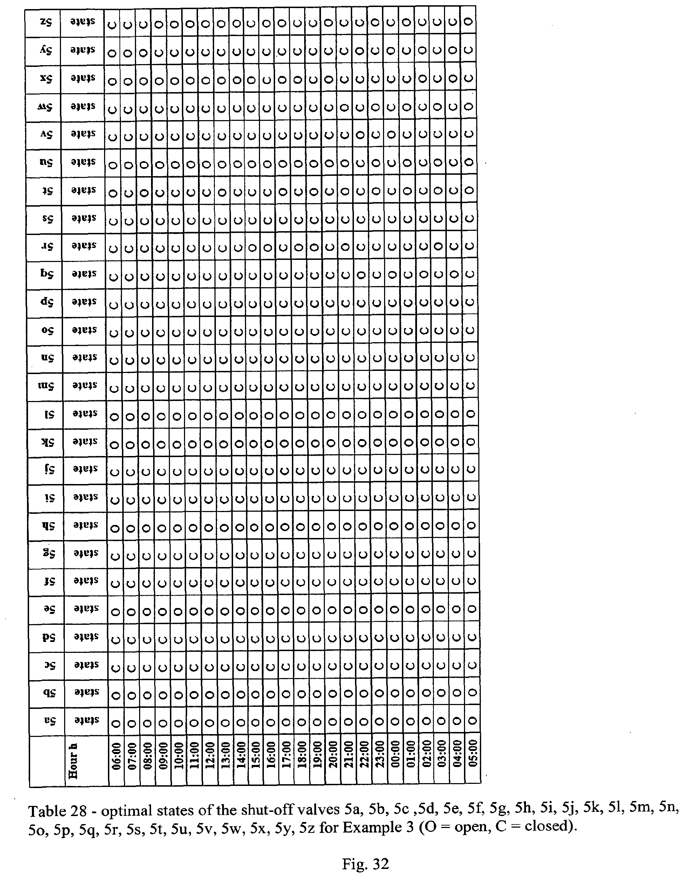

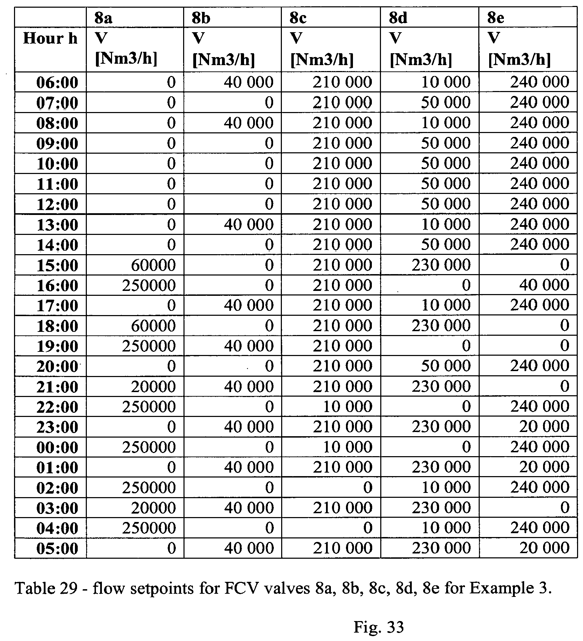

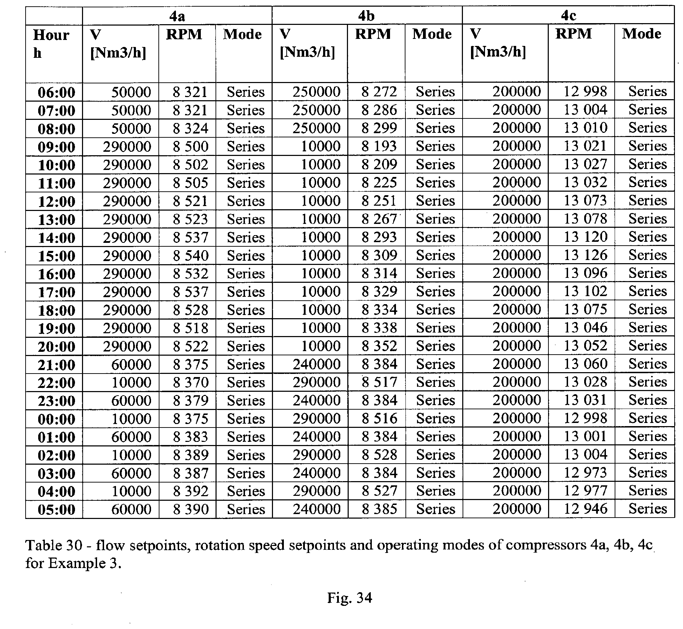

fig. 24 shows the connections diagram and the structure of the gas storage facility with five caverns, two transfer manifolds, and three compressors, connected to two gas pipelines, during gas injection, fig. 25 - fig. 34 show Tables 21-30 with data for the gas storage facility shown in fig. 24 for Example 3: fig. 25 shows Table 21 - information on input data, fig. 26 shows Table 22 - gas composition, fig. 27 shows Table 23 - current state of key equipment at the start of optimisation horizon, fig. 28 shows Table 24 - gas flow split between caverns in the following hours of the optimisation horizon depending on the pressure in caverns (P [bar]), fig. 29 shows Table 25 - caverns allocation to the transfer manifolds, fig. 30 shows Table 26 - compressors allocation to the transfer manifolds and gas pipelines, fig. 31 shows Table 27 - key results of calculations in the hours of the optimisation horizon, fig. 32 shows Table 28 - optimal states of the shut-off valves, fig. 33 shows Table 29 - flow setpoints for FCV valves, fig. 34 shows Table 30 - flow setpoints, rotation speed setpoints and operating modes of compressors;

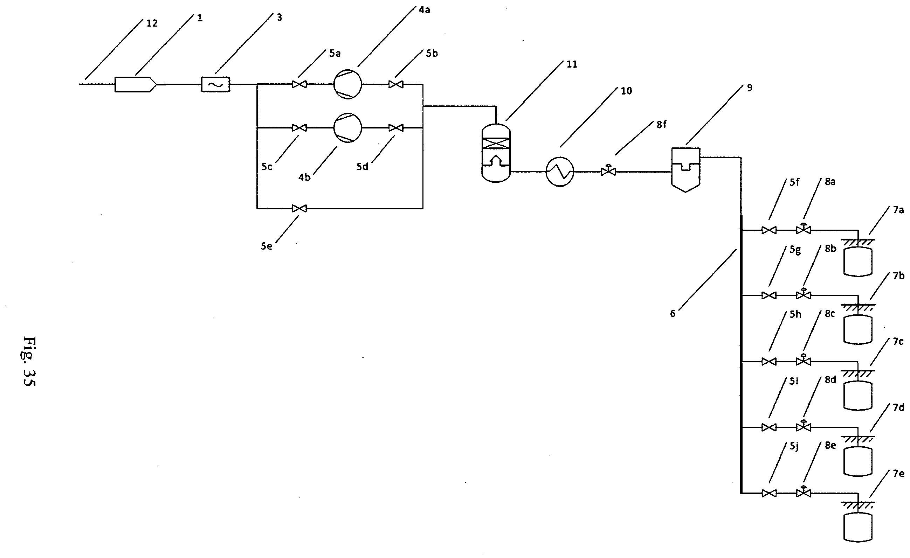

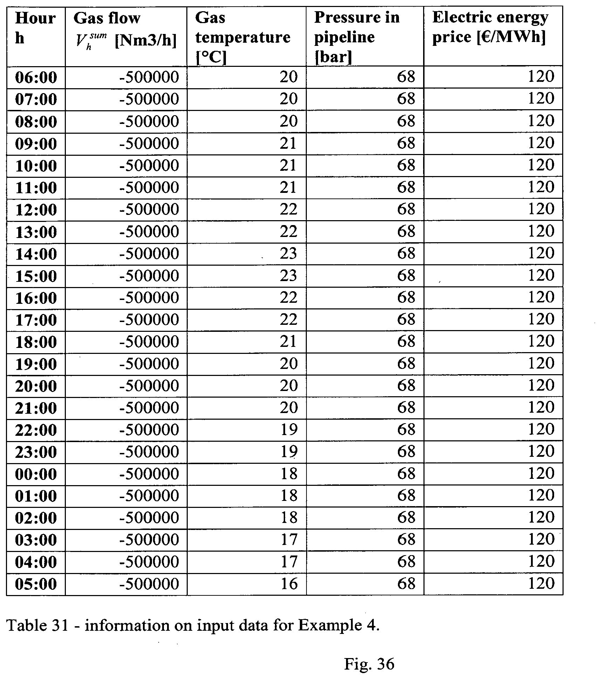

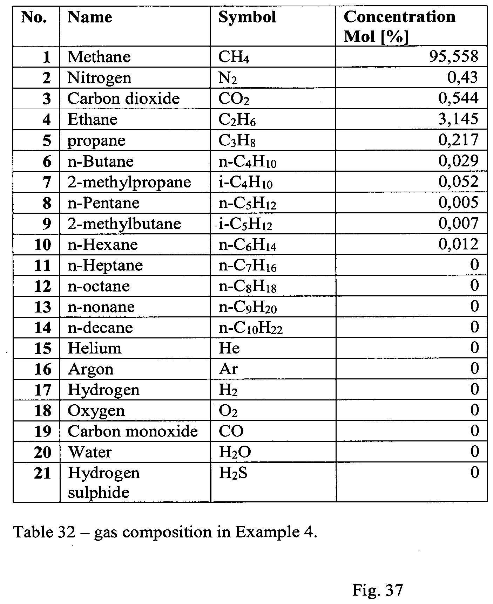

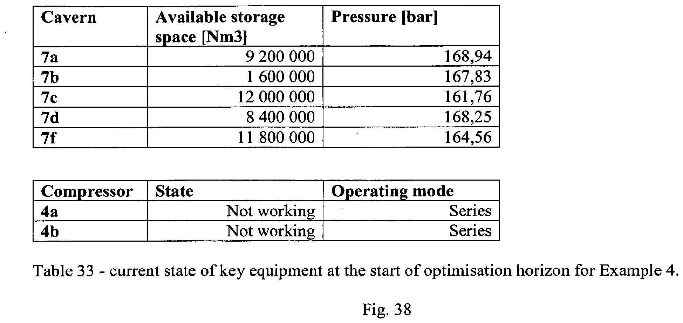

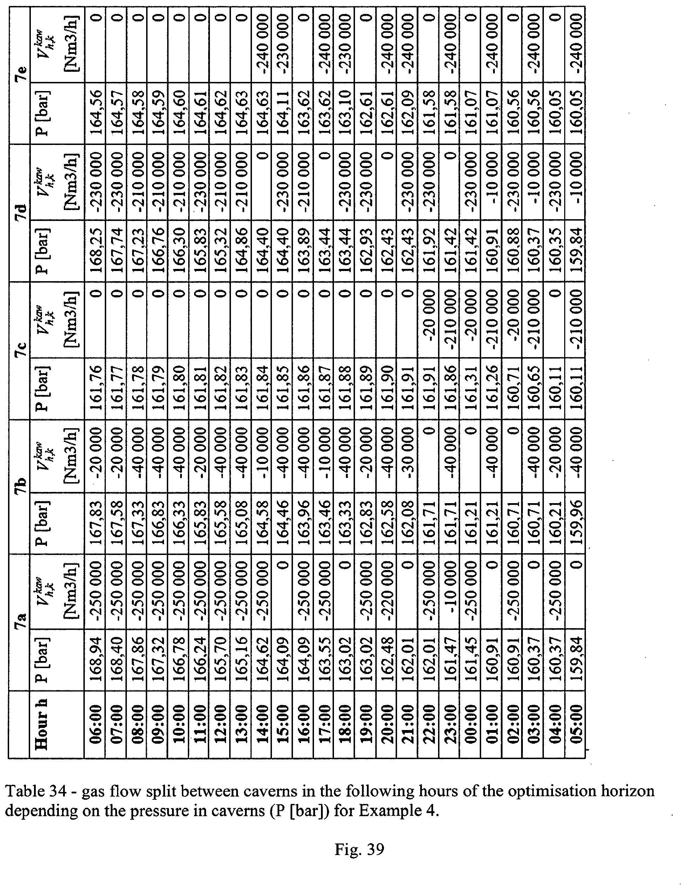

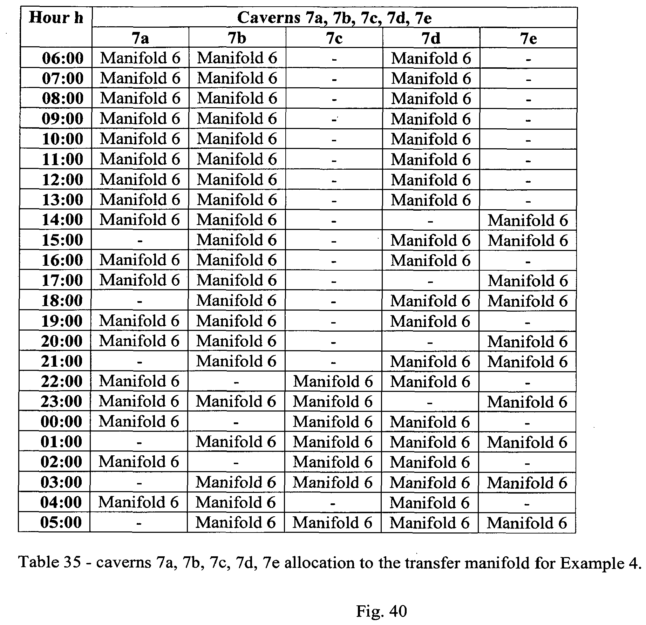

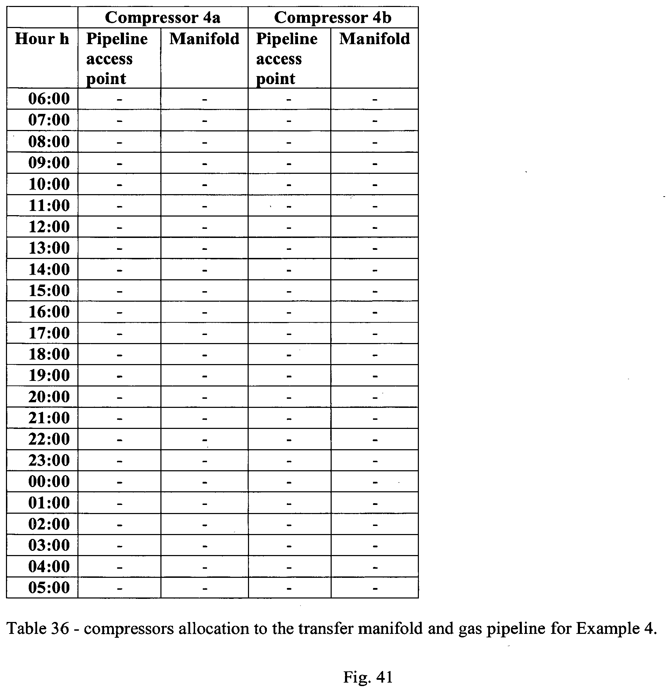

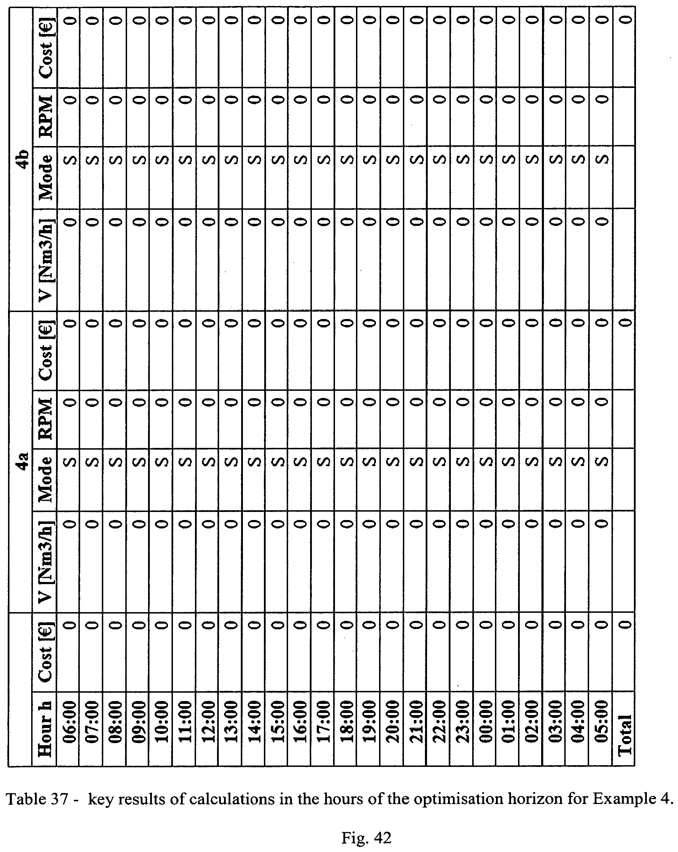

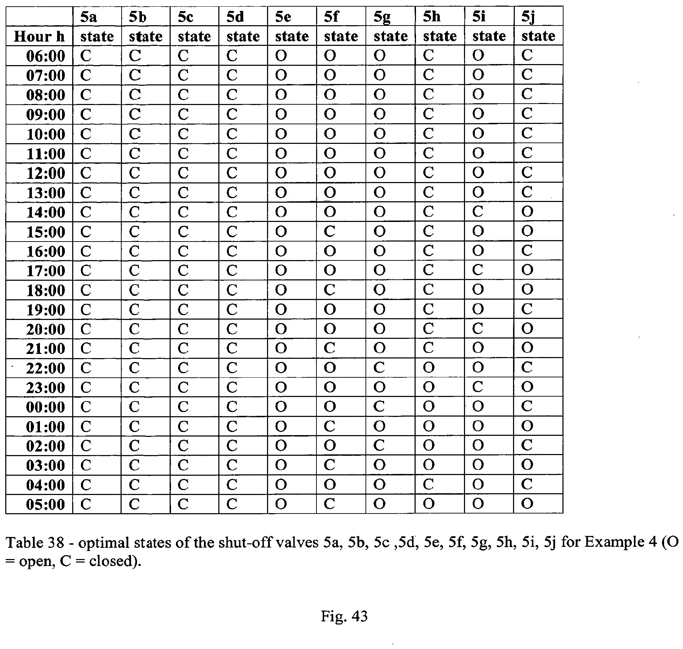

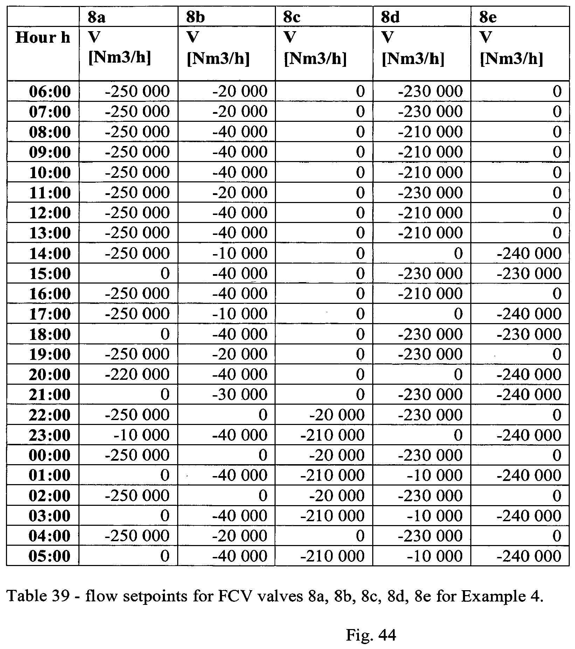

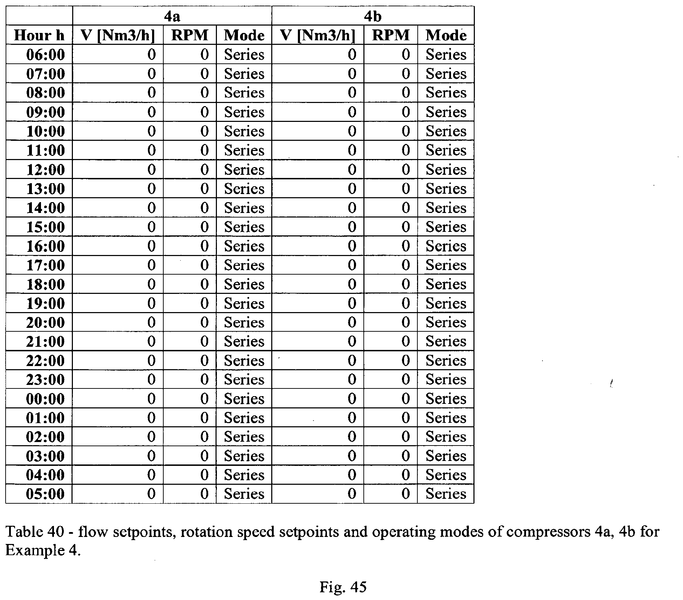

fig. 35 shows the connections diagram and the structure of the gas storage facility with five caverns, one transfer manifold, and one battery of two compressors, connected to one gas pipeline, during gas withdrawal, fig. 36 - fig. 45 show Tables 31-40 with data for the gas storage facility shown in fig. 35 for Example 4: fig. 36 shows Table 31 - information on input data, fig. 37 shows Table 32 - gas composition, fig. 38 shows Table 33 - current state of key equipment at the start of optimisation horizon, fig. 39 shows Table 34 - gas flow split between caverns in the following hours of the optimisation horizon depending on the pressure in caverns (P [bar]), fig. 40 shows Table 35 - caverns allocation to the transfer manifold, fig. 41 shows Table 36 - compressors allocation to the transfer manifold and gas pipeline, fig. 42 shows Table 37 - key results of calculations in the hours of the optimisation horizon, fig. 43 shows Table 38 - optimal states of the shut-off valves, fig. 44 shows Table 39 - flow setpoints for FCV valves, fig. 45 shows Table 40 - flow setpoints, rotation speed setpoints and operating modes of compressors;

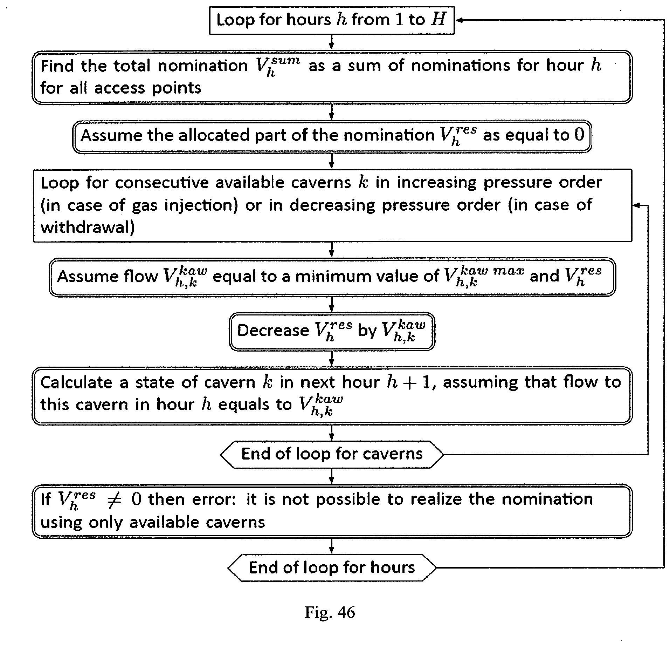

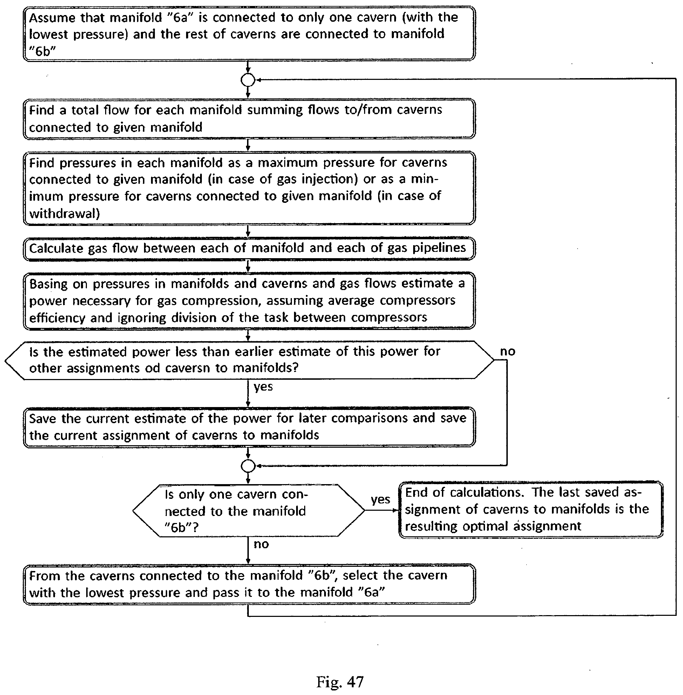

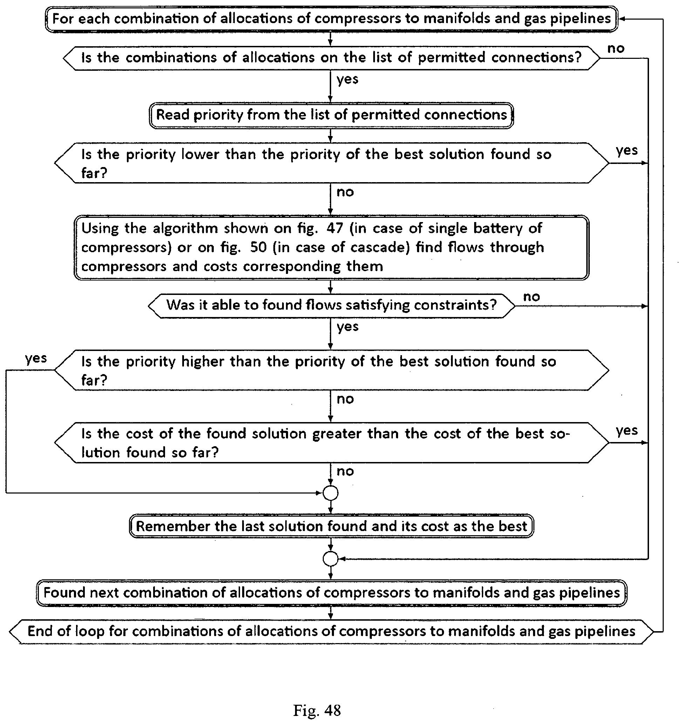

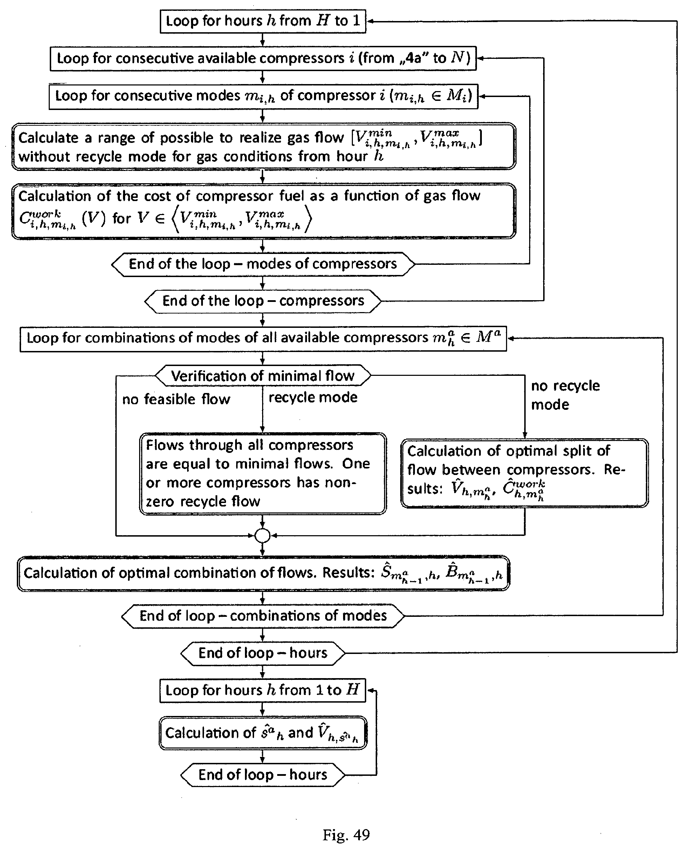

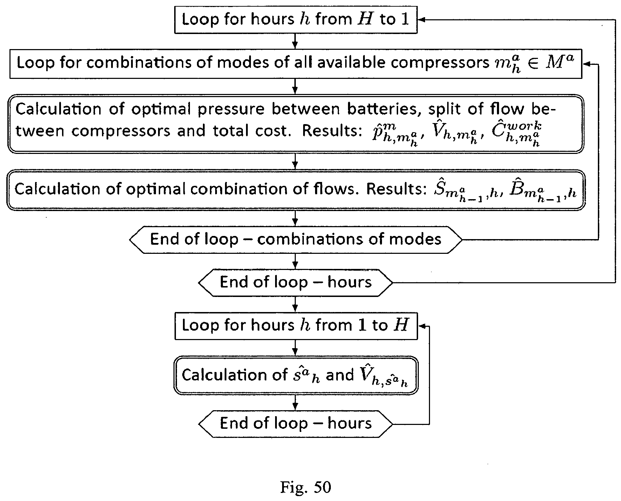

fig. 46 shows the diagram of algorithm for the selection of caverns, fig. 47 shows the diagram of algorithm for the allocation of caverns to manifolds, fig. 48 shows the diagram of algorithm for the allocation of compressors to manifolds and gas pipelines, fig. 49 shows the diagram of algorithm for the optimisation of the battery of compressors operation, fig. 50 shows the diagram of algorithm for the optimisation of the cascade of two compressor batteries operation.

Underground gas storage facility during gas injection shown in fig. 1 is equipped with:

1) above-ground equipment for the measurement of gas parameters and its composition, and equipment for gas processing prior to being stored in gas caverns, such as: one access point 1 to the gas pipeline, connected to it one inlet filter 2a, one gas measurement station 3 installed behind it and connected to a battery of two compressors 4a, 4b connected in parallel, operating with five shut-off valves 5a, 5b, 5c, 5d, 5e that allow for the connection of compressors to the installation or their disconnection from the installation, so that operation with one selected compressor 4a, 4b, two compressors 4a, 4b simultaneously or none of compressors 4a, 4b is possible, at the same time from the other side a battery of compressors 4a, 4b is connected to the transfer manifold 6 operating with five gas caverns 7a, 7b, 7c, 7d, 7e connected to the manifold via shut-off valves 5f, 5g, 5h, 5i, 5j that allow for the connection of caverns 7a, 7b, 7c, 7d, 7e to the installation or disconnection of caverns from the installation and FCV valves 8a, 8b, 8c, 8d, 8e that control gas flow,

2) underground equipment - five gas caverns 7a, 7b, 7c, 7d, 7e, and

3) above-ground equipment for the measurement of gas parameters and its composition and shown on fig. 35 equipment for gas processing and treatment after being withdrawn from caverns 7a, 7b, 7c, 7d, 7e including a number of equipment connected to the transfer manifold 6 from one side, and to the battery of compressors 4a, 4b from the other side, including separator 9, FCV valve 8f that control total flow when compressors 4a, 4b are not in operation, heater 10 and glycol dehydrator 11, a battery of compressors 4a, 4b connected in parallel operating with five shut-off valves 5a, 5b, 5c, 5d, 5e, and gas measurement station 3, through which gas flows to the access point 1 and the gas pipeline.

Compressors 4a, 4b are two-stage centrifugal compressors with electric drive, equipped with coolers at the outlet of each stage. The compressors differ in terms of performance characteristics, capacity, operation areas - characteristics of individual devices are entered into the calculation module.

Gas storage facility is connected to one gas pipeline 12 via access point 1.

As shown in fig. 2, gas storage facility is controlled by means of an automatic control system 13 fitted with a communication server 14.

On a separate optimisation system server 15 there is a gas storage facility operation optimisation system 16 consisting of:

- management module 17,
- calculation module - optimiser 18,
- underground part simulation module 19,
- database 20,
- interface for the communication with the control system 21,

operated by means of a graphic user interface 22.

The connection of the interface for the communication with the control system 21 to the communication server 14 of the control system 13 allows data exchange between the control system 13 and the gas storage facility operation optimisation system 16. Two-way data flow is possible.

Example 1 shows optimisation of operation of the gas storage facility shown on fig. 1 during gas injection to gas storage facility.

At the start of the process of natural gas injection to the gas storage facility in the gas storage facility operation optimisation system 16 located on the optimisation system server 15, the assumed/forecast gas storage facility operation input data in an assumed prediction horizon, i.e for current gas day from 6:00 to 5:00 have been set, such as: external temperature, gas pressure in gas pipelines separately for each connection to the gas pipeline 12, temperature and composition of gas in the gas pipelines separately for each connection to the gas pipeline 12 for gas injection to the gas storage facility, prices of electric energy and fuel gas, direction of gas flow and volume of gas flow at each connection to the gas pipeline 12, availability of caverns 7a, 7b, 7c, 7d, 7e and compressors 4a, 4b - it has been determined that all compressors 4a, 4b and caverns 7a, 7b, 7c, 7d, 7e are available and able to facilitate the nominated gas flow in every hour of the optimisation horizon, measurement data on the state of the gas storage facility, such as current gas flow, the composition and temperature of gas injected to the storage facility were acquired from the control system 13, which served for updating the state of the gas storage facility underground part model for the period from the last update up to present time - Table 1 in fig. 3 shows information on the following input data:

- nominated gas flow $V_h^{sum}$,

- gas temperature,

- pressure in the gas pipeline,

- electrical energy price;

Table 2 in fig. 4 shows the composition of gas, which is constant for the entire optimisation horizon; Table 3 in fig. 5 shows the current state of key equipment at the start of the optimisation horizon.

Next, data updates were saved in the database 20 of the gas storage facility operation optimisation system 16 and by means of the calculation module 18 and the underground part simulation module 19:

- caverns 7a, 7b, 7c, 7d, 7e to be used were selected and gas flow was split between the used caverns 7a, 7b, 7c, 7d, 7e, however, at this step in case of gas injection to the gas storage facility, caverns 7a, 7b, 7c, 7d, 7e sorted in order of increasing pressure, in the subsequent hours h were allocated with the maximum flow capacity $V_{h,k}^{kaw\ max}$ until it is exhausted, i.e. until the flow capacity allocated to the cavern in a given hour had reached the value of approved customer's nominations $V_h^{sum}$ or until cavern 7a, 7b, 7c, 7d, 7e had reached maximum pressure - Table 4 in fig. 6 shows gas flow allocation between caverns 7a, 7b, 7c, 7d, 7e in the subsequent hours of the optimisation horizon depending on the pressure in caverns (P [bar]);

- allocation of all used caverns 7a, 7b, 7c, 7d, 7e operating in a given hour to the transfer manifold 6 were specified - due to a single transfer manifold 6, all caverns 7a, 7b, 7c, 7d, 7e operating in a given hour h were allocated to the same manifold - Table 5 in fig. 7 shows allocation of caverns to the transfer manifold;

- allocation of compressors 4a, 4b to the gas pipeline 12 and manifold 6 were specified - due to a single gas pipeline 12 and access point 1 to the gas pipeline 12, and a single transfer manifold 6, all compressors 4a, 4b operating in a given hour h are connected to the same gas pipeline 12 and manifold 6 - Table 6 in fig. 8 shows the allocation of compressors to the transfer manifold and gas pipeline;

- optimal operating parameters for the compressors 4a, 4b being a single battery of compressors 4a, 4b were determined so that the cost of operation of each compressor 4a, 4b was determined depending on the gas flow for each operating mode the compressor 4a, 4b may operate under given conditions: suction pressure, injection pressure, suction temperature, gas composition, where the determination of the cost of operation of the compressor 4a, 4b was a two-step process: determination of the minimum and maximum gas flow and dividing the range into a series of points, and for each point, i.e gas flow, determination of fuel cost, gas flow was optimally split between the compressors 4a, 4b for each possible set of modes of the compressors 4a, 4b in a battery, optimal operating modes of the compressors 4a, 4b were selected in the prediction horizon - Table 7 in fig. 9 shows key calculations for each hour in the optimisation horizon:

- total cost of operation of the compressors 4a, 4b, [€],
- gas flow through individual compressors 4a, 4b (V [Nm$^3$/h]),
- operating modes of the compressors 4a, 4b (S = series, P = parallel),
- rotation speed of the compressors 4a, 4b (RPM),
- cost of operation for individual compressors 4a, 4b [€];

- as a result of calculations performed in the previous steps, value vectors of all output variables that describe optimal parameters of gas storage facility equipment in the optimisation horizon were determined in the calculation module 18: optimal states of the shut-off valves 5a, 5b, 5c, 5d, 5e, 5f, 5g, 5h, 5i, 5j, flow setpoints for individual FCV valves 8a, 8b, 8c, 8d, 8e, setpoints for the flow and rotation speed of the compressors 4a, 4b, optimal operating modes of the compressors 4a, 4b, which were transmitted to the communication server 14 of the control system 13 via interface for the communication with the control system 21;

- based on the optimal results received from the gas storage facility operation optimisation system 16 and saved in the control system 13, optimal signals that control the change of the storage facility equipment operating parameters, such as the state of shut-off valves 5a, 5b, 5c,5d, 5e, 5f, 5g, 5h, 5i, 5j that select used caverns 7a, 7b, 7c, 7d, 7e and compressors 4a, 4b, flow setpoints for FCV valves 8a, 8b, 8c, 8d, 8e, setpoints for the flow through the compressors 4a, 4b and rotation speed of the compressors 4a, 4b, operating modes of the compressors 4a, 4b, selected according to the structure of the storage facility installation, were sent via the control system 13 - Table 8 in fig. 10 shows the optimal states of shut-off valves 5a, 5b, 5c,5d, 5e, 5f, 5g, 5h, 5i, 5j; Table 9 in fig. 11 shows flow setpoints for FCV valves 8a, 8b, 8c, 8d, 8e; Table 10 in fig. 12 shows setpoints for the flows, rotation speed and operating modes of the compressors 4a, 4b;

- the above operations were repeated a number of times with a period not exceeding the calculation horizon.

Minimum operating costs associated with the consumption of electrical energy used to power the drives of the compressors 4a and 4b have been achieved as a result of an optimal schedule for the operation of equipment of the storage facility infrastructure.

Underground gas storage facility during gas injection shown in fig. 13 is equipped with:

1) above-ground equipment for gas processing prior to being stored in gas caverns, such as: one access point 1 to the gas pipeline, connected to it one inlet filter 2a, one gas measurement station 3 installed behind it and connected to a cascade of two batteries of compressors 4a, 4b, 4c connected in series, where the first battery of compressors 4a, 4b consists of two compressors 4a, 4b connected in parallel, and the second battery consists of one compressor 4c, operating with eight shut-off valves 5a, 5b, 5c, 5d, 5e, 5f, 5g, 5h that allow for the connection of compressors 4a, 4b to the installation or their disconnection from the installation, so that operation with one selected compressor 4a, 4b in the first battery of compressors 4a, 4b, two compressors 4a, 4b in the first battery of compressors 4a, 4b simultaneously, with or without compressor 4c in the second battery of compressors 4c or none of the compressors 4a, 4b, 4c is possible, at the same time from the other side a cascade of two batteries of compressors 4a, 4b, 4c is connected to the transfer manifold 6 operating with five gas caverns 7a, 7b, 7c, 7d, 7e connected to the manifold 6 via shut-off valves 5i, 5j, 5k, 5l, 5m that allow for the connection of caverns 7a, 7b, 7c, 7d, 7e to the installation or disconnection of caverns 7a, 7b, 7c, 7d, 7e from the installation and FCV valves 8a, 8b, 8c, 8d, 8e that control the gas flow,
2) underground equipment - five gas caverns 7a, 7b, 7c, 7d, 7e, and
3) above-ground equipment shown in fig. 35 for gas processing and treatment after being withdrawn from caverns 7a, 7b, 7c, 7d, 7e including a number of equipment connected to the transfer manifold 6 from one side, and to the battery of compressors 4a, 4b from the other side, including separator 9, FCV valve 8f that control total flow when compressors 4a, 4b are not in operation, heater 10 and glycol dehydrator 11, a battery of compressors 4a, 4b connected in parallel operating with five shut-off valves 5a, 5b, 5c, 5d, 5e, and gas measurement station 3, through which gas flows to the access point 1 and the gas pipeline.

Compressors 4a, 4b are two-stage centrifugal compressors powered by gas turbines, equipped with coolers at the outlet of each stage. Compressor 4c is a centrifugal single-stage compressor with an electric drive, with cooler at the outlet.

The compressors differ in terms of performance characteristics, capacity, operation areas - characteristics of individual devices are entered into the calculation module.

Gas storage facility is connected to one gas pipeline 12 via access point 1.

As shown in fig. 2, gas storage facility is controlled by means of an automatic control system 13 fitted with a communication server 14.

On a separate optimisation system server 15 there is a gas storage facility operation optimisation system 16 consisting of:

- management module 17,
- calculation module - optimiser 18,
- underground part simulation module 19,
- database 20,
- interface for the communication with the control system 21,

operated by means of a graphic user interface 22.

The connection of the interface for the communication with the control system 21 to the communication server 14 of the control system 13 allows data exchange between the control system 13 and the gas storage facility operation optimisation system 16. Two-way data flow is possible.

Example 2 shows optimisation of operation of the gas storage facility shown on fig. 13 during gas injection to storage facility.

At the start of the process of natural gas injection to the gas storage facility in the gas storage facility operation optimisation system 16 located on the optimisation system server 15, the assumed/forecast gas storage facility operation input data in an assumed prediction horizon, i.e for current gas day from 6:00 to 5:00 have been set, such as: external temperature, gas pressure in gas pipelines separately for each connection to the gas pipeline 12, temperature and composition of gas in the gas pipelines separately for each connection to the gas pipeline 12 for gas injection to the gas storage facility, prices of electrical energy and fuel gas, direction of gas flow and volume of gas flow at each connection to the gas pipeline 12, availability of caverns 7a, 7b, 7c, 7d, 7e and compressors 4a, 4b, 4c - it has been determined that all compressors 4a, 4b, 4c and caverns 7a, 7b, 7c, 7d, 7e are available and able to facilitate the nominated gas flow in each hour of the optimisation horizon, measurement data on the state of the gas storage facility, such as current gas flow, the composition and temperature of gas injected to the storage facility were acquired from the control system 13, which served for updating the state of the gas storage facility underground part model for the period from the last update up to present time - Table 11 in fig. 14 shows information on the following input data:

- nominated gas flow $V_h^{sum}$,
- gas temperature,
- pressure in the gas pipeline,
- ambient temperature,
- electrical energy price,
- fuel gas price;

Table 12 in fig. 15 shows the composition of gas, which is constant for the entire optimisation horizon; Table 13 in fig. 16 shows the current state of key equipment at the start of the optimisation horizon.

Next, data updates were saved in the database 20 of the gas storage facility operation optimisation system 16 and by means of the calculation module 18 and the underground part simulation module 19:

- caverns 7a, 7b, 7c, 7d, 7e to be used were selected and gas flow was split between the used caverns 7a, 7b, 7c, 7d, 7e, however, at this step in case of gas injection to the storage facility, caverns 7a, 7b, 7c, 7d, 7e sorted in order of increasing pressure, in the subsequent hours h were allocated with the maximum flow capacity $V_{h,k}^{kaw\ max}$ until it is exhausted, i.e. until the flow capacity allocated to the caverns 7a, 7b, 7c, 7d, 7e in a given hour had reached the value of approved customer's nominations $V_h^{sum}$ or until cavern 7a, 7b, 7c, 7d, 7e had reached maximum pressure - Table 14 in fig. 17 shows gas flow allocation between caverns 7a, 7b, 7c, 7d, 7e in the subsequent hours of the optimisation horizon depending on the pressure in caverns (P [bar]);
- allocation of all used caverns 7a, 7b, 7c, 7d, 7e operating in a given hour to the transfer manifold 6 were specified - due to a single transfer manifold 6 all caverns 7a, 7b, 7c, 7d, 7e operating in a given hour h were allocated to the same manifold - Table 15 in fig. 18 shows allocation of caverns 7a, 7b, 7c, 7d, 7e to the transfer manifold 6;
- allocation of the compressors 4a, 4b,4c to the gas pipeline 12 and manifold 6 were specified
- due to a single gas pipeline 12 and access point 1 to the gas pipeline 12, and a single transfer manifold 6 and the structure of connections in the storage installation, only two connections are possible: with the compressor in the second level of the cascade or without this compressor, however, due to high pressure in the manifold 6, in this example it was essential to use compressor 4c - Table 16 in fig. 19 shows the allocation of compressors 4a, 4b, 4c to the transfer manifold 6 and gas pipeline 12;

- optimal operating parameters for the compressors 4a, 4b being a single battery of compressors 4a, 4b were determined so that the cost of operation of each compressor 4a, 4b was determined according to the gas flow in each operating mode the compressor 4a, 4b may operate under given conditions: suction pressure, injection pressure, suction temperature, gas composition, gas flow was optimally split between the compressors 4a, 4b for each possible set of modes of compressors 4a, 4b in a battery, operating modes of the compressors 4a, 4b were selected for the prediction horizon, where the determination of the cost of operation of the compressor 4a, 4b was a two-step process: determination of the minimum and maximum gas flow and dividing the range into a series of points, and for each point, i.e. gas flow, determination of the fuel cost; then, optimal operating parameters were determined for the compressors 4a, 4b, 4c so that an optimal pressure between the batteries of compressors 4a, 4b, 4c was selected so that for each of the assessed pressure the cost of operation of each of the compressor 4a, 4b, 4c was determined depending on the gas flow in each operating mode the compressor 4a, 4b, 4c may operate under given conditions: suction pressure, injection pressure, suction temperature, gas composition, where the determination of the cost of operation of the compressor 4a, 4b, 4c was a two-step process: determination of the minimum and maximum gas flow and dividing the range into a series of points, and for each point, i.e. gas flow, determination of the fuel cost, gas flow was optimally split between the compressors 4a, 4b from the first battery of compressors 4a, 4b for each possible set of modes of the compressors 4a, 4b, due to the fact that the second battery of compressors 4c consists of only one compressor 4c, the whole gas flow was allocated to the compressor 4c, optimal operating modes for the compressors 4a, 4b, 4c were selected in the prediction horizon - Table 17 in fig. 20 shows key calculation results for each hour in the optimisation horizon:

- total cost of operation of compressors 4a, 4b, 4c [€],
- gas flow through individual compressors 4a, 4b, 4c (V [Nm3/h]),
- operating modes of the compressors 4a, 4b (S = series, P = parallel),
- rotation speed of the compressors 4a, 4b, 4c (RPM),

- cost of operation for individual compressors 4a, 4b, 4c [€];

- as a result of calculations performed in the previous steps, value vectors of all output variables that describe optimal parameters of gas storage facility equipment in the optimisation horizon were determined in the calculation module 18: optimal states of the shut-off valves 5a, 5b, 5c, 5d, 5e, 5f, 5g, 5h, 5i, 5j, 5k, 5l, 5m, flow setpoints for individual FCV valves 8a, 8b, 8c, 8d, 8e, setpoints for the flow and rotation speed of the compressors 4a, 4b, 4c, optimal operating modes of the compressors 4a, 4b, 4c, which were transmitted to the communication server 14 of the control system 13 via interface for the communication with the control system 21,

- based on the optimal results received from the gas storage facility operation optimisation system 16 and saved in the control system 13, optimal signals that control the change of the storage facility equipment operating parameters, such as the state of shut-off valves 5a, 5b, 5c,5d, 5e, 5f, 5g, 5h, 5i, 5j, 5k, 5l, 5m that select used caverns 7a, 7b, 7c, 7d, 7e and compressors 4a, 4b, 4c, flow setpoints for FCV valves 8a, 8b, 8c, 8d, 8e, setpoints for the flow through the compressors 4a, 4b, 4c and rotation speed of the compressors 4a, 4b, 4c, operating modes of the compressors 4a, 4b, 4c, selected according to the structure of the storage facility installation, were sent via the control system 13 - Table 18 in fig. 21 shows the optimal states of shut-off valves 5a, 5b, 5c,5d, 5e, 5f, 5g, 5h, 5i, 5j, 5k, 5l, 5m; Table 19 in fig. 22 shows flow setpoints for FCV valves 8a, 8b, 8c, 8d, 8e; Table 20 in fig. 23 shows setpoints for the flows, rotation speed and operating modes of the compressors 4a, 4b;

- the above operations were be repeated a number of times with a period no longer than the calculation horizon.

Minimum operating costs associated with the consumption of fuel gas and electrical energy used to power the drives of the compressors 4a, 4b, 4c have been achieved as a result of an optimal schedule for the operation of equipment in the storage facility infrastructure.

Underground gas storage facility during gas injection shown in fig. 24 is equipped with:

1) above-ground equipment for gas processing prior to being stored in gas caverns, such as: two access points 1a, 1b to the gas pipelines, one inlet filter 2a, 2b connected to each access point, one gas measurement station 3a, 3b connected between each inlet filter 2a, 2b and battery of three compressors 4a, 4b, 4c operating with sixteen shut-off valves 5a, 5b, 5c, 5d, 5e, 5f, 5g, 5h, 5i, 5j, 5k, 5l, 5m, 5n, 5o, 5p that allow for the connection of compressors 4a, 4b, 4c to the installation or their disconnection from the installation, so that operation with one selected compressor 4a, 4b, 4c, multiple compressors 4a, 4b, 4c simultaneously or none of the compressors 4a, 4b, 4c is possible, however, each of the compressors 4a, 4b, 4c may be connected to any gas pipeline 12 and any transfer manifold 6a, 6b operating with five gas caverns 7a, 7b, 7c, 7d, 7e connected to the manifolds 6a, 6b via shut-off valves 5q, 5r, 5s, 5t, 5u, 5v, 5w, 5x, 5y, 5z that allow for the connection of caverns 7a, 7b, 7c, 7d, 7e to the installation or disconnection of caverns 7a, 7b, 7c, 7d, 7e from the installation, where each cavern 7a, 7b, 7c, 7d, 7e may be connected to any manifold 6a, 6b, and FCV valves 8a, 8b, 8c, 8d, 8e that control the gas flow,
2) underground equipment - five gas caverns 7a, 7b, 7c, 7d, 7e, and
3) not shown in fig. 24 above-ground equipment for gas processing and treatment after being withdrawn from caverns 7a, 7b, 7c, 7d, 7e including two series of equipment connected to any transfer manifold 6a, 6b from one side via shut-off valves 5aa, 5ab, 5ac, 5ad, and to the compressors 4a, 4b, 4c from the other side, including one separator each, one FCV valve each for the flow control when compressors 4a, 4b, 4c are not in operation, one heater each, and one glycol dehydrator each, compressors 4a, 4b, 4c operating with sixteen shut-off valves 5a, 5b, 5c, 5d, 5e, 5f, 5g, 5h, 5i, 5j, 5k, 5l, 5m, 5n, 5o, 5p and gas measurement stations 3a and 3b, through which gas flows to the access points 1a, 1b and gas pipelines respectively.

Compressors 4a, 4b, 4c are two-stage centrifugal compressors with electric drive, equipped with coolers at the outlet of each stage. The compressors differ in terms of performance characteristics, capacity, operation areas - characteristics of individual devices are entered into the calculation module.

Gas storage facility is connected to two gas pipelines 12 via access points 1a and 1b.

As shown in fig. 2, gas storage facility is controlled by means of an automatic control system 13 fitted with a communication server 14.

On a separate optimisation system server 15 there is a gas storage facility operation optimisation system 16 consisting of:

• management module 17,
• calculation module - optimiser 18,
• underground part simulation module 19,
• database 20,
• interface for the communication with the control system 21,

operated by means of a graphic user interface 22.
The connection of the interface for the communication with the control system 21 to the communication server 14 of the control system 13 allows data exchange between the control system 13 and the gas storage facility operation optimisation system 16. Two-way data flow is possible.

Example 3 shows optimisation of operation of the gas storage facility shown on fig. 24 during gas injection to the storage facility.

At the start of the process of natural gas injection to the gas storage facility in the gas storage facility operation optimisation system 16 located on the optimisation system server 15, the assumed/forecast gas storage facility operation input data in an assumed prediction horizon, i.e. for the current gas day from 6:00 to 5:00 have been set, such as: external temperature, gas pressure in gas pipelines 12 separately for each connection to the gas pipeline 12, temperature and composition of gas in the gas pipelines 12 separately for each connection to the gas pipeline 12 for gas injection to the storage facility, prices of electrical energy and fuel gas, direction of gas flow and volume of gas flow at each connection to the gas pipeline 12, availability of caverns 7a, 7b, 7c, 7d, 7e and compressors 4a, 4b, 4c - it has been determined that all compressors 4a, 4b, 4c and caverns 7a, 7b, 7c, 7d, 7e are available and able to facilitate the nominated gas flow in every hour of the optimisation horizon, measurement data on the state of the gas storage facility, such as current gas flows, the composition and temperature of gas injected to the storage facility were acquired from the control system 13, which served for updating the state of the gas storage facility underground part model for the period from the last update up to present time - Table 21 in fig. 25 shows information on the following input data:

- nominated flows V for each access point to the gas pipelines,
- temperatures of gas in each gas pipeline,
- pressures in the gas pipelines,
- electrical energy price;

Table 22 in fig. 26 shows the composition of gas, which is constant for the entire optimisation horizon; the same in both gas pipelines;
Table 23 in fig. 27 shows the current state of key equipment at the start of the optimisation horizon.
Next, data updates were saved in the database 20 of the gas storage facility operation optimisation system 16 and by means of the calculation module 18 and the underground part simulation module 19:

- caverns 7a, 7b, 7c, 7d, 7e to be used were selected and gas flow was split between the used caverns 7a, 7b, 7c, 7d, 7e, however, at this step in case of gas injection to the storage facility, caverns 7a, 7b, 7c, 7d, 7e sorted in order of increasing pressure, in the subsequent hours h were allocated with the maximum flow capacity $V_{h,k}^{kaw\,max}$ until it is exhausted, i.e. until the flow capacity allocated to the caverns 7a, 7b, 7c, 7d, 7e in a given hour had reached the value of approved customer's nominations $V_h^{sum}$ or until cavern 7a, 7b, 7c, 7d, 7e had reached maximum pressure - Table 24 in fig. 28 shows allocation between caverns 7a, 7b, 7c, 7d, 7e in the subsequent hours of the optimisation horizon depending on the pressure in caverns (P [bar]);

- allocation of all the used caverns 7a, 7b, 7c, 7d, 7e operating in a given hour to the transfer manifolds 6a and 6b were determined by checking different connection options, starting from one cavern 7a, 7b, 7c, 7d, 7e with the lowest pressure connected to the manifold 6a, and the remaining caverns 7a, 7b, 7c, 7d, 7e connected to the manifold 6b, the next steps involved connection of one cavern 7a, 7b, 7c, 7d, 7e with the lowest pressure from the manifold 6b to manifold 6a, until only one cavern 7a, 7b, 7c, 7d, 7e was left in the manifold 6b, for each case flows to the individual manifolds 6a, 6b, pressures in manifolds 6a, 6b, and pressure drops on other above-ground equipment connected between the compressors 4a, 4b, 4c and manifolds 6a, 6b were calculated, so that discharge pressure of each compressor 4a, 4b, 4c was determined and total work to be performed by the compressors 4a, 4b, 4c for isentropic compression was estimated, then the case where an estimated work is the lowest was selected
- Table 25 in fig. 29 shows the allocation of caverns to the transfer manifolds;
- allocation of the compressors 4a, 4b and 4c to the access points 1a and 1b to the gas pipelines 12 and manifolds 6a, 6b were determined, with the assumption that there are no limitations for the connection of compressors 4a, 4b, 4c to the manifolds 6a, 6b nor gas pipelines 12, thus compressors 4a, 4b, 4c can be connected to any gas pipeline 12 and any manifold 6a, 6b with the same priority, but these connections must be the same for the entire optimisation horizon, therefore determination of the connections of compressors 4a, 4b, 4c to the manifolds 6a, 6b and gas pipelines 12 was based on the operating costs, where the selected combinations of connections provided the best economic output - Table 26 in fig. 30 shows the allocation of compressors to the transfer manifolds and gas pipelines;
- optimal operating parameters for the compressors 4a, 4b, 4c were determined so that the cost of operation of each compressor 4a, 4b, 4c was determined according to the gas flow for each operating mode the compressor 4a, 4b, 4c may operate under given conditions: suction pressure, injection pressure, suction temperature, gas composition, gas flow was split between the compressors 4a, 4b, 4c on the basis of the calculated optimal connection of compressors 4a, 4b, 4c to manifolds 6a, 6b and gas pipelines 12, optimal operating modes of the compressors 4a, 4b, 4c were selected in the prediction horizon, where the determination of the cost of operation of the compressor 4a, 4b, 4c was a two-step process: determination of the minimum and maximum gas flow and dividing the range into a series of points, and for each point, i.e. flow, determination of the fuel cost - Table 27 in fig. 31 shows key calculation results in each hour of the optimisation horizon:

- total cost of operation of compressors 4a, 4b, 4c [€],
- gas flow through individual compressors 4a, 4b, 4c (V [Nm3/h]),
- operating modes of the compressors 4a, 4b, 4c (S = series, P = parallel),
- rotation speed of the compressors 4a, 4b, 4c (RPM),
- cost of operation for individual compressors 4a, 4b, 4c [€];

- as a result of calculations performed in the previous steps, value vectors of all output variables that describe the optimal parameters for the storage facility equipment in the optimisation horizon were determined in the calculation module 18: optimal states of shut-off valves 5a, 5b, 5c ,5d, 5e, 5f, 5g, 5h, 5i, 5j, 5k, 51, 5m, 5n, 5o, 5p, 5q, 5r, 5s, 5t, 5u, 5v, 5w, 5x, 5y, 5z, flow setpoints for each FCV valve 8a, 8b, 8c, 8d, 8e, setpoints for the flow and rotation speed of the compressors 4a, 4b, 4c, optimal operating modes of the compressors 4a, 4b, 4c, which were transmitted to the communication server 14 of the control system 13 via interface for the communication with the control system 21;
- based on the optimal results received from the gas storage facility operation optimisation system 16 and saved in the control system 13, optimal signals that control the change of the storage facility equipment operating parameters, such as the state of shut-off valves 5a, 5b, 5c, 5d, 5e, 5f, 5g, 5h, 5i, 5j, 5k, 51, 5m, 5n, 5o, 5p, 5q, 5r, 5s, 5t, 5u, 5v, 5w, 5x, 5y, 5z that select used caverns and compressors, flow setpoints for FCV valves 8a, 8b, 8c, 8d, 8e, setpoints for the flow through compressors 4a, 4b, 4c and rotation speed of compressors 4a, 4b, 4c, operating modes of compressors 4a, 4b, 4c, selected according to the structure of the storage facility infrastructure, were sent via the control system 13 - Table 28 in fig. 32 shows the optimal states of shut-off valves 5a, 5b, 5c ,5d, 5e, 5f, 5g, 5h, 5i, 5j, 5k, 51, 5m, 5n, 5o, 5p, 5q, 5r, 5s, 5t, 5u, 5v, 5w, 5x, 5y, 5z; Table 29 in fig. 33 shows flow setpoints for FCV valves 8a, 8b, 8c, 8d, 8e; Table 30 in fig. 34 shows setpoints for the flows, rotation speed and operating modes of the compressors 4a, 4b, 4c;
- the above operations were be repeated a number of times with a period no longer than the calculation horizon.

Minimum operating costs associated with the consumption of electrical energy used to power the drives of the compressors 4a, 4b, 4c have been achieved as a result of an optimal schedule for the operation of equipment in the storage facility infrastructure.

Underground gas storage facility during gas withdrawal shown in fig. 35 is equipped with:

1) above-ground equipment for the measurement of gas parameters and its composition, and equipment for gas processing prior to being stored in gas caverns, such as: one access point 1 to the gas pipeline, connected to it one inlet filter 2a not visible on fig. 35, one gas measurement station 3 installed behind it and connected to a battery of two compressors 4a, 4b connected in parallel, operating with five shut-off valves 5a, 5b, 5c, 5d, 5e that allow for the connection of compressors to the installation or their disconnection from the installation so that operation with one selected compressor 4a, 4b, two compressors 4a, 4b simultaneously or none of compressors 4a, 4b is possible, at the same time from the other side a battery of compressors 4a, 4b is connected to the transfer manifold 6 operating with five gas caverns 7a, 7b, 7c, 7d, 7e connected to the manifold via shut-off valves 5f, 5g, 5h, 5i, 5j that allow for the connection of caverns 7a, 7b, 7c, 7d, 7e to the installation or disconnection of caverns from the installation and FCV valves 8a, 8b, 8c, 8d, 8e that control gas flow,
2) underground equipment - five gas caverns 7a, 7b, 7c, 7d, 7e, and
3) above-ground equipment for the measurement of gas parameters and its composition, and equipment for gas processing and treatment after being withdrawn from caverns 7a, 7b, 7c, 7d, 7e including a number of equipment connected to the transfer manifold 6 from one side, and to the battery of compressors 4a, 4b from the other side, including separator 9, FCV valve 8f that control total flow when compressors 4a, 4b are not in operation, heater 10 and glycol dehydrator 11, a battery of compressors 4a, 4b connected in parallel operating with five shut-off valves 5a, 5b, 5c, 5d, 5e, and gas measurement station 3, through which gas flows to the access point 1 to the gas pipeline.

Compressors 4a, 4b are two-stage centrifugal compressors with electric drive, equipped with coolers at the outlet of each stage. The compressors differ in terms of performance characteristics, capacity, operation areas - characteristics of individual devices are entered into the calculation module.
Gas storage facility is connected to one gas pipeline 12 via access point 1.
As shown in fig. 2, gas storage facility is controlled by means of an automatic control system 13 fitted with a communication server 14.

On a separate optimisation system server 15 there is a gas storage facility operation optimisation system 16 consisting of:

- management module 17,
- calculation module - optimiser 18,
- underground part simulation module 19,
- database 20,
- interface for the communication with the control system 21,

operated by means of a graphic user interface 22.

The connection of the interface for the communication with the control system 21 to the communication server 14 of the control system 13 allows data exchange between the control system 13 and the gas storage facility operation optimisation system 16. Two-way data flow is possible.

Example 4 shows optimisation of operation of the gas storage facility shown in fig. 35 during gas withdrawal from the gas storage facility.

At the start of the process of natural gas withdrawal from the gas storage facility in the gas storage facility operation optimisation system 16 located on the optimisation system server 15, the assumed/forecast gas storage facility operation input data in an assumed prediction horizon, i.e for the current gas day from 6:00 to 5:00 have been set, such as: external temperature, gas pressure in gas pipelines separately for each connection to the gas pipeline 12, temperature and composition of gas in the gas pipelines separately for each connection to the gas pipeline 12, prices of electrical energy and fuel gas, direction of gas flow and volume of gas flow at each connection to the gas pipeline 12, availability of caverns 7a, 7b, 7c, 7d, 7e and compressors 4a, 4b - it has been determined that all compressors 4a, 4b and caverns 7a, 7b, 7c, 7d, 7e are available and able to facilitate the nominated gas flow in every hour of the optimisation horizon, measurement data on the state of the gas storage facility, such as current gas flows, the composition and temperature of gas injected to the storage facility were acquired from the control system 13, which served for updating the state of the gas storage facility underground part model for the period from the last update up to present time - Table 31 in fig. 36 shows information on the following input data:

- nominated gas flow $V_h^{sum}$ ,
- gas temperature,
- pressure in the gas pipeline,
- electrical energy price;

Table 32 in fig. 37 shows the composition of gas, which is constant for the entire optimisation horizon;

Table 33 in fig. 38 shows the current state of key equipment at the start of the optimisation horizon.

Next, data updates were saved in the database 20 of the gas storage facility operation optimisation system 16 and by means of the calculation module 18 and the underground part simulation module 19:

- caverns 7a, 7b, 7c, 7d, 7e to be used were selected and gas flow was split between the used caverns 7a, 7b, 7c, 7d, 7e, however, at this step in case of gas withdrawal from the storage facility, caverns 7a, 7b, 7c, 7d, 7e sorted in order of decreasing pressure, in the subsequent hours h were allocated with the maximum flow capacity $V_{h,k}^{kaw\ max}$ until it is exhausted, i.e. until the flow capacity allocated to the caverns 7a, 7b, 7c, 7d, 7e in a given hour had reached the value of approved customer's nominations $V_h^{sum}$ or until cavern 7a, 7b, 7c, 7d, 7e had reached minimum pressure - Table 34 in fig. 39 shows allocation between caverns 7a, 7b, 7c, 7d, 7e in the subsequent hours of the optimisation horizon depending on the pressure in caverns (P [bar]);

- allocation of all used caverns 7a, 7b, 7c, 7d, 7e operating in a given hour to the transfer manifold 6 were specified - due to a single transfer manifold 6, all caverns 7a, 7b, 7c, 7d, 7e operating in a given hour h were allocated to the same manifold - Table 35 in fig. 40 shows allocation of caverns to the transfer manifold;
- allocation of compressors 4a, 4b to the gas pipeline 12 and manifold 6 were determined - due to the fact that pressure in the transfer manifold 6 was significantly higher than pressure in the gas pipeline 12, economically best connection is operation without compressors 4a, 4b, with open valve 5e to allow free flow between the transfer manifold 6 and access point 1 to the gas pipeline 12 and compressors 4a, 4b disconnected from the manifold 6 by means of valves 5a, 5b, 5c, 5d - Table 36 in fig. 41 shows the allocation of compressors to the transfer manifold and gas pipeline;
- due to the fact that the use of free flow between the manifold 6 and access point 1 to the gas pipeline 12 without the use of compressors 4a, 4b, optimal condition for the compressors 4a, 4b operation was to disconnect them - Table 37 in fig. 42 shows key calculation results in each hour of the optimisation horizon:

  - total cost of operation of compressors 4a, 4b, [€],
  - gas flow through individual compressors 4a, 4b (V [Nm3/h]),
  - operating modes of the compressors 4a, 4b (S = series, P = parallel),
  - rotation speed of the compressors 4a, 4b (RPM),

- cost of operation for individual compressors 4a, 4b [€];

- as a result of calculations performed in the previous steps, value vectors of all output variables that describe optimal parameters of gas storage facility equipment in the optimisation horizon were determined in the calculation module 18: optimal states of the shut-off valves 5a, 5b, 5c, 5d, 5e, 5f, 5g, 5h, 5i, 5j, flow setpoints for individual FCV valves 8a, 8b, 8c, 8d, 8e, setpoints for the flow and rotation speed of the compressors 4a, 4b, optimal operating modes of the compressors 4a, 4b, which were transmitted to the communication server 14 of the control system 13 via interface for the communication with the control system 21,
- based on the optimal results received from the gas storage facility operation optimisation system 16 and saved in the control system 13, optimal signals that control the change of the storage facility equipment operating parameters, such as the state of shut-off valves 5a, 5b, 5c,5d, 5e, 5f, 5g, 5h, 5i, 5j that select used caverns 7a, 7b, 7c, 7d, 7e and compressors 4a, 4b, flow setpoints for FCV valves 8a, 8b, 8c, 8d, 8e, setpoints for the flow through the compressors 4a, 4b and rotation speed of the compressors 4a, 4b, operating modes of the compressors 4a, 4b, were selected according to the structure of the storage facility installation and sent via the control system 13 - Table 38 in fig. 43 shows the optimal states of shut-off valves 5a, 5b, 5c,5d, 5e, 5f, 5g, 5h, 5i, 5j; Table 39 in fig. 44 shows flow setpoints for FCV valves 8a, 8b, 8c, 8d, 8e; Table 40 in fig. 45 shows setpoints for the flows, rotation speed and operating modes of the compressors 4a, 4b;
- the above operations were be repeated a number of times with a period not exceeding the calculation horizon.

Minimum operating costs associated with the consumption of electrical energy used to power the drives of the compressors 4a and 4b have been achieved and pressures in caverns 7a, 7b, 7c, 7d, 7e have been equalised as a result of an optimal schedule for the operation of equipment in the storage facility infrastructure.
Fig. 46 shows the diagram of algorithm for the selection of caverns, where the following denotations are adopted:

$h$ - hour number in the prediction,
$H$ - length of the optimisation horizon in hours,
$V_h^{sum}$ - sum of nominations in hour $h$ expressed in Nm3/h,
$V_h^{res}$ - part of the total of nomination in hour $h$ not allocated to the caverns yet (w Nm3/h),
$k$ - cavern number (label), e.g. 7a,

$V_{h,k}^{kaw\ max}$ - maximum flow to/from the cavern $k$ in hour $h$. For gas injection to the storage facility the symbol indicates maximum injection speed, for gas withdrawal from the cavern - maximum withdrawal speed (inm3/h),
$V_{h,k}^{kaw}$ - calculated flow to/from the cavern $k$ in hour $h$ (in Nm3/h).

Fig. 47 shows the diagram of algorithm for the allocation of caverns to the manifolds.
Fig. 48 shows the diagram of algorithm for the allocation of compressors to manifolds and gas pipelines.
Fig. 49 shows the diagram of algorithm for the optimisation of the battery of compressors operation, where the following denotations are adopted:

$h$ - hour number
$H$ - length of the optimisation horizon in hours
$N$ - number of compressors
$i$ - compressor number (label)
$m_{i,h}$ - compressor operating mode $i$ in hour $h$
$M_i$ - set of possible compressor operating modes $i$
$V_{i,h,m}^{min}$ - minimum gas flow through the compressor $i$ in mode $m$ for a given pressure, temperature, and gas composition from hour $h$ expressed for pressure and temperature conditions in hour $h$ at the suction side
$V_{i,h,m}^{max}$ - maximum gas flow through the compressor $i$ in mode $m$ for a given pressure, temperature, and gas composition from hour $h$ expressed for pressure and temperature conditions in hour $h$ at the suction side
$C_{i,h,m}^{work}(V)$ - cost of fuel during operation of the compressor $i$ in mode $m$ in hour $h$ as a function of gas flow $V$
$m_h^a$ - vector of the operating modes of all compressors in hour $h$
$M^a$ - set of possible vectors of all compressors operating modes
$V_h^{nom}$ - nominated gas flow to or from the storage facility in hour $h$ expressed for pressure and temperature conditions at the suction side
$V_{i,h,m}^{rec\ max}$ - maximum acceptable return flow for the compressor $i$ in hour $h$ in operating mode $m$
$\hat{V}_{h,m_h^a}$ - vector of optimal gas flows in hour $h$ for all compressors with operating modes $m_h^a$ expressed for pressure and temperature conditions at the suction side
$\hat{C}_{h,m_h^a}^{work}$ - minimum total cost of operation for all compressors in hour $h$ in operating modes specified by $m_h^a$

$\hat{S}_{m_{h-1}^a,h}$ - vector of operation modes of all compressors in hour $h$ minimising the cost of operation for the period from hour $h$ to the end of the horizon provided that in hour $h$-1 compressor operating modes were equal to $m_{h-1}^a$

$\hat{B}_{m_{h-1}^a,h}$ - minimum total cost of all compressors for the period from hour $h$ to the end of the horizon provided that in hour $h$-1 compressor operating modes were equal to $m_{h-1}^a$

$\hat{s}_h^a$ - optimal vector of compressor operating modes in hour $h$.

Fig. 50 shows the diagram of algorithm for the optimisation of the cascade of two compressor batteries operation, where the following denotations are adopted:

$h$ - hour number
$H$ - length of the optimisation horizon in hours
$m_h^a$ - vector of the operating modes of all compressors in hour $h$
$M^a$ - set of possible vectors of all compressors operating modes
$\hat{V}_{h,m_h^a}$ - vector of optimal has flows in hour $h$ for all compressors with operating modes $m_h^a$ expressed for pressure and temperature conditions at the suction side
$\hat{C}_{h,m_h^a}^{work}$ - minimum total cost of operation for all compressors in hour $h$ in operating modes specified by $m_h^a$
$\hat{P}_{h,m_h^a}^m$ - optimal pressure between the levels of the cascade in hour $h$ for compressors with operating modes specified by $m_h^a$
$\hat{S}_{m_{h-1}^a,h}$ - vector of operation modes of all compressors in hour $h$ minimising the cost of operation for the period from hour $h$ to the end of the horizon provided that in hour $h$-1 compressor operating modes were equal to $m_{h-1}^a$
$\hat{B}_{m_{h-1}^a,h}$ - minimum total cost of all compressors for the period from hour $h$ to the end of the horizon provided that in hour $h$-1 compressor operating modes were equal to $m_{h-1}^a$
$\hat{s}_h^a$ - optimal vector of compressor operating modes in hour $h$.

## Claims

1. The method for optimising the process of gas injection to and withdrawal from an underground gas storage facility connected to at least one gas pipeline, controlled by means of a control system, consisting of above-ground equipment for gas processing prior to being transferred to the storage facility, underground equipment and above-ground equipment for gas processing after withdrawal from the storage facility, where input parameters of the gas storage facility equipment are being changed, and by means of the control system signals that control the change of gas storage facility equipment parameters are transmitted, **characterised in that**:

- at the start of the process of gas injection to and withdrawal from the gas storage facility, in the gas storage facility operation optimisation system (16) located on the optimisation system server (15), the expected/forecast input data of the gas storage facility operation are being set in an assumed prediction horizon, such as external temperature, gas pressure in at least one gas pipeline (12, 12a, 12b) separately for each connection to the gas pipeline (12, 12a, 12b), for gas injection to the storage facility gas temperature and gas composition in at least one gas pipeline (12, 12a, 12b), separately for each connection to the gas pipeline (12, 12a, 12b), prices of electrical energy and fuel gas, the direction of gas flow and the gas flow volume at each connection to at least one gas pipeline (12, 12a, 12b), availability of at least one cavern (7a, 7b, 7c, 7d, 7e) and at least one compressor (4a, 4b, 4c), measurement data on gas storage facility state are acquired from the control system, such as current gas flows, gas composition, and the temperature of gas stored in the storage facility, based on which the gas storage facility underground part model state is being updated for the period from the last update up to present time, data updates are saved in the database (20) of the gas storage facility operation optimisation system (16), and by means of a calculation module (18) and the underground part simulation module (19):

- at least one used cavern (7a, 7b, 7c, 7d, 7e) is selected and gas flow $V_h^{sum}$ is split between caverns in use (7a, 7b, 7c, 7d, 7e), where at this stage for gas injection to the storage facility, in the next hours maximum flow is allocated to a cavern or caverns (7a, 7b, 7c, 7d, 7e) sorted in order of increasing pressure, until the flow is exhausted, i.e. until total flow allocated to the cavern or caverns (7a, 7b, 7c, 7d, 7e) at any given time reaches the approved customers' nominations $V_h^{sum}$ or until the caverns (7a, 7b, 7c, 7d, 7e) reaches maximum pressure, and, for gas withdrawal from the storage facility, sorting order shall be reverse, and minimum pressure in the cavern (7a, 7b, 7c, 7d, 7e) shall be observed instead of the maximum;
- the connections of each cavern in use (7a, 7b, 7c, 7d, 7e) shall be allocated to one of the transfer manifolds (6, 6a, 6b), and where gas storage facility has only one manifold (6a, 6b), all caverns (7a, 7b, 7c, 7d, 7e) used for gas flow in the subsequent hours are connected to this manifold (6, 6a, 6b), and where gas storage facility has two manifolds (6, 6a, 6b), this stage involves verification of different connections, starting from one cavern (7a, 7b, 7c, 7d, 7e) with the lowest pressure connected to the first manifold (6a), and other caverns (7a, 7b, 7c, 7d, 7e) connected to second manifold (6b), in subsequent options, cavern (7a, 7b, 7c, 7d, 7e) with the lowest pressure is each time reconnected from the second manifold (6b) to the first manifold (6a), until only one cavern (7a, 7b, 7c, 7d, 7e) is left in the second manifold (6b), for each option flows to individual manifolds (6, 6a, 6b), pressure in the manifold (6, 6a, 6b), and pressure drops on other above-ground devices connected between the compressors (4a, 4b, 4c) and manifolds (6, 6a, 6b) are calculated, which serves for the determination of pressure on each compressor (4a, 4b, 4c) and estimation of total work to be performed by compressors (4a, 4b, 4c) for isentropic compression, connection options which will provide the lowest expected work value shall be selected;
- the connections of each compressor (4a, 4b, 4c) shall be allocated to gas pipelines (12, 12a, 12b) and manifolds (6, 6a, 6b), where at this stage the use of a list of acceptable connections to gas pipelines (12, 12a, 12b) and manifolds (6, 6a, 6b) shall be assumed, which are grouped in the database (20) of the gas storage facility operation optimisation system (16) according to the priorities of a specific value, an item of group with higher priority shall be deemed more beneficial, and within one group an item providing better economic result shall be selected; when gas storage facility is connected to only one gas pipeline (12, 12a, 12b) and is equipped with only one transfer manifold (6, 6a, 6b), each compressor (4a, 4b, 4c) shall be connected to this gas pipeline (12, 12a, 12b) and this manifold (6, 6a, 6b);
- optimal operating parameters shall be determined for each compressor (4a, 4b, 4c) so that for a single battery of compressors (4a, 4b, 4c) the cost of operation of each compressor (4a, 4b, 4c) shall be determined according to gas flow for each operating mode the compressor (4a, 4b, 4c) may operate under given conditions, i.e. suction pressure, injection pressure, suction temperature, gas composition, where determination of the compressor (4a, 4b, 4c) operation cost includes two steps: determination of the minimum and maximum gas flow and dividing the range into a series of points, and for each point, i.e. flow, determination of the cost of fuel, then, gas flow shall be optimally split between the compressors (4a, 4b, 4c) for each possible set of operating modes of all compressors (4a, 4b, 4c) in the battery, operating modes of each compressor (4a, 4b, 4c) shall be selected for the time horizon, whereas for a cascade of two batteries of compressors (4a, 4b, 4c), an optimal pressure between the batteries of compressors (4a, 4b, 4c) shall be selected so that for each of the assessed pressures the cost of operation of each compressor (4a, 4b, 4c) shall be determined according to gas flow for each operating mode the particular compressor (4a, 4b, 4c) may operate under given conditions, i.e. suction pressure, injection pressure, suction temperature, gas composition, where determination of the compressor (4a, 4b, 4c) operation cost includes two steps: determination of the minimum and maximum gas flow and dividing the range into a series of points, and for each point, i.e. flow, determination of the cost of fuel, then, gas flow shall be optimally split between the compressors (4a, 4b, 4c) in the first battery of compressors (4a, 4b, 4c) for each possible set of operating modes of compressors (4a, 4b, 4c) from the first battery, and gas flow shall be optimally split between the compressors (4a, 4b, 4c) in the second battery of compressors (4a, 4b, 4c) for each possible set of operating modes of compressors (4a, 4b, 4c) from the second battery, optimal operating modes of compressors (4a, 4b, 4c) in the time horizon shall be selected;
- as a result of calculations performed in the previous steps, value vectors of all output variables that describe optimal parameters of gas storage facility equipment in the optimisation horizon shall be determined in the calculation module (18) of the gas storage facility operation optimisation system (16), i.e. states of the shut-off valves (5a, 5b, 5c, 5d, 5e, 5f, 5g, 5h, 5i, 5j, 5k, 5l, 5m, 5n, 5o, 5p, 5q, 5r, 5s, 5t, 5u, 5v, 5w, 5x, 5y, 5z), flow setpoints for individual FCV valves (8a, 8b, 8c, 8d, 8e), compressors (4a, 4b, 4c) flow and rotation speed setpoints, optimal compressors (4a, 4b, 4c) operating modes, and shall be transmitted to the control system (13) via the interface for the communication with the control system (21),

- based on optimal results received from the gas storage facility operation optimisation system (16) and saved in the control system (13), optimal signals that control the change of equipment operating parameters, which were selected depending on the structure of the storage facility installations from the following: the state of shut-off valves (5a, 5b, 5c, 5d, 5e, 5f, 5g, 5h, 5i, 5j, 5k, 51, 5m, 5n, 5o, 5p, 5q, 5r, 5s, 5t, 5u, 5v, 5w, 5x, 5y, 5z) selecting used caverns (7a, 7b, 7c, 7d, 7e) and compressors (4a, 4b, 4c), flow setpoints for FCV valves (8a, 8b, 8c, 8d, 8e, 8f, 8g), flow setpoints for the compressors (4a, 4b, 4c) used, operating modes of the compressors (4a, 4b, 4c) used, pressure values between compressor (4a, 4b, 4c) levels for compressors (4a, 4b, 4c) connected in cascade, shall be sent via the control system (13),

- the above operations shall be repeated with a period no longer than the calculation horizon.

Fig. 1

Fig. 2

| Hour h | Gas flow $V_h^{sum}$ [Nm3/h] | Gas temperature [°C] | Pressure in pipeline [bar] | Electric energy price [€/MWh] |
|---|---|---|---|---|
| 06:00 | 500000 | 20 | 68 | 120 |
| 07:00 | 500000 | 20 | 68 | 120 |
| 08:00 | 500000 | 20 | 68 | 120 |
| 09:00 | 500000 | 21 | 68 | 120 |
| 10:00 | 500000 | 21 | 68 | 120 |
| 11:00 | 500000 | 21 | 68 | 120 |
| 12:00 | 500000 | 22 | 68 | 120 |
| 13:00 | 500000 | 22 | 68 | 120 |
| 14:00 | 500000 | 23 | 68 | 120 |
| 15:00 | 500000 | 23 | 68 | 120 |
| 16:00 | 500000 | 22 | 68 | 120 |
| 17:00 | 500000 | 22 | 68 | 120 |
| 18:00 | 500000 | 21 | 68 | 120 |
| 19:00 | 500000 | 20 | 68 | 120 |
| 20:00 | 500000 | 20 | 68 | 120 |
| 21:00 | 500000 | 20 | 68 | 120 |
| 22:00 | 500000 | 19 | 68 | 120 |
| 23:00 | 500000 | 19 | 68 | 120 |
| 00:00 | 500000 | 18 | 68 | 120 |
| 01:00 | 500000 | 18 | 68 | 120 |
| 02:00 | 500000 | 18 | 68 | 120 |
| 03:00 | 500000 | 17 | 68 | 120 |
| 04:00 | 500000 | 17 | 68 | 120 |
| 05:00 | 500000 | 16 | 68 | 120 |

Table 1 - information on input data for Example 1.

Fig. 3

| No. | Name | Symbol | Concentration Mol [%] |
|---|---|---|---|
| 1 | Methane | $CH_4$ | 95,558 |
| 2 | Nitrogen | $N_2$ | 0,43 |
| 3 | Carbon dioxide | $CO_2$ | 0,544 |
| 4 | Ethane | $C_2H_6$ | 3,145 |
| 5 | propane | $C_3H_8$ | 0,217 |
| 6 | n-Butane | $n\text{-}C_4H_{10}$ | 0,029 |
| 7 | 2-methylpropane | $i\text{-}C_4H_{10}$ | 0,052 |
| 8 | n-Pentane | $n\text{-}C_5H_{12}$ | 0,005 |
| 9 | 2-methylbutane | $i\text{-}C_5H_{12}$ | 0,007 |
| 10 | n-Hexane | $n\text{-}C_6H_{14}$ | 0,012 |
| 11 | n-Heptane | $n\text{-}C_7H_{16}$ | 0 |
| 12 | n-octane | $n\text{-}C_8H_{18}$ | 0 |
| 13 | n-nonane | $n\text{-}C_9H_{20}$ | 0 |
| 14 | n-decane | $n\text{-}C_{10}H_{22}$ | 0 |
| 15 | Helium | He | 0 |
| 16 | Argon | Ar | 0 |
| 17 | Hydrogen | $H_2$ | 0 |
| 18 | Oxygen | $O_2$ | 0 |
| 19 | Carbon monoxide | CO | 0 |
| 20 | Water | $H_2O$ | 0 |
| 21 | Hydrogen sulphide | $H_2S$ | 0 |

Table 2 – gas composition in Example 1.

Fig. 4

| Cavern | Available storage space [Nm3] | Pressure [bar] |
|---|---|---|
| 7a | 9 200 000 | 168,94 |
| 7b | 1 600 000 | 167,83 |
| 7c | 12 000 000 | 161,76 |
| 7d | 8 400 000 | 168,25 |
| 7f | 11 800 000 | 164,56 |

| Compressor | State | Operating mode |
|---|---|---|
| 4a | Working | Series |
| 4b | Working | Series |

Table 3 - current state of key equipment at the start of optimisation horizon for Example 1.

Fig. 5

| Hour h | 7a P [bar] | 7a $V_{h,k}^{kaw}$ [Nm3/h] | 7b P [bar] | 7b $V_{h,k}^{kaw}$ [Nm3/h] | 7c P [bar] | 7c $V_{h,k}^{kaw}$ [Nm3/h] | 7d P [bar] | 7d $V_{h,k}^{kaw}$ [Nm3/h] | 7e P [bar] | 7e $V_{h,k}^{kaw}$ [Nm3/h] |
|---|---|---|---|---|---|---|---|---|---|---|
| 06:00 | 168,94 | 0 | 167,83 | 40 000 | 161,76 | 210 000 | 168,25 | 10 000 | 164,56 | 240 000 |
| 07:00 | 168,95 | 0 | 168,33 | 0 | 162,31 | 210 000 | 168,27 | 50 000 | 165,08 | 240 000 |
| 08:00 | 168,96 | 0 | 168,33 | 40 000 | 162,86 | 210 000 | 168,38 | 10 000 | 165,60 | 240 000 |
| 09:00 | 168,97 | 0 | 168,83 | 0 | 163,41 | 210 000 | 168,41 | 50 000 | 166,12 | 240 000 |
| 10:00 | 168,98 | 0 | 168,84 | 0 | 163,96 | 210 000 | 168,52 | 50 000 | 166,64 | 240 000 |
| 11:00 | 168,99 | 0 | 168,84 | 0 | 164,51 | 210 000 | 168,63 | 50 000 | 167,16 | 240 000 |
| 12:00 | 169,00 | 0 | 168,84 | 0 | 165,06 | 210 000 | 168,74 | 50 000 | 167,68 | 240 000 |
| 13:00 | 169,01 | 0 | 168,84 | 40 000 | 165,61 | 210 000 | 168,85 | 10 000 | 168,20 | 240 000 |
| 14:00 | 169,02 | 0 | 169,34 | 0 | 166,16 | 210 000 | 168,87 | 50 000 | 168,72 | 240 000 |
| 15:00 | 169,02 | 60 000 | 169,34 | 0 | 166,71 | 210 000 | 168,98 | 230 000 | 169,25 | 0 |
| 16:00 | 169,15 | 250 000 | 169,35 | 0 | 167,26 | 210 000 | 169,50 | 0 | 169,25 | 40 000 |
| 17:00 | 169,70 | 0 | 169,35 | 40 000 | 167,81 | 210 000 | 169,50 | 10 000 | 169,34 | 240 000 |
| 18:00 | 169,70 | 60 000 | 169,85 | 0 | 168,36 | 210 000 | 169,52 | 230 000 | 169,87 | 0 |
| 19:00 | 169,83 | 250 000 | 169,85 | 40 000 | 168,91 | 210 000 | 170,04 | 0 | 169,88 | 0 |
| 20:00 | 170,38 | 0 | 170,35 | 0 | 169,46 | 210 000 | 170,04 | 50 000 | 169,88 | 240 000 |
| 21:00 | 170,38 | 20 000 | 170,35 | 40 000 | 170,01 | 210 000 | 170,15 | 230 000 | 170,41 | 0 |
| 22:00 | 170,42 | 250 000 | 170,85 | 0 | 170,56 | 10 000 | 170,67 | 0 | 170,41 | 240 000 |
| 23:00 | 170,97 | 0 | 170,85 | 40 000 | 170,59 | 210 000 | 170,67 | 230 000 | 170,93 | 20 000 |
| 00:00 | 170,97 | 250 000 | 171,35 | 0 | 171,14 | 10 000 | 171,19 | 0 | 170,97 | 240 000 |
| 01:00 | 171,52 | 0 | 171,35 | 40 000 | 171,16 | 210 000 | 171,19 | 230 000 | 171,49 | 20 000 |
| 02:00 | 171,52 | 250 000 | 171,86 | 0 | 171,72 | 0 | 171,70 | 10 000 | 171,53 | 240 000 |
| 03:00 | 172,06 | 20 000 | 171,86 | 40 000 | 171,72 | 210 000 | 171,73 | 230 000 | 172,06 | 0 |
| 04:00 | 172,11 | 250 000 | 172,36 | 0 | 172,28 | 0 | 172,24 | 10 000 | 172,06 | 240 000 |
| 05:00 | 172,66 | 0 | 172,36 | 40 000 | 172,28 | 210 000 | 172,26 | 230 000 | 172,58 | 20 000 |

Table 4 - gas flow split between caverns in the following hours of the optimisation horizon depending on the pressure in caverns (P [bar]) for Example 1.

Fig. 6

| Hour h | Caverns 7a, 7b, 7c, 7d, 7e | | | | |
|---|---|---|---|---|---|
| | **7a** | **7b** | **7c** | **7d** | **7e** |
| **06:00** | - | Manifold 6 | Manifold 6 | Manifold 6 | Manifold 6 |
| **07:00** | - | - | Manifold 6 | Manifold 6 | Manifold 6 |
| **08:00** | - | Manifold 6 | Manifold 6 | Manifold 6 | Manifold 6 |
| **09:00** | - | - | Manifold 6 | Manifold 6 | Manifold 6 |
| **10:00** | - | - | Manifold 6 | Manifold 6 | Manifold 6 |
| **11:00** | - | - | Manifold 6 | Manifold 6 | Manifold 6 |
| **12:00** | - | - | Manifold 6 | Manifold 6 | Manifold 6 |
| **13:00** | - | Manifold 6 | Manifold 6 | Manifold 6 | Manifold 6 |
| **14:00** | - | - | Manifold 6 | Manifold 6 | Manifold 6 |
| **15:00** | Manifold 6 | - | Manifold 6 | Manifold 6 | - |
| **16:00** | Manifold 6 | - | Manifold 6 | - | Manifold 6 |
| **17:00** | - | Manifold 6 | Manifold 6 | Manifold 6 | Manifold 6 |
| **18:00** | Manifold 6 | - | Manifold 6 | Manifold 6 | - |
| **19:00** | Manifold 6 | Manifold 6 | Manifold 6 | - | - |
| **20:00** | - | - | Manifold 6 | Manifold 6 | Manifold 6 |
| **21:00** | Manifold 6 | Manifold 6 | Manifold 6 | Manifold 6 | - |
| **22:00** | Manifold 6 | - | Manifold 6 | - | Manifold 6 |
| **23:00** | - | Manifold 6 | Manifold 6 | Manifold 6 | Manifold 6 |
| **00:00** | Manifold 6 | - | Manifold 6 | - | Manifold 6 |
| **01:00** | - | Manifold 6 | Manifold 6 | Manifold 6 | Manifold 6 |
| **02:00** | Manifold 6 | - | - | Manifold 6 | Manifold 6 |
| **03:00** | Manifold 6 | Manifold 6 | Manifold 6 | Manifold 6 | - |
| **04:00** | Manifold 6 | - | - | Manifold 6 | Manifold 6 |
| **05:00** | - | Manifold 6 | Manifold 6 | Manifold 6 | Manifold 6 |

Table 5 - caverns 7a, 7b, 7c, 7d, 7e allocation to the transfer manifold for Example 1.

Fig. 7

| | Compressor 4a | | Compressor 4b | |
|---|---|---|---|---|
| Hour h | Pipeline access point | Manifold | Pipeline access point | Manifold |
| 06:00 | 1 | 6 | 1 | 6 |
| 07:00 | 1 | 6 | 1 | 6 |
| 08:00 | 1 | 6 | 1 | 6 |
| 09:00 | 1 | 6 | 1 | 6 |
| 10:00 | 1 | 6 | 1 | 6 |
| 11:00 | 1 | 6 | 1 | 6 |
| 12:00 | 1 | 6 | 1 | 6 |
| 13:00 | 1 | 6 | 1 | 6 |
| 14:00 | 1 | 6 | 1 | 6 |
| 15:00 | 1 | 6 | 1 | 6 |
| 16:00 | 1 | 6 | 1 | 6 |
| 17:00 | 1 | 6 | 1 | 6 |
| 18:00 | 1 | 6 | 1 | 6 |
| 19:00 | 1 | 6 | 1 | 6 |
| 20:00 | 1 | 6 | 1 | 6 |
| 21:00 | 1 | 6 | 1 | 6 |
| 22:00 | 1 | 6 | 1 | 6 |
| 23:00 | 1 | 6 | 1 | 6 |
| 00:00 | 1 | 6 | 1 | 6 |
| 01:00 | 1 | 6 | 1 | 6 |
| 02:00 | 1 | 6 | 1 | 6 |
| 03:00 | 1 | 6 | 1 | 6 |
| 04:00 | 1 | 6 | 1 | 6 |
| 05:00 | 1 | 6 | 1 | 6 |

Table 6 - compressors allocation to the transfer manifold and gas pipeline for Example 1.

Fig. 8

| Hour h | Cost [€] | 4a | | | | 4b | | | |
|---|---|---|---|---|---|---|---|---|---|
| | | V [Nm3/h] | Mode | RPM | Cost [€] | V [Nm3/h] | Mode | RPM | Cost [€] |
| 06:00 | 2 267,54 | 357067 | S | 8802 | 1 588,15 | 142933 | S | 11139 | 679,38 |
| 07:00 | 2 267,54 | 357067 | S | 8802 | 1 588,15 | 142933 | S | 11139 | 679,38 |
| 08:00 | 2 268,82 | 357060 | S | 8804 | 1 589,01 | 142940 | S | 11142 | 679,81 |
| 09:00 | 2 276,71 | 357376 | S | 8825 | 1 596,17 | 142624 | S | 11158 | 680,55 |
| 10:00 | 2 278,01 | 357364 | S | 8826 | 1 597,00 | 142636 | S | 11160 | 681,00 |
| 11:00 | 2 279,30 | 357358 | S | 8828 | 1 597,86 | 142642 | S | 11163 | 681,44 |
| 12:00 | 2 287,09 | 357619 | S | 8849 | 1 604,65 | 142381 | S | 11180 | 682,44 |
| 13:00 | 2 288,39 | 357611 | S | 8850 | 1 605,50 | 142389 | S | 11182 | 682,89 |
| 14:00 | 2 294,75 | 357849 | S | 8868 | 1 611,18 | 142151 | S | 11198 | 683,56 |
| 15:00 | 2 297,34 | 357819 | S | 8872 | 1 612,81 | 142181 | S | 11203 | 684,52 |
| 16:00 | 2 293,57 | 357578 | S | 8857 | 1 608,90 | 142422 | S | 11191 | 684,67 |
| 17:00 | 2 297,45 | 357571 | S | 8863 | 1 611,53 | 142429 | S | 11198 | 685,92 |
| 18:00 | 2 293,55 | 357290 | S | 8848 | 1 607,32 | 142710 | S | 11187 | 686,23 |
| 19:00 | 2 288,21 | 356951 | S | 8830 | 1 601,83 | 143049 | S | 11175 | 686,38 |
| 20:00 | 2 290,79 | 356936 | S | 8834 | 1 603,52 | 143064 | S | 11179 | 687,27 |
| 21:00 | 2 294,66 | 356912 | S | 8839 | 1 606,06 | 143088 | S | 11186 | 688,60 |
| 22:00 | 2 290,55 | 356534 | S | 8823 | 1 601,23 | 143466 | S | 11176 | 689,32 |
| 23:00 | 2 295,70 | 356498 | S | 8830 | 1 604,59 | 143502 | S | 11185 | 691,11 |
| 00:00 | 2 291,73 | 356595 | S | 8817 | 1 602,26 | 143405 | S | 11166 | 689,47 |
| 01:00 | 2 296,86 | 356558 | S | 8824 | 1 605,60 | 143442 | S | 11174 | 691,26 |
| 02:00 | 2 299,43 | 356545 | S | 8828 | 1 607,30 | 143455 | S | 11179 | 692,13 |
| 03:00 | 2 296,56 | 357721 | S | 8823 | 1 611,05 | 142279 | S | 11137 | 685,51 |
| 04:00 | 2 299,11 | 357709 | S | 8827 | 1 612,75 | 142291 | S | 11142 | 686,37 |
| 05:00 | 2 296,27 | 358914 | S | 8822 | 1 616,57 | 141086 | S | 11102 | 679,71 |
| Total | 54 929,93 | | | | 38 490,99 | | | | 16 438,92 |

Table 7 - key results of calculations in the hours of the optimisation horizon for Example 1.

Fig. 9

| Hour h | 5a state | 5b state | 5c state | 5d state | 5e state | 5f state | 5g state | 5h state | 5i state | 5j state |
|---|---|---|---|---|---|---|---|---|---|---|
| 06:00 | O | O | O | O | C | C | O | O | O | O |
| 07:00 | O | O | O | O | C | C | C | O | O | O |
| 08:00 | O | O | O | O | C | C | O | O | O | O |
| 09:00 | O | O | O | O | C | C | C | O | O | O |
| 10:00 | O | O | O | O | C | C | C | O | O | O |
| 11:00 | O | O | O | O | C | C | C | O | O | O |
| 12:00 | O | O | O | O | C | C | C | O | O | O |
| 13:00 | O | O | O | O | C | C | O | O | O | O |
| 14:00 | O | O | O | O | C | C | C | O | O | O |
| 15:00 | O | O | O | O | C | O | C | O | O | C |
| 16:00 | O | O | O | O | C | O | C | O | C | O |
| 17:00 | O | O | O | O | C | C | O | O | O | O |
| 18:00 | O | O | O | O | C | O | C | O | O | C |
| 19:00 | O | O | O | O | C | O | O | O | C | C |
| 20:00 | O | O | O | O | C | C | C | O | O | O |
| 21:00 | O | O | O | O | C | O | O | O | O | C |
| 22:00 | O | O | O | O | C | O | C | O | C | O |
| 23:00 | O | O | O | O | C | C | O | O | O | O |
| 00:00 | O | O | O | O | C | O | C | O | C | O |
| 01:00 | O | O | O | O | C | C | O | O | O | O |
| 02:00 | O | O | O | O | C | O | C | C | O | O |
| 03:00 | O | O | O | O | C | O | O | O | O | C |
| 04:00 | O | O | O | O | C | O | C | C | O | O |
| 05:00 | O | O | O | O | C | C | O | O | O | O |

Table 8 - optimal states of the shut-off valves 5a, 5b, 5c ,5d, 5e, 5f, 5g, 5h, 5i, 5j for Example 1 (O = open, C = closed).

Fig. 10

| Hour h | 8a<br>V [Nm3/h] | 8b<br>V [Nm3/h] | 8c<br>V [Nm3/h] | 8d<br>V [Nm3/h] | 8e<br>V [Nm3/h] |
|---|---|---|---|---|---|
| 06:00 | 0 | 40 000 | 210 000 | 10 000 | 240 000 |
| 07:00 | 0 | 0 | 210 000 | 50 000 | 240 000 |
| 08:00 | 0 | 40 000 | 210 000 | 10 000 | 240 000 |
| 09:00 | 0 | 0 | 210 000 | 50 000 | 240 000 |
| 10:00 | 0 | 0 | 210 000 | 50 000 | 240 000 |
| 11:00 | 0 | 0 | 210 000 | 50 000 | 240 000 |
| 12:00 | 0 | 0 | 210 000 | 50 000 | 240 000 |
| 13:00 | 0 | 40 000 | 210 000 | 10 000 | 240 000 |
| 14:00 | 0 | 0 | 210 000 | 50 000 | 240 000 |
| 15:00 | 60000 | 0 | 210 000 | 230 000 | 0 |
| 16:00 | 250000 | 0 | 210 000 | 0 | 40 000 |
| 17:00 | 0 | 40 000 | 210 000 | 10 000 | 240 000 |
| 18:00 | 60000 | 0 | 210 000 | 230 000 | 0 |
| 19:00 | 250000 | 40 000 | 210 000 | 0 | 0 |
| 20:00 | 0 | 0 | 210 000 | 50 000 | 240 000 |
| 21:00 | 20000 | 40 000 | 210 000 | 230 000 | 0 |
| 22:00 | 250000 | 0 | 10 000 | 0 | 240 000 |
| 23:00 | 0 | 40 000 | 210 000 | 230 000 | 20 000 |
| 00:00 | 250000 | 0 | 10 000 | 0 | 240 000 |
| 01:00 | 0 | 40 000 | 210 000 | 230 000 | 20 000 |
| 02:00 | 250000 | 0 | 0 | 10 000 | 240 000 |
| 03:00 | 20000 | 40 000 | 210 000 | 230 000 | 0 |
| 04:00 | 250000 | 0 | 0 | 10 000 | 240 000 |
| 05:00 | 0 | 40 000 | 210 000 | 230 000 | 20 000 |

Table 9 - flow setpoints for FCV valves 8a, 8b, 8c, 8d, 8e for Example 1.

Fig. 11

| Hour h | 4a | | | 4b | | |
|---|---|---|---|---|---|---|
| | V [Nm3/h] | RPM | Mode | V [Nm3/h] | RPM | Mode |
| 06:00 | 357067 | 8 802 | Series | 142933 | 11 139 | Series |
| 07:00 | 357067 | 8 802 | Series | 142933 | 11 139 | Series |
| 08:00 | 357060 | 8 804 | Series | 142940 | 11 142 | Series |
| 09:00 | 357376 | 8 825 | Series | 142624 | 11 158 | Series |
| 10:00 | 357364 | 8 826 | Series | 142636 | 11 160 | Series |
| 11:00 | 357358 | 8 828 | Series | 142642 | 11 163 | Series |
| 12:00 | 357619 | 8 849 | Series | 142381 | 11 180 | Series |
| 13:00 | 357611 | 8 850 | Series | 142389 | 11 182 | Series |
| 14:00 | 357849 | 8 868 | Series | 142151 | 11 198 | Series |
| 15:00 | 357819 | 8 872 | Series | 142181 | 11 203 | Series |
| 16:00 | 357578 | 8 857 | Series | 142422 | 11 191 | Series |
| 17:00 | 357571 | 8 863 | Series | 142429 | 11 198 | Series |
| 18:00 | 357290 | 8 848 | Series | 142710 | 11 187 | Series |
| 19:00 | 356951 | 8 830 | Series | 143049 | 11 175 | Series |
| 20:00 | 356936 | 8 834 | Series | 143064 | 11 179 | Series |
| 21:00 | 356912 | 8 839 | Series | 143088 | 11 186 | Series |
| 22:00 | 356534 | 8 823 | Series | 143466 | 11 176 | Series |
| 23:00 | 356498 | 8 830 | Series | 143502 | 11 185 | Series |
| 00:00 | 356595 | 8 817 | Series | 143405 | 11 166 | Series |
| 01:00 | 356558 | 8 824 | Series | 143442 | 11 174 | Series |
| 02:00 | 356545 | 8 828 | Series | 143455 | 11 179 | Series |
| 03:00 | 357721 | 8 823 | Series | 142279 | 11 137 | Series |
| 04:00 | 357709 | 8 827 | Series | 142291 | 11 142 | Series |
| 05:00 | 358914 | 8 822 | Series | 141086 | 11 102 | Series |

Table 10 - flow setpoints, rotation speed setpoints and operating modes of compressors 4a, 4b for Example 1.

Fig. 12

Fig. 13

| Hour h | Gas flow $V_h^{sum}$ [Nm3/h] | Gas temp. [°C] | Pressure in pipeline [bar] | Ambient temp. [°C] | Fuel gas price [€/MWh] | El. energy price [€/MWh] |
|---|---|---|---|---|---|---|
| 06:00 | 500000 | 8,5 | 78,5 | 13 | 20 | 120 |
| 07:00 | 500000 | 8,5 | 78,5 | 13,5 | 20 | 120 |
| 08:00 | 500000 | 8,5 | 78,5 | 14 | 20 | 120 |
| 09:00 | 500000 | 8,5 | 78,5 | 14,5 | 20 | 120 |
| 10:00 | 500000 | 8,5 | 78,5 | 15 | 20 | 120 |
| 11:00 | 500000 | 8,5 | 78,5 | 15,5 | 20 | 120 |
| 12:00 | 500000 | 8,5 | 78,5 | 16 | 20 | 120 |
| 13:00 | 500000 | 8,5 | 78,5 | 16,5 | 20 | 120 |
| 14:00 | 450000 | 8,5 | 78,5 | 17 | 20 | 120 |
| 15:00 | 450000 | 8,5 | 78,5 | 17,5 | 20 | 120 |
| 16:00 | 450000 | 8,5 | 78,5 | 18 | 20 | 120 |
| 17:00 | 450000 | 8,5 | 78,5 | 17,5 | 20 | 120 |
| 18:00 | 450000 | 8,5 | 78,5 | 17 | 20 | 120 |
| 19:00 | 400000 | 8,5 | 78,5 | 16,5 | 20 | 120 |
| 20:00 | 400000 | 8,5 | 78,5 | 16 | 20 | 120 |
| 21:00 | 400000 | 8,5 | 78,5 | 15,5 | 20 | 120 |
| 22:00 | 400000 | 8,5 | 78,5 | 15 | 20 | 120 |
| 23:00 | 400000 | 8,5 | 78,5 | 14,5 | 20 | 120 |
| 00:00 | 400000 | 8,5 | 78,5 | 14 | 20 | 120 |
| 01:00 | 400000 | 8,5 | 78,5 | 13,5 | 20 | 120 |
| 02:00 | 400000 | 8,5 | 78,5 | 13 | 20 | 120 |
| 03:00 | 400000 | 8,5 | 78,5 | 12,5 | 20 | 120 |
| 04:00 | 400000 | 8,5 | 78,5 | 12 | 20 | 120 |
| 05:00 | 400000 | 8,5 | 78,5 | 11,5 | 20 | 120 |

Table 11 - information on input data for Example 2.

Fig. 14

| No. | Name | Symbol | Concentration Mol [%] |
|---|---|---|---|
| 1 | Methane | $CH_4$ | 95,558 |
| 2 | Nitrogen | $N_2$ | 0,43 |
| 3 | Carbon dioxide | $CO_2$ | 0,544 |
| 4 | Ethane | $C_2H_6$ | 3,145 |
| 5 | propane | $C_3H_8$ | 0,217 |
| 6 | n-Butane | $n-C_4H_{10}$ | 0,029 |
| 7 | 2-methylpropane | $i-C_4H_{10}$ | 0,052 |
| 8 | n-Pentane | $n-C_5H_{12}$ | 0,005 |
| 9 | 2-methylbutane | $i-C_5H_{12}$ | 0,007 |
| 10 | n-Hexane | $n-C_6H_{14}$ | 0,012 |
| 11 | n-Heptane | $n-C_7H_{16}$ | 0 |
| 12 | n-octane | $n-C_8H_{18}$ | 0 |
| 13 | n-nonane | $n-C_9H_{20}$ | 0 |
| 14 | n-decane | $n-C_{10}H_{22}$ | 0 |
| 15 | Helium | He | 0 |
| 16 | Argon | Ar | 0 |
| 17 | Hydrogen | $H_2$ | 0 |
| 18 | Oxygen | $O_2$ | 0 |
| 19 | Carbon monoxide | CO | 0 |
| 20 | Water | $H_2O$ | 0 |
| 21 | Hydrogen sulphide | $H_2S$ | 0 |

Table 12 – gas composition in Example 2.

Fig. 15

| Cavern | Available storage space [Nm3] | Pressure [bar] |
|---|---|---|
| 7a | 5 500 000 | 230,61 |
| 7b | 1 000 000 | 229,50 |
| 7c | 7 200 000 | 223,43 |
| 7d | 5 100 000 | 229,92 |
| 7f | 6 300 000 | 226,23 |

| Compressor | State | Operating mode |
|---|---|---|
| 4a | Working | Series |
| 4b | Working | Series |
| 4c | Working | - |

Table 13 - current state of key equipment at the start of optimisation horizon for Example 2.

Fig. 16

| Hour h | 7a | | 7b | | 7c | | 7d | | 7e | |
|---|---|---|---|---|---|---|---|---|---|---|
| | P [bar] | $V_{h,k}^{kaw}$ [Nm3/h] | P [bar] | $V_{h,k}^{kaw}$ [Nm3/h] | P [bar] | $V_{h,k}^{kaw}$ [Nm3/h] | P [bar] | $V_{h,k}^{kaw}$ [Nm3/h] | P [bar] | $V_{h,k}^{kaw}$ [Nm3/h] |
| 06:00 | 230,61 | 0 | 229,50 | 40 000 | 223,43 | 210 000 | 229,92 | 10 000 | 226,23 | 240 000 |
| 07:00 | 230,62 | 0 | 230,00 | 0 | 223,98 | 210 000 | 229,94 | 50 000 | 226,75 | 240 000 |
| 08:00 | 230,63 | 0 | 230,00 | 40 000 | 224,53 | 210 000 | 230,05 | 10 000 | 227,27 | 240 000 |
| 09:00 | 230,64 | 0 | 230,50 | 0 | 225,08 | 210 000 | 230,08 | 50 000 | 227,79 | 240 000 |
| 10:00 | 230,65 | 0 | 230,51 | 0 | 225,63 | 210 000 | 230,19 | 50 000 | 228,31 | 240 000 |
| 11:00 | 230,66 | 0 | 230,51 | 0 | 226,18 | 210 000 | 230,30 | 50 000 | 228,83 | 240 000 |
| 12:00 | 230,67 | 0 | 230,51 | 0 | 226,73 | 210 000 | 230,41 | 50 000 | 229,35 | 240 000 |
| 13:00 | 230,68 | 0 | 230,51 | 40 000 | 227,28 | 210 000 | 230,52 | 10 000 | 229,87 | 240 000 |
| 14:00 | 230,69 | 0 | 231,01 | 0 | 227,83 | 210 000 | 230,55 | 0 | 230,39 | 240 000 |
| 15:00 | 230,69 | 10 000 | 231,01 | 0 | 228,38 | 210 000 | 230,55 | 230 000 | 230,92 | 0 |
| 16:00 | 230,71 | 240 000 | 231,02 | 0 | 228,93 | 210 000 | 231,07 | 0 | 230,93 | 0 |
| 17:00 | 231,24 | 0 | 231,02 | 0 | 229,48 | 210 000 | 231,08 | 0 | 230,93 | 240 000 |
| 18:00 | 231,25 | 0 | 231,02 | 10 000 | 230,03 | 210 000 | 231,08 | 230 000 | 231,46 | 0 |
| 19:00 | 231,25 | 150 000 | 231,14 | 40 000 | 230,58 | 210 000 | 231,60 | 0 | 231,47 | 0 |
| 20:00 | 231,58 | 250 000 | 231,65 | 0 | 231,13 | 210 000 | 231,61 | 0 | 231,47 | 190 000 |
| 21:00 | 231,58 | 0 | 231,65 | 0 | 231,69 | 0 | 231,61 | 150 000 | 231,89 | 0 |
| 22:00 | 232,13 | 170 000 | 231,65 | 40 000 | 231,69 | 210 000 | 231,95 | 0 | 231,89 | 150 000 |
| 23:00 | 232,13 | 0 | 232,15 | 0 | 232,25 | 0 | 231,95 | 230 000 | 232,23 | 0 |
| 00:00 | 232,51 | 170 000 | 232,15 | 40 000 | 232,25 | 120 000 | 232,47 | 0 | 232,23 | 240 000 |
| 01:00 | 232,51 | 0 | 232,65 | 0 | 232,57 | 0 | 232,47 | 230 000 | 232,76 | 0 |
| 02:00 | 232,89 | 250 000 | 232,65 | 40 000 | 232,57 | 210 000 | 232,99 | 0 | 232,76 | 150 000 |
| 03:00 | 232,89 | 0 | 233,15 | 0 | 233,13 | 0 | 232,99 | 150 000 | 233,09 | 0 |
| 04:00 | 233,44 | 250 000 | 233,16 | 0 | 233,13 | 160 000 | 233,34 | 0 | 233,09 | 240 000 |
| 05:00 | 233,44 | 130000 | 233,16 | 40 000 | 233,56 | 0 | 233,34 | 230 000 | 233,62 | 0 |

Table 14 - gas flow split between caverns in the following hours of the optimisation horizon depending on the pressure in caverns (P [bar]) for Example 2.

Fig. 17

| Hour h | Caverns 7a, 7b, 7c, 7d, 7e | | | | |
|--------|------------|------------|------------|------------|------------|
|        | 7a | 7b | 7c | 7d | 7e |
| 06:00 | - | Manifold 6 | Manifold 6 | Manifold 6 | Manifold 6 |
| 07:00 | - | - | Manifold 6 | Manifold 6 | Manifold 6 |
| 08:00 | - | Manifold 6 | Manifold 6 | Manifold 6 | Manifold 6 |
| 09:00 | - | - | Manifold 6 | Manifold 6 | Manifold 6 |
| 10:00 | - | - | Manifold 6 | Manifold 6 | Manifold 6 |
| 11:00 | - | - | Manifold 6 | Manifold 6 | Manifold 6 |
| 12:00 | - | - | Manifold 6 | Manifold 6 | Manifold 6 |
| 13:00 | - | Manifold 6 | Manifold 6 | Manifold 6 | Manifold 6 |
| 14:00 | - | - | Manifold 6 | - | Manifold 6 |
| 15:00 | Manifold 6 | - | Manifold 6 | Manifold 6 | - |
| 16:00 | Manifold 6 | - | Manifold 6 | - | - |
| 17:00 | - | - | Manifold 6 | - | Manifold 6 |
| 18:00 | - | Manifold 6 | Manifold 6 | Manifold 6 | - |
| 19:00 | Manifold 6 | Manifold 6 | Manifold 6 | - | - |
| 20:00 | - | - | Manifold 6 | - | Manifold 6 |
| 21:00 | Manifold 6 | - | - | Manifold 6 | - |
| 22:00 | - | Manifold 6 | Manifold 6 | - | Manifold 6 |
| 23:00 | Manifold 6 | - | - | Manifold 6 | - |
| 00:00 | - | Manifold 6 | Manifold 6 | - | Manifold 6 |
| 01:00 | Manifold 6 | - | - | Manifold 6 | - |
| 02:00 | - | Manifold 6 | Manifold 6 | - | Manifold 6 |
| 03:00 | Manifold 6 | - | - | Manifold 6 | - |
| 04:00 | - | - | Manifold 6 | - | Manifold 6 |
| 05:00 | Manifold 6 | Manifold 6 | - | Manifold 6 | - |

Table 15 - caverns 7a, 7b, 7c, 7d, 7e allocation to the transfer manifold for Example 2.

Fig. 18

| Hour h | First stage of cascade | | | | Second stage of cascade | |
| | Compressor 4a | | Compressor 4b | | Compressor 4c | |
| | Pipeline access point | Manifold | Pipeline access point | Manifold | Pipeline access point | Manifold |
|---|---|---|---|---|---|---|
| 06:00 | 1 | - | 1 | - | - | 6 |
| 07:00 | 1 | - | 1 | - | - | 6 |
| 08:00 | 1 | - | 1 | - | - | 6 |
| 09:00 | 1 | - | 1 | - | - | 6 |
| 10:00 | 1 | - | 1 | - | - | 6 |
| 11:00 | 1 | - | 1 | - | - | 6 |
| 12:00 | 1 | - | 1 | - | - | 6 |
| 13:00 | 1 | - | 1 | - | - | 6 |
| 14:00 | 1 | - | 1 | - | - | 6 |
| 15:00 | 1 | - | 1 | - | - | 6 |
| 16:00 | 1 | - | 1 | - | - | 6 |
| 17:00 | 1 | - | 1 | - | - | 6 |
| 18:00 | 1 | - | 1 | - | - | 6 |
| 19:00 | 1 | - | 1 | - | - | 6 |
| 20:00 | 1 | - | 1 | - | - | 6 |
| 21:00 | 1 | - | 1 | - | - | 6 |
| 22:00 | 1 | - | 1 | - | - | 6 |
| 23:00 | 1 | - | 1 | - | - | 6 |
| 00:00 | 1 | - | 1 | - | - | 6 |
| 01:00 | 1 | - | 1 | - | - | 6 |
| 02:00 | 1 | - | 1 | - | - | 6 |
| 03:00 | 1 | - | 1 | - | - | 6 |
| 04:00 | 1 | - | 1 | - | - | 6 |
| 05:00 | 1 | - | 1 | - | - | 6 |

Table 16 - compressors allocation to the transfer manifold and gas pipeline for Example 2.

Fig. 19

| Hour h | Cost [€] | 4a V [Nm3/h] | 4a Mode | 4a RPM | 4a Cost [€] | 4b V [Nm3/h] | 4b Mode | 4b RPM | 4b Cost [€] | 4c V [Nm3/h] | 4c Mode | 4c RPM | 4c Cost [€] |
|---|---|---|---|---|---|---|---|---|---|---|---|---|---|
| 06:00 | 2 252,05 | 256531 | S | 10470 | 728,44 | 243469 | S | 10234 | 755,77 | 500000 | - | 8777 | 767,84 |
| 07:00 | 2 252,05 | 256531 | S | 10470 | 728,44 | 243469 | S | 10234 | 755,77 | 500000 | - | 8777 | 767,84 |
| 08:00 | 2 252,95 | 256531 | S | 10470 | 728,44 | 243469 | S | 10234 | 755,77 | 500000 | - | 8782 | 768,74 |
| 09:00 | 2 255,64 | 256895 | S | 10470 | 728,44 | 243105 | S | 10223 | 754,31 | 500000 | - | 8807 | 772,88 |
| 10:00 | 2 259,28 | 257259 | S | 10470 | 728,44 | 242741 | S | 10212 | 752,86 | 500000 | - | 8837 | 777,97 |
| 11:00 | 2 267,84 | 257290 | S | 10455 | 726,32 | 242710 | S | 10198 | 751,55 | 500000 | - | 8908 | 789,97 |
| 12:00 | 2 275,69 | 257322 | S | 10441 | 724,18 | 242678 | S | 10185 | 750,25 | 500000 | - | 8974 | 801,26 |
| 13:00 | 2 283,73 | 257356 | S | 10426 | 722,04 | 242644 | S | 10172 | 748,95 | 500000 | - | 9040 | 812,74 |
| 14:00 | 1 978,56 | 237657 | S | 10428 | 718,79 | 212343 | S | 9970 | 702,73 | 450000 | - | 7519 | 557,04 |
| 15:00 | 1 979,78 | 236472 | S | 10414 | 716,61 | 213528 | S | 9990 | 705,75 | 450000 | - | 7519 | 557,42 |
| 16:00 | 1 979,90 | 235503 | S | 10399 | 714,46 | 214497 | S | 10004 | 708,02 | 450000 | - | 7519 | 557,42 |
| 17:00 | 1 980,58 | 236308 | S | 10414 | 716,59 | 213692 | S | 9995 | 706,35 | 450000 | - | 7519 | 557,64 |
| 18:00 | 1 980,95 | 237201 | S | 10429 | 718,73 | 212799 | S | 9983 | 704,37 | 450000 | - | 7520 | 557,84 |
| 19:00 | 3 030,27 | 0 | S | 0 | 1 200,00 | 400000 | P | 10835 | 910,88 | 400000 | - | 10267 | 919,40 |
| 20:00 | 1 628,35 | 0 | S | 0 | - | 400000 | P | 10851 | 712,45 | 400000 | - | 10244 | 915,89 |
| 21:00 | 1 626,46 | 0 | S | 0 | - | 400000 | P | 10867 | 714,03 | 400000 | - | 10222 | 912,44 |
| 22:00 | 1 625,74 | 0 | S | 0 | - | 400000 | P | 10883 | 715,60 | 400000 | - | 10207 | 910,14 |
| 23:00 | 1 623,94 | 0 | S | 0 | - | 400000 | P | 10900 | 717,18 | 400000 | - | 10186 | 906,77 |
| 00:00 | 1 621,09 | 0 | S | 0 | - | 400000 | P | 10916 | 718,75 | 400000 | - | 10160 | 902,34 |
| 01:00 | 1 624,38 | 0 | S | 0 | - | 400000 | P | 10916 | 718,75 | 400000 | - | 10177 | 905,64 |
| 02:00 | 1 626,59 | 0 | S | 0 | - | 400000 | P | 10916 | 718,75 | 400000 | - | 10188 | 907,84 |
| 03:00 | 1 629,91 | 0 | S | 0 | - | 400000 | P | 10916 | 718,75 | 400000 | - | 10205 | 911,16 |
| 04:00 | 1 631,02 | 0 | S | 0 | - | 400000 | P | 10916 | 718,75 | 400000 | - | 10211 | 912,27 |
| 05:00 | 1 634,37 | 0 | S | 0 | - | 400000 | P | 10916 | 718,75 | 400000 | - | 10228 | 915,62 |
| Total | 47 301,12 | | | | 10 599,92 | | | | 17 635,09 | | | | 19 066,11 |

Table 17 - key results of calculations in the hours of the optimisation horizon for Example 2.

Fig. 20

37

| Hour h | 5a state | 5b state | 5c state | 5d state | 5e state | 5f state | 5g state | 5h state | 5i state | 5j state | 5k state | 5l state | 5m state |
|---|---|---|---|---|---|---|---|---|---|---|---|---|---|
| 06:00 | O | O | O | O | C | O | O | C | C | O | O | O | O |
| 07:00 | O | O | O | O | C | O | O | C | C | C | O | O | O |
| 08:00 | O | O | O | O | C | O | O | C | C | O | O | O | O |
| 09:00 | O | O | O | O | C | O | O | C | C | C | O | O | O |
| 10:00 | O | O | O | O | C | O | O | C | C | C | O | O | O |
| 11:00 | O | O | O | O | C | O | O | C | C | C | O | O | O |
| 12:00 | O | O | O | O | C | O | O | C | C | C | O | O | O |
| 13:00 | O | O | O | O | C | O | O | C | C | O | O | O | O |
| 14:00 | O | O | O | O | C | O | O | C | C | C | O | O | O |
| 15:00 | O | O | O | O | C | O | O | C | O | C | O | O | C |
| 16:00 | O | O | O | O | C | O | O | C | O | C | O | C | O |
| 17:00 | O | O | O | O | C | O | O | C | C | O | O | O | O |
| 18:00 | C | O | O | O | C | O | O | C | O | C | O | O | C |
| 19:00 | C | C | O | O | C | O | O | C | O | O | O | C | C |
| 20:00 | C | C | O | O | C | O | O | C | C | C | O | O | O |
| 21:00 | C | C | O | O | C | O | O | C | O | O | O | O | C |
| 22:00 | C | C | O | O | C | O | O | C | O | C | O | C | O |
| 23:00 | C | C | O | O | C | O | O | C | C | O | O | O | O |
| 00:00 | C | C | O | O | C | O | O | C | O | C | O | C | O |
| 01:00 | C | C | O | O | C | O | O | C | C | O | O | O | O |
| 02:00 | C | C | O | O | C | O | O | C | O | C | C | O | O |
| 03:00 | C | C | O | O | C | O | O | C | O | O | O | O | C |
| 04:00 | C | C | O | O | C | O | O | C | O | C | C | O | O |
| 05:00 | C | C | O | O | C | O | O | C | C | O | O | O | O |

Table 18 - optimal states of the shut-off valves 5a, 5b, 5c ,5d, 5e, 5f, 5g, 5h, 5i, 5j, 5k, 5l, 5m for Example 2 (O = open, C = closed).

Fig. 21

| Hour h | 8a V [Nm3/h] | 8b V [Nm3/h] | 8c V [Nm3/h] | 8d V [Nm3/h] | 8e V [Nm3/h] |
|---|---|---|---|---|---|
| 06:00 | 0 | 40 000 | 210 000 | 10 000 | 240 000 |
| 07:00 | 0 | 0 | 210 000 | 50 000 | 240 000 |
| 08:00 | 0 | 40 000 | 210 000 | 10 000 | 240 000 |
| 09:00 | 0 | 0 | 210 000 | 50 000 | 240 000 |
| 10:00 | 0 | 0 | 210 000 | 50 000 | 240 000 |
| 11:00 | 0 | 0 | 210 000 | 50 000 | 240 000 |
| 12:00 | 0 | 0 | 210 000 | 50 000 | 240 000 |
| 13:00 | 0 | 40 000 | 210 000 | 10 000 | 240 000 |
| 14:00 | 0 | 0 | 210 000 | 0 | 240 000 |
| 15:00 | 10000 | 0 | 210 000 | 230 000 | 0 |
| 16:00 | 240000 | 0 | 210 000 | 0 | 0 |
| 17:00 | 0 | 0 | 210 000 | 0 | 240 000 |
| 18:00 | 0 | 10 000 | 210 000 | 230 000 | 0 |
| 19:00 | 150000 | 40 000 | 210 000 | 0 | 0 |
| 20:00 | 0 | 0 | 210 000 | 0 | 190 000 |
| 21:00 | 250000 | 0 | 0 | 150 000 | 0 |
| 22:00 | 0 | 40 000 | 210 000 | 0 | 150 000 |
| 23:00 | 170000 | 0 | 0 | 230 000 | 0 |
| 00:00 | 0 | 40 000 | 120 000 | 0 | 240 000 |
| 01:00 | 170000 | 0 | 0 | 230 000 | 0 |
| 02:00 | 0 | 40 000 | 210 000 | 0 | 150 000 |
| 03:00 | 250000 | 0 | 0 | 150 000 | 0 |
| 04:00 | 0 | 0 | 160 000 | 0 | 240 000 |
| 05:00 | 130000 | 40 000 | 0 | 230 000 | 0 |

Table 19 - flow setpoints for FCV valves 8a, 8b, 8c, 8d, 8e for Example 2.

Fig. 22

| Hour | 4a | | | 4b | | | 4c | | |
|---|---|---|---|---|---|---|---|---|---|
| h | V [Nm3/h] | RPM | Mode | V [Nm3/h] | RPM | Mode | V [Nm3/h] | RPM | Mo de |
| 06:00 | 256531 | 10 470 | Series | 243469 | 10 234 | Series | 500000 | 8 777 | - |
| 07:00 | 256531 | 10 470 | Series | 243469 | 10 234 | Series | 500000 | 8 777 | - |
| 08:00 | 256531 | 10 470 | Series | 243469 | 10 234 | Series | 500000 | 8 782 | - |
| 09:00 | 256895 | 10 470 | Series | 243105 | 10 223 | Series | 500000 | 8 807 | - |
| 10:00 | 257259 | 10 470 | Series | 242741 | 10 212 | Series | 500000 | 8 837 | - |
| 11:00 | 257290 | 10 455 | Series | 242710 | 10 198 | Series | 500000 | 8 908 | - |
| 12:00 | 257322 | 10 441 | Series | 242678 | 10 185 | Series | 500000 | 8 974 | - |
| 13:00 | 257356 | 10 426 | Series | 242644 | 10 172 | Series | 500000 | 9 040 | - |
| 14:00 | 237657 | 10 428 | Series | 212343 | 9 970 | Series | 450000 | 7 519 | - |
| 15:00 | 236472 | 10 414 | Series | 213528 | 9 990 | Series | 450000 | 7 519 | - |
| 16:00 | 235503 | 10 399 | Series | 214497 | 10 004 | Series | 450000 | 7 519 | - |
| 17:00 | 236308 | 10 414 | Series | 213692 | 9 995 | Series | 450000 | 7 519 | - |
| 18:00 | 237201 | 10 429 | Series | 212799 | 9 983 | Series | 450000 | 7 520 | - |
| 19:00 | 0 | 0 | Series | 400000 | 10 835 | Parallel | 400000 | 10 267 | - |
| 20:00 | 0 | 0 | Series | 400000 | 10 851 | Parallel | 400000 | 10 244 | - |
| 21:00 | 0 | 0 | Series | 400000 | 10 867 | Parallel | 400000 | 10 222 | - |
| 22:00 | 0 | 0 | Series | 400000 | 10 883 | Parallel | 400000 | 10 207 | - |
| 23:00 | 0 | 0 | Series | 400000 | 10 900 | Parallel | 400000 | 10 186 | - |
| 00:00 | 0 | 0 | Series | 400000 | 10 916 | Parallel | 400000 | 10 160 | - |
| 01:00 | 0 | 0 | Series | 400000 | 10 916 | Parallel | 400000 | 10 177 | - |
| 02:00 | 0 | 0 | Series | 400000 | 10 916 | Parallel | 400000 | 10 188 | - |
| 03:00 | 0 | 0 | Series | 400000 | 10 916 | Parallel | 400000 | 10 205 | - |
| 04:00 | 0 | 0 | Series | 400000 | 10 916 | Parallel | 400000 | 10 211 | - |
| 05:00 | 0 | 0 | Series | 400000 | 10 916 | Parallel | 400000 | 10 228 | - |

Table 20 - flow setpoints, rotation speed setpoints and operating modes of compressors 4a, 4b, 4c for Example 2.

Fig. 23

Fig. 24

| Hour h | Access point to the pipeline 1a | | | Access point to the pipeline 1b | | | Electric energy price [€/MWh] |
|---|---|---|---|---|---|---|---|
| | V [Nm3/h] | Gas Temp. [°C] | Ps [bar] | V [Nm3/h] | Gas Temp. [°C] | Ps [bar] | |
| 06:00 | 300000 | 20 | 68 | 200000 | 20 | 65 | 120 |
| 07:00 | 300000 | 20 | 68 | 200000 | 20 | 65 | 120 |
| 08:00 | 300000 | 20 | 68 | 200000 | 20 | 65 | 120 |
| 09:00 | 300000 | 21 | 68 | 200000 | 21 | 65 | 120 |
| 10:00 | 300000 | 21 | 68 | 200000 | 21 | 65 | 120 |
| 11:00 | 300000 | 21 | 68 | 200000 | 21 | 65 | 120 |
| 12:00 | 300000 | 22 | 68 | 200000 | 22 | 65 | 120 |
| 13:00 | 300000 | 22 | 68 | 200000 | 22 | 65 | 120 |
| 14:00 | 300000 | 23 | 68 | 200000 | 23 | 65 | 120 |
| 15:00 | 300000 | 23 | 68 | 200000 | 23 | 65 | 120 |
| 16:00 | 300000 | 22 | 68 | 200000 | 22 | 65 | 120 |
| 17:00 | 300000 | 22 | 68 | 200000 | 22 | 65 | 120 |
| 18:00 | 300000 | 21 | 68 | 200000 | 21 | 65 | 120 |
| 19:00 | 300000 | 20 | 68 | 200000 | 20 | 65 | 120 |
| 20:00 | 300000 | 20 | 68 | 200000 | 20 | 65 | 120 |
| 21:00 | 300000 | 20 | 68 | 200000 | 20 | 65 | 120 |
| 22:00 | 300000 | 19 | 68 | 200000 | 19 | 65 | 120 |
| 23:00 | 300000 | 19 | 68 | 200000 | 19 | 65 | 120 |
| 00:00 | 300000 | 18 | 68 | 200000 | 18 | 65 | 120 |
| 01:00 | 300000 | 18 | 68 | 200000 | 18 | 65 | 120 |
| 02:00 | 300000 | 18 | 68 | 200000 | 18 | 65 | 120 |
| 03:00 | 300000 | 17 | 68 | 200000 | 17 | 65 | 120 |
| 04:00 | 300000 | 17 | 68 | 200000 | 17 | 65 | 120 |
| 05:00 | 300000 | 16 | 68 | 200000 | 16 | 65 | 120 |

Table 21 - information on input data for Example 3.

Fig. 25

| No. | Name | Symbol | Concentration Mol [%] |
|---|---|---|---|
| 1 | Methane | $CH_4$ | 95,558 |
| 2 | Nitrogen | $N_2$ | 0,43 |
| 3 | Carbon dioxide | $CO_2$ | 0,544 |
| 4 | Ethane | $C_2H_6$ | 3,145 |
| 5 | propane | $C_3H_8$ | 0,217 |
| 6 | n-Butane | $n\text{-}C_4H_{10}$ | 0,029 |
| 7 | 2-methylpropane | $i\text{-}C_4H_{10}$ | 0,052 |
| 8 | n-Pentane | $n\text{-}C_5H_{12}$ | 0,005 |
| 9 | 2-methylbutane | $i\text{-}C_5H_{12}$ | 0,007 |
| 10 | n-Hexane | $n\text{-}C_6H_{14}$ | 0,012 |
| 11 | n-Heptane | $n\text{-}C_7H_{16}$ | 0 |
| 12 | n-octane | $n\text{-}C_8H_{18}$ | 0 |
| 13 | n-nonane | $n\text{-}C_9H_{20}$ | 0 |
| 14 | n-decane | $n\text{-}C_{10}H_{22}$ | 0 |
| 15 | Helium | He | 0 |
| 16 | Argon | Ar | 0 |
| 17 | Hydrogen | $H_2$ | 0 |
| 18 | Oxygen | $O_2$ | 0 |
| 19 | Carbon monoxide | CO | 0 |
| 20 | Water | $H_2O$ | 0 |
| 21 | Hydrogen sulphide | $H_2S$ | 0 |

Table 22 – gas composition in Example 3.

Fig. 26

| Cavern | Available storage space [Nm3] | Pressure [bar] |
|---|---|---|
| 7a | 9 200 000 | 168,94 |
| 7b | 1 600 000 | 167,83 |
| 7c | 12 000 000 | 161,76 |
| 7d | 8 400 000 | 168,25 |
| 7f | 11 800 000 | 164,56 |

| Compressor | State | Operating mode |
|---|---|---|
| 4a | Working | Series |
| 4b | Working | Series |
| 4c | Working | Series |

Table 23 - current state of key equipment at the start of optimisation horizon for Example 3.

Fig. 27

| Hour h | 7a P [bar] | 7a $V_{h,k}^{kaw}$ [Nm3/h] | 7b P [bar] | 7b $V_{h,k}^{kaw}$ [Nm3/h] | 7c P [bar] | 7c $V_{h,k}^{kaw}$ [Nm3/h] | 7d P [bar] | 7d $V_{h,k}^{kaw}$ [Nm3/h] | 7e P [bar] | 7e $V_{h,k}^{kaw}$ [Nm3/h] |
|---|---|---|---|---|---|---|---|---|---|---|
| 06:00 | 168,94 | 0 | 167,83 | 40 000 | 161,76 | 210 000 | 168,25 | 10 000 | 164,56 | 240 000 |
| 07:00 | 168,95 | 0 | 168,33 | 0 | 162,31 | 210 000 | 168,27 | 50 000 | 165,08 | 240 000 |
| 08:00 | 168,96 | 0 | 168,33 | 40 000 | 162,86 | 210 000 | 168,38 | 10 000 | 165,60 | 240 000 |
| 09:00 | 168,97 | 0 | 168,83 | 0 | 163,41 | 210 000 | 168,41 | 50 000 | 166,12 | 240 000 |
| 10:00 | 168,98 | 0 | 168,84 | 0 | 163,96 | 210 000 | 168,52 | 50 000 | 166,64 | 240 000 |
| 11:00 | 168,99 | 0 | 168,84 | 0 | 164,51 | 210 000 | 168,63 | 50 000 | 167,16 | 240 000 |
| 12:00 | 169,00 | 0 | 168,84 | 0 | 165,06 | 210 000 | 168,74 | 50 000 | 167,68 | 240 000 |
| 13:00 | 169,01 | 0 | 168,84 | 40 000 | 165,61 | 210 000 | 168,85 | 10 000 | 168,20 | 240 000 |
| 14:00 | 169,02 | 0 | 169,34 | 0 | 166,16 | 210 000 | 168,87 | 50 000 | 168,72 | 240 000 |
| 15:00 | 169,02 | 60 000 | 169,34 | 0 | 166,71 | 210 000 | 168,98 | 230 000 | 169,25 | 0 |
| 16:00 | 169,15 | 250 000 | 169,35 | 0 | 167,26 | 210 000 | 169,50 | 0 | 169,25 | 40 000 |
| 17:00 | 169,70 | 0 | 169,35 | 40 000 | 167,81 | 210 000 | 169,50 | 10 000 | 169,34 | 240 000 |
| 18:00 | 169,70 | 60 000 | 169,85 | 0 | 168,36 | 210 000 | 169,52 | 230 000 | 169,87 | 0 |
| 19:00 | 169,83 | 250 000 | 169,85 | 40 000 | 168,91 | 210 000 | 170,04 | 0 | 169,88 | 0 |
| 20:00 | 170,38 | 0 | 170,35 | 0 | 169,46 | 210 000 | 170,04 | 50 000 | 169,88 | 240 000 |
| 21:00 | 170,38 | 20 000 | 170,35 | 40 000 | 170,01 | 210 000 | 170,15 | 230 000 | 170,41 | 0 |
| 22:00 | 170,42 | 250 000 | 170,85 | 0 | 170,56 | 10 000 | 170,67 | 0 | 170,41 | 240 000 |
| 23:00 | 170,97 | 0 | 170,85 | 40 000 | 170,59 | 210 000 | 170,67 | 230 000 | 170,93 | 20 000 |
| 00:00 | 170,97 | 250 000 | 171,35 | 0 | 171,14 | 10 000 | 171,19 | 0 | 170,97 | 240 000 |
| 01:00 | 171,52 | 0 | 171,35 | 40 000 | 171,16 | 210 000 | 171,19 | 230 000 | 171,49 | 20 000 |
| 02:00 | 171,52 | 250 000 | 171,86 | 0 | 171,72 | 0 | 171,70 | 10 000 | 171,53 | 240 000 |
| 03:00 | 172,06 | 20 000 | 171,86 | 40 000 | 171,72 | 210 000 | 171,73 | 230 000 | 172,06 | 0 |
| 04:00 | 172,11 | 250 000 | 172,36 | 0 | 172,28 | 0 | 172,24 | 10 000 | 172,06 | 240 000 |
| 05:00 | 172,66 | 0 | 172,36 | 40 000 | 172,28 | 210 000 | 172,26 | 230 000 | 172,58 | 20 000 |

Table 24 - gas flow split between caverns in the following hours of the optimisation horizon depending on the pressure in caverns (P [bar]) for Example 3.

Fig. 28

45

| Hour h | Caverns 7a, 7b, 7c, 7d, 7e | | | | |
|---|---|---|---|---|---|
| | 7a | 7b | 7c | 7d | 7e |
| 06:00 | - | Manifold 6b | Manifold 6a | Manifold 6b | Manifold 6a |
| 07:00 | - | - | Manifold 6a | Manifold 6b | Manifold 6a |
| 08:00 | - | Manifold 6b | Manifold 6a | Manifold 6b | Manifold 6a |
| 09:00 | - | - | Manifold 6a | Manifold 6b | Manifold 6b |
| 10:00 | - | - | Manifold 6a | Manifold 6b | Manifold 6b |
| 11:00 | - | - | Manifold 6a | Manifold 6b | Manifold 6b |
| 12:00 | - | - | Manifold 6a | Manifold 6b | Manifold 6b |
| 13:00 | - | Manifold 6b | Manifold 6a | Manifold 6b | Manifold 6b |
| 14:00 | - | - | Manifold 6a | Manifold 6b | Manifold 6b |
| 15:00 | Manifold 6b | - | Manifold 6a | Manifold 6b | - |
| 16:00 | Manifold 6b | - | Manifold 6a | - | Manifold 6b |
| 17:00 | - | Manifold 6b | Manifold 6a | Manifold 6b | Manifold 6b |
| 18:00 | Manifold 6b | - | Manifold 6a | Manifold 6b | - |
| 19:00 | Manifold 6b | Manifold 6b | Manifold 6a | - | - |
| 20:00 | - | - | Manifold 6a | Manifold 6b | Manifold 6b |
| 21:00 | Manifold 6b | Manifold 6b | Manifold 6a | Manifold 6a | - |
| 22:00 | Manifold 6a | - | Manifold 6b | - | Manifold 6a |
| 23:00 | - | Manifold 6b | Manifold 6a | Manifold 6a | Manifold 6b |
| 00:00 | Manifold 6a | - | Manifold 6b | - | Manifold 6a |
| 01:00 | - | Manifold 6b | Manifold 6a | Manifold 6a | Manifold 6b |
| 02:00 | Manifold 6a | - | - | Manifold 6b | Manifold 6a |
| 03:00 | Manifold 6b | Manifold 6b | Manifold 6a | Manifold 6a | - |
| 04:00 | Manifold 6a | - | - | Manifold 6b | Manifold 6a |
| 05:00 | - | Manifold 6b | Manifold 6a | Manifold 6a | Manifold 6b |

Table 25 - caverns 7a, 7b, 7c, 7d, 7e allocation to the transfer manifolds 6a, 6b for Example 3.

Fig. 29

| Hour h | Compressor 4a | | Compressor 4b | | Compressor 4c | |
|---|---|---|---|---|---|---|
| | Pipeline access point | Manifold | Pipeline access point | Manifold | Pipeline access point | Manifold |
| 06:00 | 1a | 6b | 1a | 6a | 1b | 6a |
| 07:00 | 1a | 6b | 1a | 6a | 1b | 6a |
| 08:00 | 1a | 6b | 1a | 6a | 1b | 6a |
| 09:00 | 1a | 6b | 1a | 6a | 1b | 6a |
| 10:00 | 1a | 6b | 1a | 6a | 1b | 6a |
| 11:00 | 1a | 6b | 1a | 6a | 1b | 6a |
| 12:00 | 1a | 6b | 1a | 6a | 1b | 6a |
| 13:00 | 1a | 6b | 1a | 6a | 1b | 6a |
| 14:00 | 1a | 6b | 1a | 6a | 1b | 6a |
| 15:00 | 1a | 6b | 1a | 6a | 1b | 6a |
| 16:00 | 1a | 6b | 1a | 6a | 1b | 6a |
| 17:00 | 1a | 6b | 1a | 6a | 1b | 6a |
| 18:00 | 1a | 6b | 1a | 6a | 1b | 6a |
| 19:00 | 1a | 6b | 1a | 6a | 1b | 6a |
| 20:00 | 1a | 6b | 1a | 6a | 1b | 6a |
| 21:00 | 1a | 6b | 1a | 6a | 1b | 6a |
| 22:00 | 1a | 6b | 1a | 6a | 1b | 6a |
| 23:00 | 1a | 6b | 1a | 6a | 1b | 6a |
| 00:00 | 1a | 6b | 1a | 6a | 1b | 6a |
| 01:00 | 1a | 6b | 1a | 6a | 1b | 6a |
| 02:00 | 1a | 6b | 1a | 6a | 1b | 6a |
| 03:00 | 1a | 6b | 1a | 6a | 1b | 6a |
| 04:00 | 1a | 6b | 1a | 6a | 1b | 6a |
| 05:00 | 1a | 6b | 1a | 6a | 1b | 6a |

Table 26 - compressors allocation to the transfer manifolds and gas pipelines for Example 3.

Fig. 30

| Hour h | Cost [€] | 4a | | | | 4b | | | | 4c | | | |
|---|---|---|---|---|---|---|---|---|---|---|---|---|---|
| | | V [Nm3/h] | Mode | RPM | Cost [€] | V [Nm3/h] | Mode | RPM | Cost [€] | V [Nm3/h] | Mode | RPM | Cost [€] |
| 06:00 | 3 286,87 | 50000 | S | 8321 | 1 068,68 | 250000 | S | 8272 | 1 126,48 | 200000 | S | 12998 | 1 091,71 |
| 07:00 | 3 292,92 | 50000 | S | 8321 | 1 068,89 | 250000 | S | 8286 | 1 130,49 | 200000 | S | 13004 | 1 093,54 |
| 08:00 | 3 299,90 | 50000 | S | 8324 | 1 070,04 | 250000 | S | 8299 | 1 134,49 | 200000 | S | 13010 | 1 095,37 |
| 09:00 | 3 422,57 | 290000 | S | 8500 | 1 294,01 | 10000 | S | 8193 | 1 036,81 | 200000 | S | 13021 | 1 091,75 |
| 10:00 | 3 431,31 | 290000 | S | 8502 | 1 294,94 | 10000 | S | 8209 | 1 042,71 | 200000 | S | 13027 | 1 093,66 |
| 11:00 | 3 440,09 | 290000 | S | 8505 | 1 295,88 | 10000 | S | 8225 | 1 048,61 | 200000 | S | 13032 | 1 095,60 |
| 12:00 | 3 455,36 | 290000 | S | 8521 | 1 300,06 | 10000 | S | 8251 | 1 053,49 | 200000 | S | 13073 | 1 101,81 |
| 13:00 | 3 464,07 | 290000 | S | 8523 | 1 301,00 | 10000 | S | 8267 | 1 059,38 | 200000 | S | 13078 | 1 103,69 |
| 14:00 | 3 478,07 | 290000 | S | 8537 | 1 304,37 | 10000 | S | 8293 | 1 064,25 | 200000 | S | 13120 | 1 109,45 |
| 15:00 | 3 487,06 | 290000 | S | 8540 | 1 305,65 | 10000 | S | 8309 | 1 070,13 | 200000 | S | 13126 | 1 111,28 |
| 16:00 | 3 490,99 | 290000 | S | 8532 | 1 304,41 | 10000 | S | 8314 | 1 077,03 | 200000 | S | 13096 | 1 109,55 |
| 17:00 | 3 500,97 | 290000 | S | 8537 | 1 306,54 | 10000 | S | 8329 | 1 082,98 | 200000 | S | 13102 | 1 111,45 |
| 18:00 | 3 504,20 | 290000 | S | 8528 | 1 305,02 | 10000 | S | 8334 | 1 090,00 | 200000 | S | 13075 | 1 109,18 |
| 19:00 | 3 507,14 | 290000 | S | 8518 | 1 303,02 | 10000 | S | 8338 | 1 097,02 | 200000 | S | 13046 | 1 107,10 |
| 20:00 | 3 516,98 | 290000 | S | 8522 | 1 304,64 | 10000 | S | 8352 | 1 103,23 | 200000 | S | 13052 | 1 109,11 |
| 21:00 | 3 338,89 | 60000 | S | 8375 | 1 092,14 | 240000 | S | 8384 | 1 135,12 | 200000 | S | 13060 | 1 111,63 |
| 22:00 | 3 533,84 | 10000 | S | 8370 | 1 094,95 | 290000 | S | 8517 | 1 330,43 | 200000 | S | 13028 | 1 108,46 |
| 23:00 | 3 345,19 | 60000 | S | 8379 | 1 099,06 | 240000 | S | 8384 | 1 136,76 | 200000 | S | 13031 | 1 109,37 |
| 00:00 | 3 540,04 | 10000 | S | 8375 | 1 102,21 | 290000 | S | 8516 | 1 331,77 | 200000 | S | 12998 | 1 106,06 |
| 01:00 | 3 351,31 | 60000 | S | 8383 | 1 106,10 | 240000 | S | 8384 | 1 138,35 | 200000 | S | 13001 | 1 106,86 |
| 02:00 | 3 553,14 | 10000 | S | 8389 | 1 108,43 | 290000 | S | 8528 | 1 336,61 | 200000 | S | 13004 | 1 108,10 |
| 03:00 | 3 358,06 | 60000 | S | 8387 | 1 113,26 | 240000 | S | 8384 | 1 140,04 | 200000 | S | 12973 | 1 104,76 |
| 04:00 | 3 559,51 | 10000 | S | 8392 | 1 115,26 | 290000 | S | 8527 | 1 338,12 | 200000 | S | 12977 | 1 106,13 |
| 05:00 | 3 364,07 | 60000 | S | 8390 | 1 119,87 | 240000 | S | 8385 | 1 141,76 | 200000 | S | 12946 | 1 102,44 |
| Total | 82 522,55 | | | | 28 778,43 | | | | 27 246,06 | | | | 26 498,06 |

Table 27 - key results of calculations in the hours of the optimisation horizon for Example 3.

Fig. 31

48

| State | 06:00 | 07:00 | 08:00 | 09:00 | 10:00 | 11:00 | 12:00 | 13:00 | 14:00 | 15:00 | 16:00 | 17:00 | 18:00 | 19:00 | 20:00 | 21:00 | 22:00 | 23:00 | 00:00 | 01:00 | 02:00 | 03:00 | 04:00 | 05:00 |
|---|---|---|---|---|---|---|---|---|---|---|---|---|---|---|---|---|---|---|---|---|---|---|---|---|
| 5a | O | O | O | O | O | O | O | O | O | O | O | O | O | O | O | O | O | O | O | O | O | O | O | O |
| 5b | O | O | O | O | O | O | O | O | O | O | O | O | O | O | O | O | O | O | O | O | O | O | O | O |
| 5c | C | C | C | C | C | C | C | C | C | C | C | C | C | C | C | C | C | C | C | C | C | C | C | C |
| 5d | C | C | C | C | C | C | C | C | C | C | C | C | C | C | C | C | C | C | C | C | C | C | C | C |
| 5e | O | O | O | O | O | O | O | O | O | O | O | O | O | O | O | O | O | O | O | O | O | O | O | O |
| 5f | C | C | C | C | C | C | C | C | C | C | C | C | C | C | C | C | C | C | C | C | C | C | C | C |
| 5g | C | C | C | C | C | C | C | C | C | C | C | C | C | C | C | C | C | C | C | C | C | C | C | C |
| 5h | O | O | O | O | O | O | O | O | O | O | O | O | O | O | O | O | O | O | O | O | O | O | O | O |
| 5i | C | C | C | C | C | C | C | C | C | C | C | C | C | C | C | C | C | C | C | C | C | C | C | C |
| 5j | C | C | C | C | C | C | C | C | C | C | C | C | C | C | C | C | C | C | C | C | C | C | C | C |
| 5k | O | O | O | O | O | O | O | O | O | O | O | O | O | O | O | O | O | O | O | O | O | O | O | O |
| 5l | O | O | O | O | O | O | O | O | O | O | O | O | O | O | O | O | O | O | O | O | O | O | O | O |
| 5m | C | C | C | C | C | C | C | C | C | C | C | C | C | C | C | C | C | C | C | C | C | C | C | C |
| 5n | C | C | C | C | C | C | C | C | C | C | C | C | C | C | C | C | C | C | C | C | C | C | C | C |
| 5o | C | C | C | C | C | C | C | C | C | C | C | C | C | C | C | C | C | C | C | C | C | C | C | C |
| 5p | C | C | C | C | C | C | C | C | C | C | C | C | C | C | C | C | C | C | C | C | C | C | C | C |
| 5q | C | C | C | C | C | C | C | C | C | C | C | C | C | C | C | C | C | O | C | O | C | O | C | O |
| 5r | C | C | C | C | C | C | C | C | C | O | O | O | C | O | O | O | C | O | C | C | C | C | O | C |
| 5s | C | C | C | C | C | C | C | C | C | C | C | C | C | C | C | C | C | C | C | C | C | C | C | C |
| 5t | O | C | O | C | C | C | C | C | O | C | C | C | O | C | C | C | C | O | C | C | O | C | O | O |
| 5u | O | O | O | O | O | O | O | O | O | O | O | O | O | O | O | O | C | O | C | O | C | O | C | O |
| 5v | C | C | C | C | C | C | C | C | C | C | C | C | C | C | C | C | O | C | O | C | C | C | C | C |
| 5w | C | C | C | C | C | C | C | C | C | C | C | C | C | C | C | C | O | C | O | C | O | C | O | O |
| 5x | O | O | O | O | O | O | O | O | O | O | C | O | O | C | O | C | C | C | C | C | C | O | C | O |
| 5y | O | O | O | C | C | C | C | C | C | C | C | C | C | C | C | C | C | O | C | C | C | C | O | C |
| 5z | C | C | C | O | O | O | O | O | O | O | C | O | O | C | C | O | C | C | O | C | O | C | C | O |

Table 28 - optimal states of the shut-off valves 5a, 5b, 5c ,5d, 5e, 5f, 5g, 5h, 5i, 5j, 5k, 5l, 5m, 5n, 5o, 5p, 5q, 5r, 5s, 5t, 5u, 5v, 5w, 5x, 5y, 5z for Example 3 (O = open, C = closed).

Fig. 32

| Hour h | 8a<br>V<br>[Nm3/h] | 8b<br>V<br>[Nm3/h] | 8c<br>V<br>[Nm3/h] | 8d<br>V<br>[Nm3/h] | 8e<br>V<br>[Nm3/h] |
|---|---|---|---|---|---|
| 06:00 | 0 | 40 000 | 210 000 | 10 000 | 240 000 |
| 07:00 | 0 | 0 | 210 000 | 50 000 | 240 000 |
| 08:00 | 0 | 40 000 | 210 000 | 10 000 | 240 000 |
| 09:00 | 0 | 0 | 210 000 | 50 000 | 240 000 |
| 10:00 | 0 | 0 | 210 000 | 50 000 | 240 000 |
| 11:00 | 0 | 0 | 210 000 | 50 000 | 240 000 |
| 12:00 | 0 | 0 | 210 000 | 50 000 | 240 000 |
| 13:00 | 0 | 40 000 | 210 000 | 10 000 | 240 000 |
| 14:00 | 0 | 0 | 210 000 | 50 000 | 240 000 |
| 15:00 | 60000 | 0 | 210 000 | 230 000 | 0 |
| 16:00 | 250000 | 0 | 210 000 | 0 | 40 000 |
| 17:00 | 0 | 40 000 | 210 000 | 10 000 | 240 000 |
| 18:00 | 60000 | 0 | 210 000 | 230 000 | 0 |
| 19:00 | 250000 | 40 000 | 210 000 | 0 | 0 |
| 20:00 | 0 | 0 | 210 000 | 50 000 | 240 000 |
| 21:00 | 20000 | 40 000 | 210 000 | 230 000 | 0 |
| 22:00 | 250000 | 0 | 10 000 | 0 | 240 000 |
| 23:00 | 0 | 40 000 | 210 000 | 230 000 | 20 000 |
| 00:00 | 250000 | 0 | 10 000 | 0 | 240 000 |
| 01:00 | 0 | 40 000 | 210 000 | 230 000 | 20 000 |
| 02:00 | 250000 | 0 | 0 | 10 000 | 240 000 |
| 03:00 | 20000 | 40 000 | 210 000 | 230 000 | 0 |
| 04:00 | 250000 | 0 | 0 | 10 000 | 240 000 |
| 05:00 | 0 | 40 000 | 210 000 | 230 000 | 20 000 |

Table 29 - flow setpoints for FCV valves 8a, 8b, 8c, 8d, 8e for Example 3.

Fig. 33

| Hour | 4a | | | 4b | | | 4c | | |
|---|---|---|---|---|---|---|---|---|---|
| h | V [Nm3/h] | RPM | Mode | V [Nm3/h] | RPM | Mode | V [Nm3/h] | RPM | Mode |
| 06:00 | 50000 | 8 321 | Series | 250000 | 8 272 | Series | 200000 | 12 998 | Series |
| 07:00 | 50000 | 8 321 | Series | 250000 | 8 286 | Series | 200000 | 13 004 | Series |
| 08:00 | 50000 | 8 324 | Series | 250000 | 8 299 | Series | 200000 | 13 010 | Series |
| 09:00 | 290000 | 8 500 | Series | 10000 | 8 193 | Series | 200000 | 13 021 | Series |
| 10:00 | 290000 | 8 502 | Series | 10000 | 8 209 | Series | 200000 | 13 027 | Series |
| 11:00 | 290000 | 8 505 | Series | 10000 | 8 225 | Series | 200000 | 13 032 | Series |
| 12:00 | 290000 | 8 521 | Series | 10000 | 8 251 | Series | 200000 | 13 073 | Series |
| 13:00 | 290000 | 8 523 | Series | 10000 | 8 267 | Series | 200000 | 13 078 | Series |
| 14:00 | 290000 | 8 537 | Series | 10000 | 8 293 | Series | 200000 | 13 120 | Series |
| 15:00 | 290000 | 8 540 | Series | 10000 | 8 309 | Series | 200000 | 13 126 | Series |
| 16:00 | 290000 | 8 532 | Series | 10000 | 8 314 | Series | 200000 | 13 096 | Series |
| 17:00 | 290000 | 8 537 | Series | 10000 | 8 329 | Series | 200000 | 13 102 | Series |
| 18:00 | 290000 | 8 528 | Series | 10000 | 8 334 | Series | 200000 | 13 075 | Series |
| 19:00 | 290000 | 8 518 | Series | 10000 | 8 338 | Series | 200000 | 13 046 | Series |
| 20:00 | 290000 | 8 522 | Series | 10000 | 8 352 | Series | 200000 | 13 052 | Series |
| 21:00 | 60000 | 8 375 | Series | 240000 | 8 384 | Series | 200000 | 13 060 | Series |
| 22:00 | 10000 | 8 370 | Series | 290000 | 8 517 | Series | 200000 | 13 028 | Series |
| 23:00 | 60000 | 8 379 | Series | 240000 | 8 384 | Series | 200000 | 13 031 | Series |
| 00:00 | 10000 | 8 375 | Series | 290000 | 8 516 | Series | 200000 | 12 998 | Series |
| 01:00 | 60000 | 8 383 | Series | 240000 | 8 384 | Series | 200000 | 13 001 | Series |
| 02:00 | 10000 | 8 389 | Series | 290000 | 8 528 | Series | 200000 | 13 004 | Series |
| 03:00 | 60000 | 8 387 | Series | 240000 | 8 384 | Series | 200000 | 12 973 | Series |
| 04:00 | 10000 | 8 392 | Series | 290000 | 8 527 | Series | 200000 | 12 977 | Series |
| 05:00 | 60000 | 8 390 | Series | 240000 | 8 385 | Series | 200000 | 12 946 | Series |

Table 30 - flow setpoints, rotation speed setpoints and operating modes of compressors 4a, 4b, 4c for Example 3.

Fig. 34

Fig. 35

| Hour h | Gas flow $V_h^{sum}$ [Nm3/h] | Gas temperature [°C] | Pressure in pipeline [bar] | Electric energy price [€/MWh] |
|---|---|---|---|---|
| 06:00 | -500000 | 20 | 68 | 120 |
| 07:00 | -500000 | 20 | 68 | 120 |
| 08:00 | -500000 | 20 | 68 | 120 |
| 09:00 | -500000 | 21 | 68 | 120 |
| 10:00 | -500000 | 21 | 68 | 120 |
| 11:00 | -500000 | 21 | 68 | 120 |
| 12:00 | -500000 | 22 | 68 | 120 |
| 13:00 | -500000 | 22 | 68 | 120 |
| 14:00 | -500000 | 23 | 68 | 120 |
| 15:00 | -500000 | 23 | 68 | 120 |
| 16:00 | -500000 | 22 | 68 | 120 |
| 17:00 | -500000 | 22 | 68 | 120 |
| 18:00 | -500000 | 21 | 68 | 120 |
| 19:00 | -500000 | 20 | 68 | 120 |
| 20:00 | -500000 | 20 | 68 | 120 |
| 21:00 | -500000 | 20 | 68 | 120 |
| 22:00 | -500000 | 19 | 68 | 120 |
| 23:00 | -500000 | 19 | 68 | 120 |
| 00:00 | -500000 | 18 | 68 | 120 |
| 01:00 | -500000 | 18 | 68 | 120 |
| 02:00 | -500000 | 18 | 68 | 120 |
| 03:00 | -500000 | 17 | 68 | 120 |
| 04:00 | -500000 | 17 | 68 | 120 |
| 05:00 | -500000 | 16 | 68 | 120 |

Table 31 - information on input data for Example 4.

Fig. 36

| No. | Name | Symbol | Concentration Mol [%] |
|---|---|---|---|
| 1 | Methane | $CH_4$ | 95,558 |
| 2 | Nitrogen | $N_2$ | 0,43 |
| 3 | Carbon dioxide | $CO_2$ | 0,544 |
| 4 | Ethane | $C_2H_6$ | 3,145 |
| 5 | propane | $C_3H_8$ | 0,217 |
| 6 | n-Butane | $n\text{-}C_4H_{10}$ | 0,029 |
| 7 | 2-methylpropane | $i\text{-}C_4H_{10}$ | 0,052 |
| 8 | n-Pentane | $n\text{-}C_5H_{12}$ | 0,005 |
| 9 | 2-methylbutane | $i\text{-}C_5H_{12}$ | 0,007 |
| 10 | n-Hexane | $n\text{-}C_6H_{14}$ | 0,012 |
| 11 | n-Heptane | $n\text{-}C_7H_{16}$ | 0 |
| 12 | n-octane | $n\text{-}C_8H_{18}$ | 0 |
| 13 | n-nonane | $n\text{-}C_9H_{20}$ | 0 |
| 14 | n-decane | $n\text{-}C_{10}H_{22}$ | 0 |
| 15 | Helium | He | 0 |
| 16 | Argon | Ar | 0 |
| 17 | Hydrogen | $H_2$ | 0 |
| 18 | Oxygen | $O_2$ | 0 |
| 19 | Carbon monoxide | CO | 0 |
| 20 | Water | $H_2O$ | 0 |
| 21 | Hydrogen sulphide | $H_2S$ | 0 |

Table 32 – gas composition in Example 4.

Fig. 37

| Cavern | Available storage space [Nm3] | Pressure [bar] |
|---|---|---|
| 7a | 9 200 000 | 168,94 |
| 7b | 1 600 000 | 167,83 |
| 7c | 12 000 000 | 161,76 |
| 7d | 8 400 000 | 168,25 |
| 7f | 11 800 000 | 164,56 |

| Compressor | State | Operating mode |
|---|---|---|
| 4a | Not working | Series |
| 4b | Not working | Series |

Table 33 - current state of key equipment at the start of optimisation horizon for Example 4.

Fig. 38

| Hour h | 7a P [bar] | 7a $V^{kaw}_{h,k}$ [Nm3/h] | 7b P [bar] | 7b $V^{kaw}_{h,k}$ [Nm3/h] | 7c P [bar] | 7c $V^{kaw}_{h,k}$ [Nm3/h] | 7d P [bar] | 7d $V^{kaw}_{h,k}$ [Nm3/h] | 7e P [bar] | 7e $V^{kaw}_{h,k}$ [Nm3/h] |
|---|---|---|---|---|---|---|---|---|---|---|
| 06:00 | 168,94 | -250 000 | 167,83 | -20 000 | 161,76 | 0 | 168,25 | -230 000 | 164,56 | 0 |
| 07:00 | 168,40 | -250 000 | 167,58 | -20 000 | 161,77 | 0 | 167,74 | -230 000 | 164,57 | 0 |
| 08:00 | 167,86 | -250 000 | 167,33 | -40 000 | 161,78 | 0 | 167,23 | -210 000 | 164,58 | 0 |
| 09:00 | 167,32 | -250 000 | 166,83 | -40 000 | 161,79 | 0 | 166,76 | -210 000 | 164,59 | 0 |
| 10:00 | 166,78 | -250 000 | 166,33 | -40 000 | 161,80 | 0 | 166,30 | -210 000 | 164,60 | 0 |
| 11:00 | 166,24 | -250 000 | 165,83 | -20 000 | 161,81 | 0 | 165,83 | -230 000 | 164,61 | 0 |
| 12:00 | 165,70 | -250 000 | 165,58 | -40 000 | 161,82 | 0 | 165,32 | -210 000 | 164,62 | 0 |
| 13:00 | 165,16 | -250 000 | 165,08 | -40 000 | 161,83 | 0 | 164,86 | -210 000 | 164,63 | 0 |
| 14:00 | 164,62 | -250 000 | 164,58 | -10 000 | 161,84 | 0 | 164,40 | 0 | 164,63 | -240 000 |
| 15:00 | 164,09 | 0 | 164,46 | -40 000 | 161,85 | 0 | 164,40 | -230 000 | 164,11 | -230 000 |
| 16:00 | 164,09 | -250 000 | 163,96 | -40 000 | 161,86 | 0 | 163,89 | -210 000 | 163,62 | 0 |
| 17:00 | 163,55 | -250 000 | 163,46 | -10 000 | 161,87 | 0 | 163,44 | 0 | 163,62 | -240 000 |
| 18:00 | 163,02 | 0 | 163,33 | -40 000 | 161,88 | 0 | 163,44 | -230 000 | 163,10 | -230 000 |
| 19:00 | 163,02 | -250 000 | 162,83 | -20 000 | 161,89 | 0 | 162,93 | -230 000 | 162,61 | 0 |
| 20:00 | 162,48 | -220 000 | 162,58 | -40 000 | 161,90 | 0 | 162,43 | 0 | 162,61 | -240 000 |
| 21:00 | 162,01 | 0 | 162,08 | -30 000 | 161,91 | 0 | 162,43 | -230 000 | 162,09 | -240 000 |
| 22:00 | 162,01 | -250 000 | 161,71 | 0 | 161,91 | -20 000 | 161,92 | -230 000 | 161,58 | 0 |
| 23:00 | 161,47 | -10 000 | 161,71 | -40 000 | 161,86 | -210 000 | 161,42 | 0 | 161,58 | -240 000 |
| 00:00 | 161,45 | -250 000 | 161,21 | 0 | 161,31 | -20 000 | 161,42 | -230 000 | 161,07 | 0 |
| 01:00 | 160,91 | 0 | 161,21 | -40 000 | 161,26 | -210 000 | 160,91 | -10 000 | 161,07 | -240 000 |
| 02:00 | 160,91 | -250 000 | 160,71 | 0 | 160,71 | -20 000 | 160,88 | -230 000 | 160,56 | 0 |
| 03:00 | 160,37 | 0 | 160,71 | -40 000 | 160,65 | -210 000 | 160,37 | -10 000 | 160,56 | -240 000 |
| 04:00 | 160,37 | -250 000 | 160,21 | -20 000 | 160,11 | -20 000 | 160,35 | -230 000 | 160,05 | 0 |
| 05:00 | 159,84 | 0 | 159,96 | -40 000 | 160,11 | -210 000 | 159,84 | -10 000 | 160,05 | -240 000 |

Table 34 - gas flow split between caverns in the following hours of the optimisation horizon depending on the pressure in caverns (P [bar]) for Example 4.

Fig. 39

| Hour h | Caverns 7a, 7b, 7c, 7d, 7e | | | | |
|---|---|---|---|---|---|
| | 7a | 7b | 7c | 7d | 7e |
| 06:00 | Manifold 6 | Manifold 6 | - | Manifold 6 | - |
| 07:00 | Manifold 6 | Manifold 6 | - | Manifold 6 | - |
| 08:00 | Manifold 6 | Manifold 6 | - | Manifold 6 | - |
| 09:00 | Manifold 6 | Manifold 6 | - | Manifold 6 | - |
| 10:00 | Manifold 6 | Manifold 6 | - | Manifold 6 | - |
| 11:00 | Manifold 6 | Manifold 6 | - | Manifold 6 | - |
| 12:00 | Manifold 6 | Manifold 6 | - | Manifold 6 | - |
| 13:00 | Manifold 6 | Manifold 6 | - | Manifold 6 | - |
| 14:00 | Manifold 6 | Manifold 6 | - | - | Manifold 6 |
| 15:00 | - | Manifold 6 | - | Manifold 6 | Manifold 6 |
| 16:00 | Manifold 6 | Manifold 6 | - | Manifold 6 | - |
| 17:00 | Manifold 6 | Manifold 6 | - | - | Manifold 6 |
| 18:00 | - | Manifold 6 | - | Manifold 6 | Manifold 6 |
| 19:00 | Manifold 6 | Manifold 6 | - | Manifold 6 | - |
| 20:00 | Manifold 6 | Manifold 6 | - | - | Manifold 6 |
| 21:00 | - | Manifold 6 | - | Manifold 6 | Manifold 6 |
| 22:00 | Manifold 6 | - | Manifold 6 | Manifold 6 | - |
| 23:00 | Manifold 6 | Manifold 6 | Manifold 6 | - | Manifold 6 |
| 00:00 | Manifold 6 | - | Manifold 6 | Manifold 6 | - |
| 01:00 | - | Manifold 6 | Manifold 6 | Manifold 6 | Manifold 6 |
| 02:00 | Manifold 6 | - | Manifold 6 | Manifold 6 | - |
| 03:00 | - | Manifold 6 | Manifold 6 | Manifold 6 | Manifold 6 |
| 04:00 | Manifold 6 | Manifold 6 | - | Manifold 6 | - |
| 05:00 | - | Manifold 6 | Manifold 6 | Manifold 6 | Manifold 6 |

Table 35 - caverns 7a, 7b, 7c, 7d, 7e allocation to the transfer manifold for Example 4.

Fig. 40

| Hour h | Compressor 4a | | Compressor 4b | |
|---|---|---|---|---|
| | Pipeline access point | Manifold | Pipeline access point | Manifold |
| 06:00 | - | - | - | - |
| 07:00 | - | - | - | - |
| 08:00 | - | - | - | - |
| 09:00 | - | - | - | - |
| 10:00 | - | - | - | - |
| 11:00 | - | - | - | - |
| 12:00 | - | - | - | - |
| 13:00 | - | - | - | - |
| 14:00 | - | - | - | - |
| 15:00 | - | - | - | - |
| 16:00 | - | - | - | - |
| 17:00 | - | - | - | - |
| 18:00 | - | - | - | - |
| 19:00 | - | - | - | - |
| 20:00 | - | - | - | - |
| 21:00 | - | - | - | - |
| 22:00 | - | - | - | - |
| 23:00 | - | - | - | - |
| 00:00 | - | - | - | - |
| 01:00 | - | - | - | - |
| 02:00 | - | - | - | - |
| 03:00 | - | - | - | - |
| 04:00 | - | - | - | - |
| 05:00 | - | - | - | - |

Table 36 - compressors allocation to the transfer manifold and gas pipeline for Example 4.

Fig. 41

| Hour h | Cost [€] | 4a | | | | 4b | | | |
|---|---|---|---|---|---|---|---|---|---|
| | | V [Nm3/h] | Mode | RPM | Cost [€] | V [Nm3/h] | Mode | RPM | Cost [€] |
| 06:00 | 0 | 0 | S | 0 | 0 | 0 | S | 0 | 0 |
| 07:00 | 0 | 0 | S | 0 | 0 | 0 | S | 0 | 0 |
| 08:00 | 0 | 0 | S | 0 | 0 | 0 | S | 0 | 0 |
| 09:00 | 0 | 0 | S | 0 | 0 | 0 | S | 0 | 0 |
| 10:00 | 0 | 0 | S | 0 | 0 | 0 | S | 0 | 0 |
| 11:00 | 0 | 0 | S | 0 | 0 | 0 | S | 0 | 0 |
| 12:00 | 0 | 0 | S | 0 | 0 | 0 | S | 0 | 0 |
| 13:00 | 0 | 0 | S | 0 | 0 | 0 | S | 0 | 0 |
| 14:00 | 0 | 0 | S | 0 | 0 | 0 | S | 0 | 0 |
| 15:00 | 0 | 0 | S | 0 | 0 | 0 | S | 0 | 0 |
| 16:00 | 0 | 0 | S | 0 | 0 | 0 | S | 0 | 0 |
| 17:00 | 0 | 0 | S | 0 | 0 | 0 | S | 0 | 0 |
| 18:00 | 0 | 0 | S | 0 | 0 | 0 | S | 0 | 0 |
| 19:00 | 0 | 0 | S | 0 | 0 | 0 | S | 0 | 0 |
| 20:00 | 0 | 0 | S | 0 | 0 | 0 | S | 0 | 0 |
| 21:00 | 0 | 0 | S | 0 | 0 | 0 | S | 0 | 0 |
| 22:00 | 0 | 0 | S | 0 | 0 | 0 | S | 0 | 0 |
| 23:00 | 0 | 0 | S | 0 | 0 | 0 | S | 0 | 0 |
| 00:00 | 0 | 0 | S | 0 | 0 | 0 | S | 0 | 0 |
| 01:00 | 0 | 0 | S | 0 | 0 | 0 | S | 0 | 0 |
| 02:00 | 0 | 0 | S | 0 | 0 | 0 | S | 0 | 0 |
| 03:00 | 0 | 0 | S | 0 | 0 | 0 | S | 0 | 0 |
| 04:00 | 0 | 0 | S | 0 | 0 | 0 | S | 0 | 0 |
| 05:00 | 0 | 0 | S | 0 | 0 | 0 | S | 0 | 0 |
| Total | 0 | | | | 0 | | | | 0 |

Table 37 - key results of calculations in the hours of the optimisation horizon for Example 4.

Fig. 42

59

| Hour h | 5a state | 5b state | 5c state | 5d state | 5e state | 5f state | 5g state | 5h state | 5i state | 5j state |
|---|---|---|---|---|---|---|---|---|---|---|
| 06:00 | C | C | C | C | O | O | O | C | O | C |
| 07:00 | C | C | C | C | O | O | O | C | O | C |
| 08:00 | C | C | C | C | O | O | O | C | O | C |
| 09:00 | C | C | C | C | O | O | O | C | O | C |
| 10:00 | C | C | C | C | O | O | O | C | O | C |
| 11:00 | C | C | C | C | O | O | O | C | O | C |
| 12:00 | C | C | C | C | O | O | O | C | O | C |
| 13:00 | C | C | C | C | O | O | O | C | O | C |
| 14:00 | C | C | C | C | O | O | O | C | C | O |
| 15:00 | C | C | C | C | O | C | O | C | O | O |
| 16:00 | C | C | C | C | O | O | O | C | O | C |
| 17:00 | C | C | C | C | O | O | O | C | C | O |
| 18:00 | C | C | C | C | O | C | O | C | O | O |
| 19:00 | C | C | C | C | O | O | O | C | O | C |
| 20:00 | C | C | C | C | O | O | O | C | C | O |
| 21:00 | C | C | C | C | O | C | O | C | O | O |
| 22:00 | C | C | C | C | O | O | C | O | O | C |
| 23:00 | C | C | C | C | O | O | O | O | C | O |
| 00:00 | C | C | C | C | O | O | C | O | O | C |
| 01:00 | C | C | C | C | O | C | O | O | O | O |
| 02:00 | C | C | C | C | O | O | C | O | O | C |
| 03:00 | C | C | C | C | O | C | O | O | O | O |
| 04:00 | C | C | C | C | O | O | O | C | O | C |
| 05:00 | C | C | C | C | O | C | O | O | O | O |

Table 38 - optimal states of the shut-off valves 5a, 5b, 5c ,5d, 5e, 5f, 5g, 5h, 5i, 5j for Example 4 (O = open, C = closed).

Fig. 43

| Hour h | 8a<br>V<br>[Nm3/h] | 8b<br>V<br>[Nm3/h] | 8c<br>V<br>[Nm3/h] | 8d<br>V<br>[Nm3/h] | 8e<br>V<br>[Nm3/h] |
|---|---|---|---|---|---|
| 06:00 | -250 000 | -20 000 | 0 | -230 000 | 0 |
| 07:00 | -250 000 | -20 000 | 0 | -230 000 | 0 |
| 08:00 | -250 000 | -40 000 | 0 | -210 000 | 0 |
| 09:00 | -250 000 | -40 000 | 0 | -210 000 | 0 |
| 10:00 | -250 000 | -40 000 | 0 | -210 000 | 0 |
| 11:00 | -250 000 | -20 000 | 0 | -230 000 | 0 |
| 12:00 | -250 000 | -40 000 | 0 | -210 000 | 0 |
| 13:00 | -250 000 | -40 000 | 0 | -210 000 | 0 |
| 14:00 | -250 000 | -10 000 | 0 | 0 | -240 000 |
| 15:00 | 0 | -40 000 | 0 | -230 000 | -230 000 |
| 16:00 | -250 000 | -40 000 | 0 | -210 000 | 0 |
| 17:00 | -250 000 | -10 000 | 0 | 0 | -240 000 |
| 18:00 | 0 | -40 000 | 0 | -230 000 | -230 000 |
| 19:00 | -250 000 | -20 000 | 0 | -230 000 | 0 |
| 20:00 | -220 000 | -40 000 | 0 | 0 | -240 000 |
| 21:00 | 0 | -30 000 | 0 | -230 000 | -240 000 |
| 22:00 | -250 000 | 0 | -20 000 | -230 000 | 0 |
| 23:00 | -10 000 | -40 000 | -210 000 | 0 | -240 000 |
| 00:00 | -250 000 | 0 | -20 000 | -230 000 | 0 |
| 01:00 | 0 | -40 000 | -210 000 | -10 000 | -240 000 |
| 02:00 | -250 000 | 0 | -20 000 | -230 000 | 0 |
| 03:00 | 0 | -40 000 | -210 000 | -10 000 | -240 000 |
| 04:00 | -250 000 | -20 000 | 0 | -230 000 | 0 |
| 05:00 | 0 | -40 000 | -210 000 | -10 000 | -240 000 |

Table 39 - flow setpoints for FCV valves 8a, 8b, 8c, 8d, 8e for Example 4.

Fig. 44

| Hour h | 4a | | | 4b | | |
|---|---|---|---|---|---|---|
| | V [Nm3/h] | RPM | Mode | V [Nm3/h] | RPM | Mode |
| 06:00 | 0 | 0 | Series | 0 | 0 | Series |
| 07:00 | 0 | 0 | Series | 0 | 0 | Series |
| 08:00 | 0 | 0 | Series | 0 | 0 | Series |
| 09:00 | 0 | 0 | Series | 0 | 0 | Series |
| 10:00 | 0 | 0 | Series | 0 | 0 | Series |
| 11:00 | 0 | 0 | Series | 0 | 0 | Series |
| 12:00 | 0 | 0 | Series | 0 | 0 | Series |
| 13:00 | 0 | 0 | Series | 0 | 0 | Series |
| 14:00 | 0 | 0 | Series | 0 | 0 | Series |
| 15:00 | 0 | 0 | Series | 0 | 0 | Series |
| 16:00 | 0 | 0 | Series | 0 | 0 | Series |
| 17:00 | 0 | 0 | Series | 0 | 0 | Series |
| 18:00 | 0 | 0 | Series | 0 | 0 | Series |
| 19:00 | 0 | 0 | Series | 0 | 0 | Series |
| 20:00 | 0 | 0 | Series | 0 | 0 | Series |
| 21:00 | 0 | 0 | Series | 0 | 0 | Series |
| 22:00 | 0 | 0 | Series | 0 | 0 | Series |
| 23:00 | 0 | 0 | Series | 0 | 0 | Series |
| 00:00 | 0 | 0 | Series | 0 | 0 | Series |
| 01:00 | 0 | 0 | Series | 0 | 0 | Series |
| 02:00 | 0 | 0 | Series | 0 | 0 | Series |
| 03:00 | 0 | 0 | Series | 0 | 0 | Series |
| 04:00 | 0 | 0 | Series | 0 | 0 | Series |
| 05:00 | 0 | 0 | Series | 0 | 0 | Series |

Table 40 - flow setpoints, rotation speed setpoints and operating modes of compressors 4a, 4b for Example 4.

Fig. 45

Loop for hours $h$ from 1 to $H$

Find the total nomination $V_h^{sum}$ as a sum of nominations for hour $h$ for all access points

Assume the allocated part of the nomination $V_h^{res}$ as equal to 0

Loop for consecutive available caverns $k$ in increasing pressure order (in case of gas injection) or in decreasing pressure order (in case of withdrawal)

Assume flow $V_{h,k}^{kaw}$ equal to a minimum value of $V_{h,k}^{kaw\ max}$ and $V_h^{res}$

Decrease $V_h^{res}$ by $V_{h,k}^{kaw}$

Calculate a state of cavern $k$ in next hour $h + 1$, assuming that flow to this cavern in hour $h$ equals to $V_{h,k}^{kaw}$

End of loop for caverns

If $V_h^{res} \neq 0$ then error: it is not possible to realize the nomination using only available caverns

End of loop for hours

Fig. 46

Assume that manifold "6a" is connected to only one cavern (with the lowest pressure) and the rest of caverns are connected to manifold "6b"

Find a total flow for each manifold summing flows to/from caverns connected to given manifold

Find pressures in each manifold as a maximum pressure for caverns connected to given manifold (in case of gas injection) or as a minimum pressure for caverns connected to given manifold (in case of withdrawal)

Calculate gas flow between each of manifold and each of gas pipelines

Basing on pressures in manifolds and caverns and gas flows estimate a power necessary for gas compression, assuming average compressors efficiency and ignoring division of the task between compressors

Is the estimated power less than earlier estimate of this power for other assignments od caversn to manifolds?  no

yes

Save the current estimate of the power for later comparisons and save the current assignment of caverns to manifolds

Is only one cavern connected to the manifold "6b"?  yes  End of calculations. The last saved assignment of caverns to manifolds is the resulting optimal assignment

no

From the caverns connected to the manifold "6b", select the cavern with the lowest pressure and pass it to the manifold "6a"

Fig. 47

For each combination of allocations of compressors to manifolds and gas pipelines

Is the combinations of allocations on the list of permitted connections? — no

yes

Read priority from the list of permitted connections

Is the priority lower than the priority of the best solution found so far? — yes

no

Using the algorithm shown on fig. 47 (in case of single battery of compressors) or on fig. 50 (in case of cascade) find flows through compressors and costs corresponding them

Was it able to found flows satisfying constraints? — no

yes

yes — Is the priority higher than the priority of the best solution found so far?

no

Is the cost of the found solution greater than the cost of the best solution found so far? — yes

no

Remember the last solution found and its cost as the best

Found next combination of allocations of compressors to manifolds and gas pipelines

End of loop for combinations of allocations of compressors to manifolds and gas pipelines

Fig. 48

Loop for hours $h$ from $H$ to 1

Loop for consecutive available compressors $i$ (from „4a" to $N$)

Loop for consecutive modes $m_{i,h}$ of compressor $i$ ($m_{i,h} \in M_i$)

Calculate a range of possible to realize gas flow $[V^{min}_{i,h,m_{i,h}}, V^{max}_{i,h,m_{i,h}}]$ without recycle mode for gas conditions from hour $h$

Calculation of the cost of compressor fuel as a function of gas flow $C^{work}_{i,h,m_{i,h}}$ $(V)$ for $V \in \left\langle V^{min}_{i,h,m_{i,h}}, V^{max}_{i,h,m_{i,h}} \right\rangle$

End of the loop – modes of compressors

End of the loop – compressors

Loop for combinations of modes of all available compressors $m^a_h \in M^a$

Verification of minimal flow

no feasible flow | recycle mode

no recycle mode

Flows through all compressors are equal to minimal flows. One or more compressors has non-zero recycle flow

Calculation of optimal split of flow between compressors. Results: $\hat{V}_{h,m^a_h}$, $\hat{C}^{work}_{h,m^a_h}$

Calculation of optimal combination of flows. Results: $\hat{S}_{m^a_{h-1},h}$, $\hat{B}_{m^a_{h-1},h}$

End of loop – combinations of modes

End of loop – hours

Loop for hours $h$ from 1 to $H$

Calculation of $\hat{s}^a_h$ and $\hat{V}_{h,\hat{s}^a_h}$

End of loop – hours

Fig. 49

Loop for hours $h$ from $H$ to 1

Loop for combinations of modes of all available compressors $m_h^a \in M^a$

Calculation of optimal pressure between batteries, split of flow between compressors and total cost. Results: $\hat{p}_{h,m_h^a}^m$, $\hat{V}_{h,m_h^a}$, $\hat{C}_{h,m_h^a}^{work}$

Calculation of optimal combination of flows. Results: $\hat{S}_{m_{h-1}^a,h}$, $\hat{B}_{m_{h-1}^a,h}$

End of loop – combinations of modes

End of loop – hours

Loop for hours $h$ from 1 to $H$

Calculation of $\hat{s}^a{}_h$ and $\hat{V}_{h,\hat{s}^a{}_h}$

End of loop – hours

Fig. 50

Europäisches
Patentamt

European
Patent Office

Office européen
des brevets

# EUROPEAN SEARCH REPORT

**Application Number**

EP 17 46 0078

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | D. Aluma ET AL: "Optimize an integrated natural gas production and distribution network",<br><br>,<br>1 October 2016 (2016-10-01), XP055482420,<br>Retrieved from the Internet:<br>URL:http://www.gasprocessingnews.com/features/201610/optimize-an-integrated-natural-gas-production-and-distribution-network.aspx<br>[retrieved on 2018-06-08]<br>* the whole document *<br>----- | 1 | INV.<br>B65G5/00<br>E21B41/00 |

**TECHNICAL FIELDS SEARCHED (IPC)**

B65G
G06F

The present search report has been drawn up for all claims

| Place of search | Date of completion of the search | Examiner |
|---|---|---|
| The Hague | 8 June 2018 | Hustedt, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012156179 A

**Non-patent literature cited in the description**

- **WOJDAN, K. ; RUSZCZYCKI, B. ; SWIRSKI, K. ; WARCHOL M.** The Method for Optimisation of Gas Compressors Performance in Gas Storage Systems. *International Journal of Oil, Gas and Coal Technology,* 2017

- **WOJDAN, K. ; RUSZCZYCKI, B. ; MICHALK, D. ; SWIRSKI, K.** Method for simulation and optimization of underground gas storage performance. *Oil Gas Sci. Technol. - Rev. IFP Energies nouvelles,* December 2014, vol. 69 (7